# EUROPÄISCHE PATENTSCHRIFT

(11) **EP 4 599 420 B1**
(45) Veröffentlichungstag und Bekanntmachung des Hinweises auf die Patenterteilung: **19.08.2026**
(21) Anmeldenummer: 23776316.4
(22) Anmeldetag: 20.09.2023
(51) Int. Cl.: G09B 9/06

(54) **SIMULATIONSSYSTEM ZUM GEFECHTSTRAINING VON BESATZUNGSMITGLIEDERN EINES MILITÄRISCHEN WASSERFAHRZEUGS**
SIMULATION SYSTEM FOR COMBAT TRAINING OF CREW MEMBERS OF A MILITARY WATERCRAFT
SYSTÈME DE SIMULATION POUR ENTRAÎNEMENT AU COMBAT POUR MEMBRES DE L'ÉQUIPAGE D'UN VÉHICULE NAUTIQUE MILITAIRE

(30) Priorität: 05.10.2022 DE 102022210502
(43) Veröffentlichungstag der Anmeldung: 13.08.2025
(73) Patentinhaber: TKMS GmbH, 24143 Kiel (DE); thyssenkrupp AG, 45143 Essen (DE)
(72) Erfinder: BRASS, Stephan, 51515 Kürten (DE); SCHLENGER, Johannes, 25337 Kölln-Reisiek (DE)
(74) Vertreter: thyssenkrupp Intellectual Property GmbH
(86) Internationale Anmeldenummer: PCT/EP2023/075962
(87) Internationale Veröffentlichungsnummer: WO 2024/074308

(56) Entgegenhaltungen:
- DE-A1- 102019 218 110
- MING F R ET AL: "Damage characteristics of ship structures subjected to shockwaves of underwater contact explosions", OCEAN ENGINEERING, PERGAMON, AMSTERDAM, NL, vol. 117, 4 April 2016 (2016-04-04), pages 359 - 382, XP029521443, ISSN: 0029-8018, DOI: 10.1016/J.OCEANENG.2016.03.040

## Beschreibung

Die Erfindung betrifft ein Simulationssystem zum Durchführen eines zeitgleichen kooperativen Gefechtstrainings einer Mehrzahl von Besatzungsmitgliedern eines militärischen Wasserfahrzeugs. Ferner betrifft die Erfindung ein System aus einem militärischen Wasserfahrzeug und einem entsprechenden Simulationssystem sowie ein Verfahren zum Betrieb eines Simulationssystems zum Durchführen eines zeitgleichen kooperativen Gefechtstrainings einer Mehrzahl von Besatzungsmitgliedern eines militärischen Wasserfahrzeugs.

Der Betrieb eines militärischen Wasserfahrzeugs stellt hohe Anforderungen an die das militärische Wasserfahrzeug bedienenden Besatzungsmitgliedern. Neben dem grundlegenden Wissen und den Fähigkeiten zum Betrieb des Wasserfahrzeugs ist es zusätzlich erforderlich, dass die Besatzungsmitglieder dieses Wissen und diese Fähigkeiten insbesondere auch unter Stresssituationen, etwa in einem Gefecht, anzuwenden verstehen. Hierzu ist erforderlich, dass das entsprechende Wissen sowie die entsprechenden Fähigkeiten unter möglichst realistischen sowie stressigen Situationen trainiert werden. Beispielsweise kann es erforderlich werden entsprechende Wissen sowie die entsprechenden Fähigkeiten unter möglichst realistischen Gefechtsbedingungen zu trainieren. Grundsätzlich kann ein entsprechendes Training unter Verwendung eines realen militärischen Wasserfahrzeugs erfolgen. Allerdings bringt ein Training unter Verwendung eines realen militärischen Wasserfahrzeugs auch Nachteile mit sich: Zum einen stehen militärische Wasserfahrzeuge, welche zu Trainingszwecken genutzt werden, nicht für Einsätze zur Verfügung, was insbesondere bei einer beschränkten Anzahl an zur Verfügung stehenden militärischen Wasserfahrzeugen zu Problemen führen kann eine benötigte Einsatzbereitschaft aufrecht zu halten. Ferner sind mögliche Trainingsszenarien, insbesondere Gefahrensituationen, welche mit einem realen militärischen Wasserfahrzeug trainiert werden können, begrenzt. Insbesondere Fehlfunktionen und/oder Ausfälle von Systemkomponenten lassen sich nur in beschränktem Maße unter realistischen Bedingungen an Bord eines militärischen Wasserfahrzeugs trainieren, ohne das Fahrzeug selbst oder die Besatzung in Gefahr zu bringen. Beispielsweise ist es kaum möglich mit einem realen militärischen Wasserfahrzeug unter Beschuss in einer Gefechtssituation Szenarien realistisch zu trainieren, welche von Treffern des militärischen Wasserfahrzeugs herrühren. Schließlich birgt das Training unter hohem Stress auf einem tatsächlichen Wasserfahrzeug die Gefahr, dass es infolge von stressbedingten Fehlbedienungen zu tatsächlichen Risiken und Komplikationen für das Wasserfahrzeug und Besatzungsmitglieder an Bord des Wasserfahrzeugs kommen kann. So kann beispielsweise die Gefahr von Unfällen bis hin zu einem Sinken des Wasserfahrzeugs nicht grundsätzlich ausgeschlossen werden. Es besteht daher ein Bedarf für ein Simulationssystem zum Gefechtstraining von Besatzungsmitgliedern eines militärischen Wasserfahrzeugs unter möglichst realistischen Bedingungen, mit welchem die vorgenannten Nachteile vermieden werde können.

Aus der DE 10 2019 218 110 A1 ist ein Verfahren zum Training einer Schiffsbesatzung auf einem Schiff bekannt.

Aus K-SIM Navigation. In: K-SIM Navigation Brochure, Kongsberg Digital, Maritime Simulation, Horton, Norway, Januar 2020 URL: https://kongsbergdigital.com/products/k-sim/k-sim-navigation ist Simulationstechnik für eine Schiffsbrücke bekannt.

Aus der DE 698 29 776 T2 ist ein System und ein Verfahren zur Simulation der Wirkung flächendeckender Waffen bekannt.

Aus der US 11 132 915 B1 ist die Verwendung einer erweiterten Realität für ein Feldtraining bekannt.

Aus MING F R ET AL: "Damage characteristics of ship structures subjected to shockwaves of underwater contact explosions", OCEAN ENGINEERING, PERGAMON, AMSTERDAM, NL, Bd. 117, 4. April 2016 (2016-04-04), Seiten 359-382, XP029521443, ISSN: 0029-8018, DOI: 10.1016/J.OCEANENG.2016.03.040 sind Schadenscharakteristika bei Schiffsstrukturen durch Schockwellen bekannt.

Der Erfindung liegt die Aufgabe zugrunde, ein Simulationssystem zum Durchführen eines zeitgleichen kooperativen Gefechtstrainings einer Mehrzahl von Besatzungsmitgliedern eines militärischen Wasserfahrzeugs zu schaffen.

Die Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Simulationssystem zum Durchführen eines zeitgleichen kooperativen Gefechtstrainings einer Mehrzahl von Besatzungsmitgliedern eines militärischen Wasserfahrzeugs. Das Simulationssystem umfasst eine erste Simulationsumgebung mit einem physischen Leitstand des Wasserfahrzeugs zum Trainieren einer ersten Gruppe von Besatzungsmitgliedern.

Die erste Simulationsumgebung umfasst ein oder mehrere erste physische Steuerelemente des Wasserfahrzeugs. Die ersten physischen Steuerelemente sind jeweils dazu konfiguriert, einen oder mehrere Steuerparameter für den Betrieb des Wasserfahrzeugs einzustellen. Der Leitstand ist dazu konfiguriert, mittels der ersten physischen Steuerelemente eingestellte Steuerparameter zu erfassen und an eine Simulationsschnittstelle des Simulationssystems zu kommunizieren.

Das Simulationssystem umfasst ferner eine von der ersten Simulationsumgebung räumlich getrennte zweite Simulationsumgebung zum Trainieren einer zweiten Gruppe von Besatzungsmitgliedern. Die zweite Simulationsumgebung umfasst technische Mittel, welche dazu konfiguriert sind, eine visuelle Simulation bereitzustellen, welche ein oder mehrere zumindest teilweise virtuelle Kopien ein oder mehrerer zweiter physischer Steuerelemente des Wasserfahrzeugs zum Einstellen der Steuerparameter umfasst. Die technischen Mittel sind ferner dazu konfiguriert, mittels der Kopien eingestellte Steuerparameter zu erfassen und an die Simulationsschnittstelle des Simulationssystems zu kommunizieren.

Die Simulationsschnittstelle des Simulationssystems umfasst einen Speicher. In dem Speicher ist eine erste Datenbank mit einer Mehrzahl von Datensätzen von Trefferparametern für eine Mehrzahl von unterschiedlichen Trefferszenarien des Wasserfahrzeugs und den Trefferszenarien jeweils zugeordneten Schadensszenarien des Wasserfahrzeugs gespeichert. Die Schadensszenarien definieren jeweils Schadensparameter des Wasserfahrzeugs. Die Schadensszenarien für die Trefferszenarien sind unter Verwendung eines Schadensmodells des Wasserfahrzeugs vorberechnet.

Das Simulationssystem ist konfiguriert zum
- Empfangen zumindest eines Satzes von Trefferparametern für zumindest einen Treffer des Wasserfahrzeugs von einem Gefechtssimulationssystem durch die Simulationsschnittstelle im Zuge des Gefechtstrainings,
- Vergleichen der empfangenen Trefferparameter mit den Trefferparametern der in der ersten Datenbank gespeicherten Datensätze,
- Bestimmen eines Datensatzes von Trefferparametern der Mehrzahl von Datensätzen in der ersten Datenbank, dessen Trefferparameter die geringsten Abweichungen von den empfangenen Trefferparametern aufweisen,
- Auslesen des dem bestimmten Datensatz zugeordneten Schadensszenario aus der ersten Datenbank,
- Steuern zumindest der von den technischen Mitteln der zweiten Simulationsumgebung bereitgestellten visuellen Simulation zum Wiedergeben des ausgelesenen Schadensszenarios.

Ausführungsformen können den Vorteil haben, dass im Zuge eines Gefechtstrainings möglichst realistisch der Betrieb eines militärischen Wasserfahrzeugs im Fall von Schäden durch einen Gefechtstreffer trainiert werden können. Das Simulationssystem stellt somit zu Trainingszwecken zumindest teilweise virtuell eine Nachbildung des militärischen Wasserfahrzeugs nach, auf welcher es für die Besatzungsmitglieder möglich ist ein Bekämpfen von Schäden durch Gefechtstreffer möglichst realistisch zu trainieren. Insbesondere ermöglicht es das Simulationssystem Auswirkungen von Gefechtstreffern im Zuge des Gefechtstrainings realen Situationen nachzuempfinden. Schäden im Zuge des Gefechtstrainings treten nicht zufällig auf, weder Position, noch Ausmaß der Schäden sind zufällig. Vielmehr stellen die Schäden reale Schadenszenarien dar, welche unter realistischen Bedingungen auftreten. Sowohl Position, als auch Ausmaß der durch die simulierten Gefechtstreffer hervorgerufenen Schäden des militärischen Wasserfahrzeugs entsprechen Position und Ausmaß von Treffern, wie sie unter realistischen Gefechtsbedingungen zu erwarten sind.

Die Verwendung eines Simulationssystems anstelle oder ergänzend zu einem realen Training zum Einsatz eines militärischen Wasserfahrzeugs zum Trainieren von Besatzungsmitgliedern des militärischen Wasserfahrzeugs, insbesondere zum Durchführen eines Gefechtstrainings, kann vielfältige Vorteile haben. Das Training kann materialschonender sein, da das militärische Wasserfahrzeug selbst nicht oder weniger häufig oder weniger lang zum Einsatz kommt. Somit kann sein Verschleiß reduziert werden und es kann zudem Treibstoff gespart werden. Ferner kann unter Verwendung eines Simulationssystems beispielsweise auch häufiger und intensiver trainiert werden, insbesondere Gefechtssituation, da die Besatzungsmitglieder nicht zugleich für den tatsächlichen Routinebetrieb des militärischen Wasserfahrzeugs Sorge tragen müssen. Schließlich ist es mit einem Simulationssystem auch möglich ein Training für die Besatzungsmitglieder, wenn das militärische Wasserfahrzeug selbst nicht betriebsbereit ist. Dies kann etwa der Fall sein solange sich das militärische Wasserfahrzeug noch in der Fertigstellung oder in Reparatur befindet. Ebenso kann es sein, dass Wartungsarbeiten oder Umbauarbeiten an dem militärischen Wasserfahrzeug durchgeführt werden.

Berechnungen realistischer Schadenszenarien für Gefechtstreffer eines militärischen Wasserfahrzeugs sind im allgemeinen sehr rechenintensiv. Werden Treffer mit einem Schadensmodell berechnet, welches beispielsweise auf der Finite-Element-Methode (FEM) basiert, kann die notwendige Rechenzeit so lange sein, dass Berechnungen realistischer Szenarien während einer laufenden Gefechtsübung, insbesondere in Echtzeit, technisch nicht umsetzbar sind. Demgegenüber können Ausführungsformen den Vorteil haben, dass sie eine Verwendung realistischer, mit einem Schadensmodell berechneter Schadenszenarien ermöglichen. Beispielsweise werden Auswirkungen für eine Mehrzahl von unterschiedlichen Treffern, d.h. für eine Mehrzahl von Trefferszenarien mit jeweils unterschiedlichen Trefferparametern, vorberechnet. Diese Trefferparameter umfassen beispielsweise Angaben zu einem Einschlagswinkel, einer Einschlagsposition und/oder einer Geschossart des jeweiligen Treffers. Für diese Vorberechnungen kann ein Schadensmodell, welches beispielsweise auf FEM basiert, verwendet werden. Dies ermöglicht eine sehr realistische Berechnung von Gefechtstreffern, selbst wenn diese äußerst rechenintensiv ist. Unter Verwendung der Ergebnisse dieser Berechnungen kann für die unterschiedlichen Trefferszenarien der Mehrzahl von Trefferszenarien jeweils ein Schadensszenarium mit Schadensparametern definiert werden, welches die Auswirkungen des jeweiligen Treffers auf das militärische Wasserfahrzeug beschreiben. Die Schadensparameter können beispielsweise eine Art des Schadens, etwa einen Feuerausbruch, einen Wassereinbruch, eine Beschädigung von Vorrichtungen des Wasserfahrzeugs, eine Fehlfunktion von Vorrichtungen des Wasserfahrzeugs, einen Ausfall von Vorrichtungen des Wasserfahrzeugs, eine Zerstörung von Vorrichtungen und/oder Bereichen des Wasserfahrzeugs, und/oder eine Unterbrechung von technischen Leitungen beschreiben. Ferner können die Schadensparameter beispielsweise eine Position und/oder eine Stärke, d.h. ein Ausmaß, des entsprechenden Schadens definieren. Diese Angaben zu den Trefferparametern und den für diese Treffer berechneten Schadensparametern können in Datensätzen, etwa in Form einer Tabelle, abgespeichert werden. Beispielsweise werden diese Datensätze in einer Datenbank der Simulationsschnittstelle des Simulationssystems zur Verwendung im Zuge eines Gefechtstrainings abgespeichert.

Die Trefferparameter definieren für die Treffer beispielsweise jeweils Position, Richtung, Art des trefferverursachenden Geschosses und/oder Sprengkraft des trefferverursachenden Geschosses. Die Schadensparameter bzw. Wirkungsparameter definieren für die Treffer jeweils aus den entsprechenden Treffern resultierende Schäden bzw. die Wirkung der entsprechenden Treffer, beispielsweise ein Ausfall ein oder mehrerer Funktionsketten und/oder ein oder mehrerer Geräte, ein Brand, ein Wassereinbruch, strukturelle Zerstörungen, ein Zutrittsverbot.

Ein Treffer kann beispielsweise zu einem Ausfall ein oder mehrerer Funktionsketten innerhalb des militärischen Wasserfahrzeugs führen, sodass bestimmte Funktionen des Wasserfahrzeugs nicht mehr zur Verfügung stehen oder nicht mehr angesteuert werden können. Im Zuge des Gefechtstrainings können die Besatzungsmitglieder nun im Falle eines Ausfalls einer Funktionskette beispielsweise vor die Aufgabe gestellt sein, die entsprechende Funktionsketten wiederherzustellen, für den Betrieb des Wasserfahrzeugs auf eine redundante Funktionskette zu wechseln und/oder die entsprechende Funktion mit alternativen Mittel bereitzustellen oder anzusteuern. Beispielsweise kann es bei Ausfall einer Funktionskette notwendig sein ein Steuerelement, wie etwa ein Ventil, lokal vor Ort zu betätigen, wenn eine Fernsteuerung ausfällt. Dies kann beispielsweise unter Verwendung der von den technischen Mitteln der zweiten Simulationsumgebung bereitgestellten visuellen Simulation erfolgen. Ein Treffer kann beispielsweise zu einem Ausfall ein oder mehrerer Geräte innerhalb des militärischen Wasserfahrzeugs führen. Im Zuge des Gefechtstrainings können die Besatzungsmitglieder nun im Falle eines Ausfalls eines Geräts beispielsweise vor die Aufgabe gestellt sein, das entsprechende Gerät zu reparieren, auszutauschen oder zu einem redundanten Gerät zu wechseln. Beispielsweise ist es hierfür notwendig, dass ein Besatzungsmitglied entsprechende Maßnahmen vor Ort bei dem ausgefallenen Gerät ergreift. Dies kann beispielsweise unter Verwendung der von den technischen Mitteln der zweiten Simulationsumgebung bereitgestellten visuellen Simulation erfolgen.

Ein Treffer kann beispielsweise zu einem Brand führen. Im Zuge des Gefechtstrainings können die Besatzungsmitglieder nun vor die Aufgabe gestellt sein, den Brand zu löschen. Zusätzlich kann es notwendig sein durch den Brand beschädigte Funktionskette und/oder Geräte des Wasserfahrzeugs wiederherzustellen und/oder auf redundante Funktionsketten und/oder Geräte zu wechseln. Dies kann beispielsweise unter Verwendung der von den technischen Mitteln der zweiten Simulationsumgebung bereitgestellten visuellen Simulation erfolgen.

Ein Treffer kann beispielsweise zu einem Wassereinbruch führen. Im Zuge des Gefechtstrainings können die Besatzungsmitglieder nun vor die Aufgabe gestellt sein, den Wassereinbruch einzudämmen. Ferner können die Besatzungsmitglieder vor die Aufgabe gestellt sein, ein den Wassereinbruch verursachendes Leck abzudichten und/oder das eingedrungene Wasser zumindest teilweise wieder zu entfernen bzw. abzupumpen. Zusätzlich kann es notwendig sein durch den Wassereinbruch beschädigte Funktionskette und/oder Geräte des Wasserfahrzeugs wiederherzustellen und/oder auf redundante Funktionsketten und/oder Geräte zu wechseln. Dies kann beispielsweise unter Verwendung der von den technischen Mitteln der zweiten Simulationsumgebung bereitgestellten visuellen Simulation erfolgen.

Ein Treffer kann beispielsweise zu strukturellen Zerstörungen an dem Wasserfahrzeug führen. Im Zuge des Gefechtstrainings können die Besatzungsmitglieder nun vor die Aufgabe gestellt sein, den Betrieb des Wasserfahrzeugs trotz der Zerstörungen aufrechtzuerhalten. Beispielsweise können entsprechende Zerstörungen die Besatzungsmitglieder beim Ausüben ihrer Aufgaben behindern, etwa da bestimmte Bereiche des Wasserfahrzeugs infolge der Zerstörungen nicht mehr oder nur eingeschränkt zugänglich bzw. nutzbar sind. Beispielsweise kann es notwendig sein zumindest einen Teil der strukturellen Zerstörungen zu reparieren. Zusätzlich kann es notwendig sein infolge der strukturellen Zerstörungen beschädigte Funktionskette und/oder Geräte des Wasserfahrzeugs wiederherzustellen und/oder auf redundante Funktionsketten und/oder Geräte zu wechseln. Dies kann beispielsweise unter Verwendung der von den technischen Mitteln der zweiten Simulationsumgebung bereitgestellten visuellen Simulation erfolgen.

Ein Treffer kann beispielsweise zu einem Zutrittsverbot zu bestimmten Bereichen des Wasserfahrzeugs führen. Dies kann etwa der Fall sein, wenn ein Betreten für die Besatzungsmitglieder zu gefährlich ist, etwa infolge von Trefferbedingte Beschädigungen, wie instabile strukturelle Elemente, oder negativen Umwelteinflüssen, wie Hitze, Rauch, Feuer, Funken, Wasser, Elektrizität etc. Ferner kann etwa der Fall sein, wenn die entsprechenden Bereiche für die Besatzungsmitglieder nicht zugänglich sind oder ein Durchkommen zu aufwendig ist.

Kommt es im Zuge einer Gefechtssimulation zu einem Treffer des militärischen Wasserfahrzeugs, ist dieser Treffer durch eine Mehrzahl von Trefferparametern charakterisiert. Basierend auf diesen Trefferparametern, welche beispielsweise von Gefechtssimulationssystem empfangen werden, wird derjenige Datensatz bestimmt, dessen Trefferparameter die geringsten Abweichungen von den empfangenen Trefferparametern aufweisen. Somit kann dasjenige vorgerechnete Schadensszenario bestimmt werden, welches demjenigen Schadenszenario am nächsten kommt, dass durch einen Treffer mit den Trefferparametern gemäß Gefechtssimulation hervorgerufenen werden würde. Dies hat den Vorteil, dass selbst wenn im Zuge einer Gefechtssimulation unterschiedliche Trefferszenarien mit unterschiedlichen Trefferparametern möglich sind, welche nicht alle im Vorfeld einer Gefechtssimulation vorberechnet werden können, dennoch für alle möglichen Trefferszenarien realistische Schadensszenarien ermittelt werden können, welche den tatsächlichen Schadensszenarien am nächsten kommen.

Beispielsweise ist das Simulationssystem mit einem Gefechtssimulationssystem, d.h. einem System zur Simulation eines äußeren Gefechts, über eine Schnittstelle, etwa die Simulationsschnittstelle, verbunden. Ebenso ist es möglich, dass das Simulationssystem das entsprechende Gefechtssimulationssystem umfasst. Das Gefechtssimulationssystem übermittelt in der laufenden Simulation, d.h. während des Gefechtstrainings, im Falle eines Treffers des militärischen Wasserfahrzeugs die Trefferparameter des entsprechenden Treffers an das Simulationssystem, beispielsweise die Simulationsschnittstelle. Beispielsweise ein die Simulationsschnittstelle bereitstellendes Simulationscomputersystem vergleicht die empfangenen Trefferparameter mit den Trefferparametern der in der ersten Datenbank hinterlegten Trefferszenarien. Bei der ersten Datenbank handelt es sich mithin um eine Trefferdatenbank. In der Datenbank wird dasjenige Trefferszenario ausgewählt, welches die geringste Abweichung an Trefferparametern aufweist. Für dieses ausgewählte Trefferszenario wird das zugehörige vorberechnete Schadenszenario mit seinen Schadensparametern ausgelesen. Bei der ersten Datenbank handelt es sich mithin ferner um eine Schadensdatenbank. In dem Simulationssystem werden dann gemäß den ausgelesenen Schadensparametern Schäden dargestellt, welche von den Besatzungsmitgliedern des militärischen Wasserfahrzeugs zeitgleich und kooperativ bekämpft werden müssen. Dabei definieren die Schadensparameter beispielsweise Position, Art und/oder Ausmaß der infolge des Treffers auftretenden Schäden. Beispielsweise tritt an einer abgespeicherten Position ein Feuer und/oder ein Wassereinbruch auf. Damit kann jeder Treffer in der laufenden Simulation einem realistischen Trefferszenario mit realistischen Trefferauswirkungen, d.h. einem Schadenszenario mit realistischen Schadensparametern, zugeordnet und mit den entsprechenden realistischen Trefferauswirkungen dargestellt werden.

Die Trefferparameter definieren für die Treffer beispielsweise jeweils Position, Richtung, Art des trefferverursachenden Geschosses und/oder Sprengkraft des trefferverursachenden Geschosses. Die Schadensparameter bzw. Wirkungsparameter definieren für die Treffer jeweils aus den entsprechenden Treffern resultierende Schäden bzw. die Wirkung der entsprechenden Treffer, beispielsweise ein Ausfall ein oder mehrerer Funktionsketten und/oder ein oder mehrerer Geräte, ein Brand, ein Wassereinbruch, strukturelle Zerstörungen, ein Zutrittsverbot.

So wird zumindest die von den technischen Mitteln der zweiten Simulationsumgebung bereitgestellte visuelle Simulation zum Wiedergeben des ausgelesenen Schadensszenarios gesteuert. Unter Verwendung der ausgelesenen Schadensparameter des bestimmten Datensatzes wird das entsprechende Schadensszenario in der visuellen Simulation wiedergegeben. Beispielsweise werden infolge des Treffers auftretenden Schäden an derjenigen Position, von derjenigen Art und/oder in demjenigen Umfang angezeigt, wie sie von den ausgelesenen Schadensparametern definiert werden. Beispielsweise wird an einer von den Schadensparametern definierten Position des militärischen Wasserfahrzeugs in der visuellen Simulation ein Feuer, ein Wassereinbruch und/oder ein anderer Schaden angezeigt. Dieser angezeigte Schaden ist von ein oder mehreren Besatzungsmitgliedern des militärischen Wasserfahrzeugs, beispielsweise zeitgleich und kooperativ, zu bekämpfen. Beispielsweise wird der Schaden ein oder mehreren Besatzungsmitgliedern der zweiten Gruppe von Besatzungsmitgliedern, welche in der zweiten Simulationsumgebung trainieren, auf ein oder mehreren technischen Mitteln der zweiten Simulationsumgebung angezeigt, sodass diese Besatzungsmitglieder der zweiten Gruppe unter Verwendung der technischen Mittel der zweiten Simulationsumgebung ein Bekämpfen der auftretenden Schäden trainieren können.

Nach Ausführungsformen ist das Simulationssystem ferner dazu konfiguriert, auf ein oder mehreren Anzeigevorrichtungen des Leitstands ein oder mehrere der Schadensparameter des ausgelesenen Schadensszenarios anzuzeigen.

Ausführungsformen können den Vorteil haben, dass unter Verwendung des Leitstands, auf welchem ein oder mehrere der Schadensparameter des ausgelesenen Schadensszenarios anzeigt werden, ein oder mehrere Besatzungsmitglieder der ersten Gruppe von Besatzungsmitgliedern, welche in der ersten Simulationsumgebung trainieren, sich an der Bekämpfung des durch den Treffer hervorgerufenen Schadens beteiligen können. Beispielsweise wird auf Anzeigevorrichtungen des Leitstands eine Position und/oder Art des Schadens angezeigt. Beispielsweise umfasst der Schaden einen Ausfall, eine Störung und/oder eine Beschädigung ein oder mehrerer technischer Komponenten des Wasserfahrzeugs, welche auf den Anzeigevorrichtungen des Leitstands angezeigt werden. Beispielsweise werden für die entsprechenden Komponenten Ausfall-, eine Störungs- und/oder eine Beschädigungsmeldung auf den Anzeigevorrichtungen des Leitstands angezeigt. Beispielsweise wird auf dem Leitstand ein Alam ausgegeben, wie etwa ein Feueralarm und/oder ein Alarm wegen eines Wassereinbruchs. Die Besatzungsmitglieder der ersten Gruppe von Besatzungsmitgliedern könne daraufhin beispielsweise aktive Maßnahmen zur Bekämpfung des Schadens und/oder seiner Auswirkungen vornehmen. Beispielsweise können sie Gegenmaßnahmen veranlassen. Beispielsweise können sie redundante Systeme nutzen, um Kapazitäten umzuverteilen und so ausgefallene, gestörte und/oder beschädigte Systemkomponenten zu ersetzen. Ferner können sie beispielsweise Maßnahmen durch Besatzungsmitglieder der zweiten Gruppe von Besatzungsmitgliedern unterstützen und/oder koordinieren.

Nach Ausführungsformen umfasst das Bestimmen des Datensatzes von Trefferparametern in der ersten Datenbank, dessen Trefferparameter die geringsten Abweichungen von den empfangenen Trefferparametern aufweisen, ein Berechnen von Differenzen zwischen den empfangenen Trefferparametern und Trefferparametern der in der ersten Datenbank gespeicherten Datensätze.

Ausführungsformen können den Vorteil haben, dass unter Verwendung der Differenzen zwischen den empfangenen Trefferparametern und den Trefferparametern der in der ersten Datenbank gespeicherten Datensätze die Abweichungen zwischen den empfangenen Trefferparametern und den Trefferparametern der jeweiligen Datensätze bestimmt werden kann. Derjenige Datensatz, für dessen Trefferparameter die Differenzen am geringsten sind, beschreibt ein Trefferszenario, welches dem Trefferszenario gemäß den von dem Gefechtssimulationscomputersystem empfangen Trefferparametern am ähnlichsten ist. Dieser Datensatz wird beispielsweise aus der ersten Datenbank ausgewählt.

Die Trefferparameter umfassen beispielsweise eine Position des Treffers. Im Zuge der Differenzbestimmung wird beispielsweise jeweils ein Abstand zwischen der Position gemäß den empfangenen Trefferparametern und den Positionen gemäß den Trefferparametern der Datensätze in der ersten Datenbank bestimmt.

Die Trefferparameter umfassen beispielsweise einen Einschlagwinkel des Treffers. Im Zuge der Differenzbestimmung wird beispielsweise jeweils ein Winkelabstand zwischen dem Einschlagwinkel gemäß den empfangenen Trefferparametern und den Einschlagwinkeln gemäß den Trefferparametern der Datensätze in der ersten Datenbank bestimmt.

Die Trefferparameter umfassen beispielsweise eine bei dem Treffer freigesetzte bzw. auf das Wasserfahrzeug einwirkende Energie. Diese Energie umfasst beispielsweise eine kinetische Energie des Geschosses und/oder eine Sprengkraft des Geschosses. Beispielsweise wird diese Energie als TNT-Äquivalent angegeben. Im Zuge der Differenzbestimmung wird beispielsweise jeweils eine Differenz zwischen der Energie gemäß den empfangenen Trefferparametern und den Energien gemäß den Trefferparametern der Datensätze in der ersten Datenbank bestimmt.

Die Trefferparameter umfassen beispielsweise eine Angabe einer Geschossart, welche den Treffer verursacht. Im Zuge der Differenzbestimmung wird beispielsweise jeweils ein Unterschied zwischen der Geschossart gemäß den empfangenen Trefferparametern und den Geschossarten gemäß den Trefferparametern der Datensätze in der ersten Datenbank bestimmt. Beispielsweise wird eine Aufstellung der im Zuge des Gefechtstrainings vorkommenden Geschossarten bereitgestellt zusammen mit quantitativen Angaben, welche den Grad der Ähnlichkeit zwischen den unterschiedlichen Geschossarten quantifizieren.

Nach Ausführungsformen umfasst das Bestimmen des Datensatzes von Trefferparametern in der ersten Datenbank, dessen Trefferparameter die geringsten Abweichungen von den empfangenen Trefferparametern aufweisen, für ein oder mehrere der in der ersten Datenbank gespeicherten Datensätze ein Berechnen einer gewichteten Summe der Abweichungen zwischen den empfangenen Trefferparametern und den Trefferparametern des jeweiligen Datensatzes.

Ausführungsformen können den Vorteil haben, dass eine Mehrzahl von Differenz zwischen einer Mehrzahl von empfangenen Trefferparametern und den Trefferparametern der jeweiligen Datensätze der ersten Datenbank quantitativ berücksichtigt werden können. Hierzu werden die jeweiligen Abweichungen bzw. Differenzen zwischen den empfangenen Trefferparametern und den Trefferparametern des jeweiligen Datensatzes berechnet. Unter Verwendung dieser Differenzen wird eine gewichtete Summe der Abweichungen bzw. zwischen den empfangenen Trefferparametern und den Trefferparametern des jeweiligen Datensatzes berechnet. Die berücksichtigten Trefferparameter, über welche summiert wird, umfassen beispielsweise eine Position des Treffers, einen Einschlagwinkel des Treffers, eine bei dem Treffer freigesetzte bzw. auf das Wasserfahrzeug einwirkende Energie und/oder eine Geschossart.

Nach Ausführungsformen kann die erste Simulationsumgebung auf einer beweglich gelagerten Plattform angeordnet sein. An der Plattform ist beispielsweise eine Mehrzahl von hydraulischen, pneumatischen und/oder elektrischen Aktoren angeordnet, welche von einer Bewegungssteuerung der Plattform angesteuert werden, um Bewegungen des Wasserfahrzeugs im Zuge des simulierten Betriebs nachzuahmen.

Ausführungsformen können den Vorteil haben, dass unter Verwendung der beweglich gelagerten Plattform innerhalb der ersten Simulationsumgebung Bewegungen des Wasserfahrzeugs im Zuge des simulierten Betriebs nachgeahmt werden können. Die erste Simulationsumgebung, etwa ein erster Simulationsraum, ist hierzu auf einer beweglich gelagerten Plattform angeordnet. An der beweglich gelagerten Plattform ist beispielsweise eine Mehrzahl von Aktoren angeordnet. Bei den Aktoren handelt es sich beispielsweise um hydraulische, pneumatische und/oder elektrische Aktoren, welche dazu konfiguriert sind, Neigungswinkel der beweglich gelagerten Plattform und damit der ersten Simulationsumgebung in unterschiedliche Richtungen anzupassen. Hierzu werden die Aktoren von einer Bewegungssteuerung der Plattform angesteuert, um Bewegungen des Wasserfahrzeugs im Zuge eines simulierten Betriebs des Wasserfahrzeugs nachzuahmen. Die entsprechenden Bewegungen des Wasserfahrzeugs werden durch identische Bewegungen der Plattform angetrieben durch die Aktoren nachgeahmt, etwa durch entsprechende Neigungen der beweglich gelagerten Plattform. Bei der nachgeahmten Bewegung des Wasserfahrzeugs kann es sich beispielsweise um Bewegungen des Wasserfahrzeugs aufgrund der natürlichen Umgebung, etwa des Wellengangs, und/oder aufgrund von Steuermanövern des Wasserfahrzeugs handeln. Im Falle eines Unterseeboots umfassen entsprechende Steuermanöver beispielsweise Auf- und/oder Abtauchmanöver. Beispielsweise kann die erste Simulationsumgebung, etwa ein erster Simulationsraum, entsprechend der simulierten Lage des Wasserfahrzeugs im Raum geneigt und/oder gekippt werden, sodass die Bewegungen des simulierten Wasserfahrzeugs direkt wiedergegeben werden und somit für trainierende Besatzungsmitglieder in dem ersten Simulationsraum spürbar sein. Ebenso können Beschleunigungen und/oder Vibrationen des simulierten Wasserahrzeugs wiedergegeben werden.

Nach Ausführungsformen ist die Bewegungssteuerung dazu konfiguriert, die Aktoren gemäß ein oder mehrere der Schadensparameter des ausgelesenen Schadensszenarios anzusteuern, um Bewegungen des Wasserfahrzeugs im Zuge des zu simulierenden Schadensszenarios nachzuahmen. Ausführungsformen können den Vorteil haben, dass Auswirkungen des Treffers auf Bewegungen des Wasserfahrzeugs mittels der ersten Simulationsumgebung realitätsnah wiedergegeben werden können. Beispielsweise können Erschütterungen, Änderungen der Lage und/oder Änderungen der Fahrtrichtung des Wasserfahrzeugs infolge des Treffers realitätsnah simuliert werden. Dies ermöglich ein realitätsnahes Gefechtstraining für die Besatzungsmitglieder der ersten Gruppe von Besatzungsmitgliedern.

Nach Ausführungsformen wird die von den technischen Mitteln der zweiten Simulationsumgebung bereitgestellte visuellen Simulation zum Wiedergeben bzw. Nachzuahmen der Bewegungen des Wasserfahrzeugs im Zuge des zu simulierenden Schadensszenarios gesteuert.

Ausführungsformen können den Vorteil haben, dass Auswirkungen des Treffers auf Bewegungen des Wasserfahrzeugs mittels der zweiten Simulationsumgebung realitätsnah wiedergegeben werden können. Beispielsweise können Erschütterungen, Änderungen der Lage und/oder Änderungen der Fahrtrichtung des Wasserfahrzeugs infolge des Treffers realitätsnah wiedergegeben werden, etwa indem die von den technischen Mitteln der zweiten Simulationsumgebung bereitgestellte visuellen Simulation entsprechend verwackelt und/oder verschwenkt wird. Dies ermöglich ein realitätsnahes Gefechtstraining ebenfalls für die Besatzungsmitglieder der zweiten Gruppe von Besatzungsmitgliedern.

Nach Ausführungsformen sind die in der ersten Datenbank gespeicherten Schadensszenarien des Wasserfahrzeugs für die Trefferszenarien unter Verwendung einer Finite-Element-Methode für das Wasserfahrzeug vorberechnet.

Ausführungsformen können den Vorteil haben, dass eine Verwendung einer Finite-Element-Methode eine realitätsnahe Berechnung der Auswirkungen von Gefechtstreffern auf das Wasserfahrzeug ermöglicht. Indem die entsprechenden Ergebnisse vorberechnet werden und in der ersten Datenbank hinterlegt werden, kann im Zuge des Gefechtstrainings bei einem Treffer aus der ersten Datenbank ein am besten passendes mittels der Finite-Element-Methode vorberechnetes Schadensszenario ausgewählt werden. Die Auswahl kann dabei in Echtzeit, d.h. derart schnell erfolgen, dass diese im Zuge des Gefechtstrainings zu keiner von den Teilnehmern, insbesondere den Besatzungsmitgliedern des militärischen Wasserfahrzeugs wahrnehmbaren Verzögerungen führen. Somit können Ergebnisse der Finite-Element-Methode trotz des hohen Rechenaufwands im Zuge des Gefechtstrainings beispielsweise in Echtzeit verwendet werden.

Die Finite-Elemente-Methode (FEM) ist ein numerisches Analyseverfahren, bei welchem eine zu untersuchende Struktur in eine endliche, d.h. finite, Anzahl von Elementen, z.B. Teilkörpern, einfacher Form unterteilt wird. Bei den Elementen einfacher Form handelt es sich beispielsweise um Quader oder Tetraeder. Durch entsprechende Algorithmen lässt sich das Gesamtverhalten der Struktur aus dem Verhalten der einzelnen finiten Elemente berechnen. Das physikalische Verhalten der entsprechenden Elemente kann aufgrund ihrer einfachen Geometrie mit bekannten Ansatzfunktionen gut berechnet werden. Das physikalische Verhalten des aus den finiten Elementen gebildeten Gesamtkörpers wird dadurch nachgebildet, wie diese Elemente auf die Kräfte, Lasten und Randbedingungen reagieren und wie sich Lasten und Reaktionen beim Übergang von einem Element auf ein benachbartes Element fortpflanzen durch problemabhängige Stetigkeitsbedingungen, welche Ansatzfunktionen erfüllen müssen.

Die Ansatzfunktionen enthalten Parameter, die in der Regel eine physikalische Bedeutung besitzen, wie z. B. die Verschiebung eines bestimmten Punkts in der Struktur zu einem bestimmten Zeitpunkt. Die Suche nach einer Bewegungsfunktion kann auf diese Weise auf die Suche nach Werten der Parameter der Funktionen zurückgeführt werden. Indem immer mehr Parameter, z.B. immer mehr finite Elemente, oder immer höherwertige Ansatzfunktionen benutzt werden, kann die Genauigkeit der Näherungslösung verbessert werden.

Die Entwicklung der FEM basiert wesentlich auf der Entwicklung leistungsfähiger Computer, da die FEM erhebliche Rechenleistung benötigt.

Programme, welche die Finite-Elemente-Methode verwenden, arbeiten beispielsweise nach dem EVA-Prinzip. Das EVA(Eingabe/Verarbeitung/Ausgabe)-Prinzip beschreibt ein Grundprinzip der Datenverarbeitung. Im Falle der Finite-Elemente-Methode kommen im Zuge der Umsetzung des EVA-Prinzips beispielsweise ein CAD-Programm, ein FE(Finite-Elemente)-Präprozessor, ein FEM-Gleichungslöser und ein FE(Finite-Elemente)-Postprozessor zum Einsatz. Beispielsweise umfasst das das EVA-Prinzip eine Eingabe unter Verwendung des FE-Präprozessors, eine Verarbeitung unter Verwendung des FEM-Gleichungslösers und eine Ausgabe unter Verwendung des FE-Postprozessors: Ein Nutzer erstellt beispielsweise in einem CAD-Programm eine Geometrie der zu untersuchenden Struktur. Bei der entsprechenden zu untersuchenden Struktur handelt es sich beispielsweise um ein militärisches Wasserfahrzeug und/oder einen Teil eines militärischen Wasserfahrzeugs. Anschließend gibt der Nutzer in einem sogenannten FE-Präprozessor weitere Eingaben vor. Ein FEM-Gleichungslöser führt die eigentliche Rechnung durch, und der Nutzer erhält die berechneten Ergebnisse, welche er dann in einem FE-Postprozessor in Form grafischer Anzeigen betrachten kann. Prä- und Postprozessor können beispielsweise in einem Programm kombiniert und/oder Bestandteil des CAD-Programms sein.

Beispielsweise wird in einem CAD-Programm ein CAD-Modell der zu untersuchenden Struktur, etwa dem militärischen Wasserfahrzeug und/oder einem Teil des militärischen Wasserfahrzeugs, erstellt und, beispielsweise mittels einer Direktschnittstelle oder mit einem neutralen Austauschformat, in den FE-Präprozessor übertragen. Durch die Anwahl von Netzparametern wie etwa Elementgröße und Elementart in einem Vernetzungsmodul des FE-Präprozessors werden mit Hilfe eines Vernetzungsalgorithmus die Finiten-Elemente erzeugt. Beispielsweise werden Materialkennwerte, wie etwa Elastizitätsmodul und Poissonzahl, für die Materialien der zu untersuchenden Struktur eingegeben. Zudem können weitere Randbedingungen, wie zum Beispiel einwirkende Belastungen in Form von Kräften, Drücken, Temperaturen etc., eingegeben werden. Ferner werden beispielsweise auf die Struktur einwirkende Kräfte definiert, wie etwa aus einem Treffer resultierende Kräfte.

Anschließend kommt ein FEM-Gleichungslöser zum Einsatz, bei welchem es sich beispielsweise um ein separates, eigenständiges Programm oder um einen integrierten Gleichungslöser handeln kann. Der FEM-Gleichungslöser berechnet eine Simulation, wie sich die Kräfte unter den definierten Randbedingungen auf die finiten Einzelelemente der zu untersuchenden Struktur auswirken, und wie sich die Kräfte sowie die Auswirkungen in der Struktur fortpflanzen und jeweils auf benachbarte finite Elemente auswirken. Beispielsweise resultiert eine solche Berechnung zunächst in einer ersten Näherungslösung, welche durch weitere Iterationen sukzessive verbessert werden kann. Beispielsweise werden so viele Iterationen berechnet, bis sich nur noch Änderungen ergeben, welche kleiner als ein Schwellenwert sind. In diesem Fall hat die Näherung konvergiert und stellen das Ergebnis der Simulation dar. Dieses Ergebnis kann dann unter Verwendung eines FE-Postprozessor ausgegeben werden. Die Ausgabe kann beispielsweise eine visuelle Darstellung des Simulationsergebnisses umfassen, welches dem Nutzer auf einer Ausgabevorrichtung angezeigt wird. Beispielsweise werden basierend auf dem Ergebnis des FEM-Gleichungslösers von dem FE-Postprozessor Schadensparameter bestimmt. Diese Schadensparameter beschreiben ein Schadensszenario, welches aus einem Treffer resultiert, dessen Parameter für die Simulation mittels FEM verwendet wurden.

Beispielsweise werden Datensätze erzeugt, welche für Trefferszenarien, deren Auswirkungen auf das militärische Wasserfahrzeug mittels FEM berechnet wurden, Trefferparameter definieren. Ferner umfassen die Datensätze jeweils Schadensparmeter eines dem jeweiligen Trefferszenario zugeordneten Schadenszenarios, welche auf dem Ergebnis der FEM beruht. Diese Datensätze werden beispielsweise von der Simulationsschnittstelle des Simulationssystems empfangen und in der ersten Datenbank des Speichers der Simulationsschnittstelle gespeichert.

Beispielsweise wird ein FEM-Computersystem bereitgestellt, welches für eine Mehrzahl von Trefferszenarien, die jeweils durch eine Mehrzahl von Trefferparametern definiert werden, jeweils ein Schadenszenario zur späteren Verwendung im Zuge eines oder mehrerer Gefechtstrainings durch das Simulationssystem vorberechnet. Auf dem FEM-Computersystem sind beispielsweise ein oder mehrere Computerprogramme implementiert, welche ein oder mehrere der folgenden Komponenten umfassen: ein CAD-Programm, einen FE-Präprozessor, einen FEM-Gleichungslöser, und einen FE-Postprozessor. Die von dem FEM-Computersystem erzeugten Datensätze, welche die für die Mehrzahl von Trefferszenarien vorberechneten Schadensparmeter umfassen, werden beispielsweise zum Herunterladen und Speichern auf die Simulationsschnittstelle des Simulationssystems bereitgestellt. Beispielsweise erfolgt das Herunterladen über ein Netzwerk durch ein Simulationscomputersystem des Simulationssystems, auf welchem die Simulationsschnittstelle implementiert ist.

Beispielsweise umfasst das FEM-Computersystem eine Mehrzahl vernetzter Einzelcomputer. Beispielsweise sind die vernetzten Einzelcomputer dazu konfiguriert Berechnungen im Zuge der Ausführung der Finite-Elemente-Methode parallelisiert auszuführen.

Nach Ausführungsformen werden eine oder mehrere individuelle Wiedergaben der visuellen Simulation durch ein oder mehrere der technischen Mitteln der zweiten Simulationsumgebung unter Verwendung ein oder mehrere der Schadensparameter des ausgelesenen Schadensszenarios an ein oder mehrere aus dem Schadensszenario resultierende Umweltbedingungen angepasst, um individuelle Auswirkungen der resultierenden Umweltbedingungen auf ein oder mehrere Besatzungsmitglieder der zweiten Gruppe von Besatzungsmitgliedern zu simulieren.

Ausführungsformen können den Vorteil haben, dass Auswirkungen aus dem durch den Treffer hervorgerufenen Schadensszenario auf individuelle Besatzungsmitglieder der zweiten Gruppe von Besatzungsmitgliedern realitätsnah simuliert werden können. Die Besatzungsmitglieder der zweiten Gruppe von Besatzungsmitgliedern nehmen an dem Gefechtstraining beispielsweise über die Wiedergaben der visuellen Simulation durch die technischen Mittel der zweiten Simulationsumgebung teil. Indem die Wiedergabe durch die technischen Mittel der zweiten Simulationsumgebung an die aus dem Schadenszenario resultierenden Umweltbedingungen angepasst wird, können seitens der Besatzungsmitglieder der zweiten Gruppe von Besatzungsmitgliedern physiologische Effekte hervorgerufen werden, wie etwa stressbedingte physiologische Effekte, welche ein realitätsnahes Gefechtstraining unter Einbeziehung entsprechender physiologischer Effekte ermöglicht, die typischerweise durch die aus einem entsprechenden Schadenszenario resultierenden Umweltbedingungen hervorgerufen werden.

Die Wirkung, welche die Anpassungen der Wiedergabe durch die technischen Mittel hervorruft, beruht dabei beispielsweise nicht von psychologischen oder anderen subjektiven Faktoren der Besatzungsmitglieder der zweiten Gruppe von Besatzungsmitgliedern, sondern von physischen Parametern, die auf der menschlichen Physiologie beruhen. Beispielsweise werden visuelle und/oder auditive Stimuli unter Verwendung der technischen Mittel der zweiten Simulationsumgebung zu dem Zweck dargestellt, dass sie in ein oder mehreren Bestatzungsmitgliedern der zweiten Gruppe von Besatzungsmitgliedern eine physiologische Reaktion, etwa eine Stressreaktion hervorrufen, welche es ermöglicht eine Bekämpfung eines trefferbedingten Schadens auch unter Stress zu trainieren. Diese Stressreaktion umfasst beispielsweise ein oder mehrere der folgenden messbaren physiologischen Symptome: eine Erhöhung der Herzfrequenz, eine Erhöhung des Herzminutenvolumens, eine Erhöhung des Blutdrucks, eine Erhöhung der Atemfrequenz, eine Erhöhung der Bronchodilatation, eine Erhöhung der peripheren Vasokonstriktion, eine Erhöhung der Glykogenolyse, Erhöhung der Lipolyse, Erhöhung der zerebralen Durchblutung, eine Erhöhung der Reninsekretion.

Um die Auswirkungen der Umweltbedingung auf die Besatzungsmitglieder der zweiten Gruppe von Besatzungsmitgliedern zu bestimmen, wird beispielsweise ein Lebensmodell verwendet. Dieses Lebensmodell wird verwendet, um eine realitätsnahe Verletzlichkeit der Besatzungsmitglieder gegenüber den Umweltbedingungen innerhalb der Simulation abzubilden. Es umfasst beispielsweise die Wirkung von exogenen Faktoren in Form der entsprechenden Umweltbedingung auf Vitalfunktionen bzw. ein Vitalmodell und eine Lebensenergie der Besatzungsmitglieder. Die Verletzlichkeit der Besatzungsmitglieder kann beispielsweise auf ein oder zwei der folgenden Ebenen erfasst werden. Zum einen kann jedem Besatzungsmitglied beispielsweise eine Lebensenergie zugeordnet werden. Diese Lebensenergie simuliert die physische Lebenskraft des entsprechenden Besatzungsmitglieds. Zum anderen kann jedem Besatzungsmitglied beispielsweise ein Vitalmodell zugeordnet werden. Das Vitalmodell umfasst ein oder mehrere lebensnotwendigen Vitalfunktionen, wie etwa Atmung, Kreislauf, Ausdauer und/oder Bewusstsein.

Beispielsweise können Besatzungsmitglieder Lebensenergie einbüßen, wenn bestimmte Zustände eintreten, etwa eine Abnahme des Sauerstoffgehalts der Umgebung, oder ein Kontakt mit einem einer Gefahrenquelle, etwa mit einem Feuer, mit Trümmerteilen und/oder eindringendem Wasser, auftritt. Beispielsweise können abhängig von der einem Besatzungsmitglied zugeordneten Lebensenergie unter Verwendung eines oder mehrerer dem entsprechenden Besatzungsmitglied zugeordneter technischer Mittel der zweiten Simulationsumgebung visuelle und/oder auditive Stimuli erzeugt werden.

Das Vitalmodell eines Besatzungsmitglieds basiert auf den Zuständen von dem entsprechenden Besatzungsmitglied zugeordneten Vitalparameter bzw. Vitalfunktionen. Diese können durch die Einwirkung von exogenen Faktoren beeinträchtigt werden. Beispielsweise kann etwa eine Abnahme des Sauerstoffgehalts der Umgebung oder ein Kontakt mit einem einer Gefahrenquelle, etwa mit einem Feuer, mit Trümmerteilen und/oder eindringendem Wasser, zu einer Beeinträchtigt der Vitalparameter führen.

Exogene Faktoren bzw. Umweltbedingungen umfassen äußere Einflussgrößen, die in den Szenarien auf die Besatzungsmitglieder einwirken. Zu den exogenen Faktoren zählen beispielsweise ein oder mehrere der folgenden Faktoren: Sauerstoffgehalt in der Luft, Kohlenstoffdioxidgehalt in der Luft, Umgebungstemperatur, Arbeitsbelastung bzw. Stresslevel, Feuer, Wasser und Trümmerteile.

Beispielsweise können abhängig von der einem Besatzungsmitglied zugeordneten Vitalparametern des Vitalmodells unter Verwendung eines oder mehrerer dem entsprechenden Besatzungsmitglied zugeordneter technischer Mittel der zweiten Simulationsumgebung visuelle und/oder auditive Stimuli erzeugt werden.

Nach Ausführungsformen umfasst die Anpassungen der individuellen Wiedergaben ein oder mehrere der folgenden visuellen Effekte: ein Flimmern der visuellen Wiedergabe, ein zeitweises Aussetzen der visuellen Wiedergabe, ein Farbwechsel der visuellen Wiedergabe, eine Einschränkung eines von der visuellen Wiedergabe umfassten Sichtfelds, ein Verschwimmen der visuellen Wiedergabe, ein Verlangsamen der visuellen Wiedergabe.

Ausführungsformen können den Vorteil haben, dass durch die entsprechenden visuellen Effekte Einflüsse der aus dem Treffer bzw. auf dem durch den Treffer hervorgerufenen Schaden resultierenden Umweltbedingungen auf die Besatzungsmitglieder simuliert werden können. Beispielsweise könne die entsprechenden visuellen Effekte als visuelle Stimuli verwendet, um eine physiologische Reaktion, etwa eine Stressreaktion, hervorrufen.

Nach Ausführungsformen werden ferner ein oder mehrere der folgenden akustischen Effekte zum Simulieren individueller Auswirkungen der resultierenden Umweltbedingungen verwendet: ein zeitweises Aussetzen akustischer Wiedergaben, ein Reduzieren einer Lautstärke akustischer Wiedergaben, ein Verrauschen akustischer Wiedergaben, ein Überlagern akustischer Wiedergaben mit einem Pfeifton.

Ausführungsformen können den Vorteil haben, dass durch die entsprechenden akustischen Effekte Einflüsse der aus dem Treffer bzw. auf dem durch den Treffer hervorgerufenen Schaden resultierenden

Umweltbedingungen auf die Besatzungsmitglieder simuliert werden können. Beispielsweise könne die entsprechenden akustischen Effekte als auditive Stimuli verwendet, um eine physiologische Reaktion, etwa eine Stressreaktion, hervorrufen.

Beispielsweise umfassen die technische Mittel der zweiten Simulationsumgebung akustische Wiedergabevorrichtungen zur akustischen Wiedergabe der entsprechenden akustischen Effekte.

Nach Ausführungsformen umfasst das Simulationssystem ferner das Gefechtssimulationssystem. Ausführungsformen können den Vorteil haben, dass Treffer des Wasserfahrzeugs durch das Simulationssystem simuliert und die entsprechenden Treffer beschreibende Trefferparameter durch das Simulationssystem bestimmt werden können.

Bei ein oder mehreren der ersten und zweiten Steuerelemente kann es sich beispielsweise jeweils paarweise um dieselben Steuerelemente handeln. Beispielsweise kann es sich bei allen ersten und zweiten Steuerelemente jeweils paarweise um dieselben Steuerelemente handeln. Beispielsweise kann es sich bei ein oder mehreren der ersten und zweiten Steuerelemente jeweils um unterschiedliche Steuerelemente handeln, welche dazu konfiguriert sind denselben Steuerparameter für den Betrieb des Wasserfahrzeugs einzustellen. Beispielsweise handelt es sich bei einem entsprechenden ersten Steuerelement um ein Steuerelement des Leitstands des Wasserfahrzeugs zur Einstellung eines Steuerparameters vom Leitstand aus, d.h. aus der Entfernung, wie etwa einen Öffnungsgrad eines über den Leitstand ansteuerbaren, elektrisch aus der Entfernung betätigbaren Ventils. Beispielsweise handelt es sich bei einem Steuerelement des Leitstands, etwa einer Konsole mit einer benutzerschnittstelle zur Steuerung des elektrisch aus der Entfernung betätigbaren Ventils, um das entsprechende erste Steuerelement. Beispielsweise handelt es sich bei einem entsprechenden zweiten Steuerelement um ein Steuerelement zur lokalen Einstellung desselben Steuerparameters vor Ort. Beispielsweise handelt es sich bei dem entsprechenden zweiten Steuerelement um dasselbe Ventil, welches zusätzlich dazu konfiguriert ist vor Ort per Hand zu betätigt zu werden, um den Öffnungsgrad des Ventils einzustellen. Beispielsweise kann es sich bei allen ersten und zweiten Steuerelemente jeweils um unterschiedliche Steuerelemente handeln, welche dazu konfiguriert sind denselben Steuerparameter für den Betrieb des Wasserfahrzeugs einzustellen.

Die technischen Mittel umfassen beispielsweise Anzeigevorrichtungen zur visuellen Wiedergabe der visuellen Simulation. Hierbei kann es sich beispielsweise um einen Bildschirm eines Desktop-PCs oder ein Display eines mobilen tragbaren Endgeräts handeln. Beispielsweise kann es um eine Datenbrille zur Wiedergabe einer virtuellen Realität, d.h. eine VR-Brille handeln. Beispielsweise kann es sich um ein Augmented-Reality-Gerät, d.h. eine Projektionsvorrichtung, insbesondere personengetragene Projektionsvorrichtungen, zur Projektion von virtuellen Elementen in die physische Realität oder eine digitale Wiedergabe der physischen Realität handeln, z.B. einen teilweisen physischen Nachbau bzw. eine teilweise physische Wiedergabe des realen Wasserfahrzeugs. Beispielsweise umfasst eine entsprechende physische Wiedergabe ein oder mehrere taktile Elemente. Beispielsweise sind die personengetragenen Projektionsvorrichtungen Datenbrillen zur Wiedergabe von virtuellen Elementen zur Erweiterung der physischen Realität, d.h. eine Augmented Reality- Brille, im folgenden AR-Brille genannt. Diese AR-Brillen erzeugen eine gemischte Realität, sodass die Besatzungsmitglieder sowohl die tatsächliche Umgebung, beispielsweise die taktilen Elemente, als auch die eingeblendeten virtuellen Elemente der virtuellen Realität sehen. Dies hat beispielsweise den Vorteil, dass eine sichere und unfallfreie Bewegung in der zweiten Simulationsumgebung erleichtert werden kann.

Bei dem simulierten Wasserfahrzeug kann es sich beispielsweise um eine Simulation eines generischen militärischen Wasserfahrzeugs handeln, etwa um ein militärisches Wasserfahrzeug, welches generisch für einen bestimmten Typ oder ein bestimmtes Los ist. Bei dem simulierten Wasserfahrzeug kann es sich beispielsweise um eine Simulation ein individuelles militärisches Wasserfahrzeug handeln, d.h. eine Simulation eines konkreten realen Wasserfahrzeugs. Dies kann vorteilhaft sein, wenn ein Betrieb eines militärischen Wasserfahrzeugs simuliert werden soll, welches praktisch als Unikate hergestellt wurde. In diesem Fall können selbst bei Wasserfahrzeugen des gleichen Loses eines identischen Wasserfahrzeug-Typs Unterschiede der Art auftreten, dass für das Training die Wasserfahrzeuge als Unikate anzusehen sind.

Die Integrationsdichte technischer Komponenten ist in einem militärischen Wasserfahrzeug sehr hoch, während gleichzeitig der verfügbare Platz gering ist. Es kann daher notwendig sein, dass gerade die konkrete Umgebungssituation der Besatzung vertraut ist, um im Notfall schnell die notwendigen Handlungen vornehmen zu können. Daher kann es insbesondere wichtig sein, dass das Training der Besatzung unter realistischen Bedingungen erfolgt. Daher wird bisher die Besatzung hauptsächlich an Bord des Wasserfahrzeugs trainiert, was jedoch die oben genannten Nachteile mit sich bringt. Ein Simulationssystem, welches im Zuge des Trainings eine visuelle Simulation von Teilen oder dem gesamten militärischen Wasserfahrzeug verwendet, kann zu einem Training der Besatzung unter realistischen Bedingungen beitragen, ohne hierfür beispielsweise das reale Militärfahrzeug selbst verwenden zu müssen oder dieses für Trainingszwecke komplett Nachbauen zu müssen.

Die visuelle Simulation kann beispielsweise eine virtuelle Realität, d.h. ein virtuelle 3D-Umgebung in Form eines virtuellen 3D-Modells des militärischen Wasserfahrzeugs, bereitstellen. Die Verwendung einer virtuellen Realität hat den Vorteil, dass für ein realitätsnahes Training von Besatzungsmitgliedern auf einer Mehrzahl unterschiedlicher Stationen des Wasserfahrzeugs, d.h. in einer Mehrzahl von unterschiedlichen Bereichen des Wasserfahrzeugs, nicht das realen Wasserfahrzeugen benötigt wird. Mithin können Ausfälle des realen militärischen Wasserfahrzeugs für Einsätze während der Trainingszeit vermieden werden. Zudem können Schäden an dem realen militärischen Wasserfahrzeug sowie reale Gefahren für die Besatzungsmitglieder im Zuge des Trainings, selbst von Gefahrensituation, vermieden werden.

Die virtuelle Realität dient beispielsweise dazu, ein militärisches Wasserfahrzeug, beispielsweise ein generisches oder ein individuelles Wasserfahrzeug, auf welches die Besatzung trainiert werden soll, möglichst exakt wiederzugeben. Ferner dient die virtuelle Realität beispielsweise dazu, alle Handlungen, welche von der Besatzung vorgenommen werden, sowie alle Simulationsvorgaben zusammen zu nehmen und dadurch das reale Verhalten, welches ein reales Wasserfahrzeug unter identischen Bedingungen aufzeigen würde, zu simulieren und an die zu trainierende Besatzungsmitglieder wiederzugeben.

Beispielsweise kann die virtuelle Realität aus CAD-Daten des militärischen Wasserfahrzeugs und/oder aus Fotos des militärischen Wasserfahrzeugs gebildet werden. Gerade in militärischen Wasserfahrzeugen mit ihrer extrem hohen Integrationsdichte an elektronischen Komponenten führen können selbst kleine Abweichungen innerhalb eines Loses einer Klasse von Wasserfahrzeugen dazu führen, dass identische Komponenten auf den verschiedenen militärischen Wasserfahrzeugen gegebenenfalls an verschiedenen Ort angeordnet sind. Um einen guten Trainingserfolg erzielen zu können und eine Übereinstimmung zwischen der virtuellen Realität und dem realen militärischen Wasserfahrzeug zu ermöglichen, ist es wichtig, eine möglichst exakte Abbildung des militärischen Wasserfahrzeugs in der virtuellen Realität zu ermöglichen. CAD-Daten, Fotos und 3D-Scans können hierfür effektiv maschinell verarbeitbare Grundlagen bilden.

Die technischen Mittel der zweiten Simulationsumgebung umfassen beispielsweise eine Mehrzahl von Geräten zur Erzeugung und Darstellung einer virtuellen Realität oder von Komponenten einer virtuellen Realität zum Bereitstellen der visuellen Simulation. Die entsprechenden Geräte dienen beispielsweise als Zugangsvorrichtungen für die Besatzungsmitglieder der zweiten Gruppe von Besatzungsmitgliedern zum Eintritt in die virtuelle Realität.

Unter einer virtuellen Realität wird hier ein dreidimensionales virtuelles Computermodel verstanden, welches zum einen die Umgebung, d.h. das militärischen Wasserfahrzeugs, wiedergibt. Zum anderen umfasst die virtuelle Realität auch die Möglichkeit mit dieser Umgebung zu interagieren, beispielsweise virtuelle Kopien der zweiten Steuerelemente zu betätigen. Das Betätigen der virtuellen Kopien der zweiten Steuerelemente umfasst beispielsweise ein Bedienen von mechanischen Schaltelementen, ein Öffnen oder Schließen von Ventilen, etwa von Ventilen von Hydraulikleitungen, und/oder ein Betätigen anderer mechanische Vorrichtungen zum Steuern von Funktionalitäten des militärischen Wasserfahrzeugs. Des Weiteren umfasst die virtuelle Realität die Berechnung der Auswirkungen dieser Interaktionen gegebenenfalls zuzüglich äußerer Einflussgrößen, welche durch das in der Simulation des Betriebs des militärischen Wasserfahrzeugs gegebene Szenario vorgegeben werden, beispielsweise simulierte Systemausfälle, Beschädigungen und dergleichen. Als Ergebnis dieser Berechnungen werden beispielsweise Zustandswerte bereitgestellt, welche einen aktuellen simulierten Zustand des militärischen Wasserfahrzeugs definieren.

Das bedeutet, dass in der virtuellen Realität exakt die gleiche Umgebung zum Training der Besatzungsmitglieder bereitgestellt werden kann, wie diese auch vor Ort auf dem realen militärischen Wasserfahrzeug bestehen würde, wenn das Training auf dem realen militärischen Wasserfahrzeug anstatt unter Verwendung des Simulationssystems erfolgen würde. Zwar ist natürlich ein Unterschied zwischen einer realen Existenz und einer virtuellen Umgebung gegeben, die exakte Übereinstimmung bezieht sich aber auf die technischen Besonderheiten des militärischen Wasserfahrzeugs. Beispielsweise befinden sich Türen und Gänge an den gleichen Stellen, ebenso Computerkonsolen, Schalter, Hebel oder andere Steuerelemente. Dies kann vorteilhaft sein, da gerade auch das schnelle Auffinden gewisser Vorrichtungen ein Teil des Trainings ist, um im Notfall die notwendigen Handlungen ohne Zeitverlust, beispielsweise durch Suchen, vornehmen zu können. Hierbei ist zu beachten, dass scheinbar baugleiche militärischen Wasserfahrzeuge, etwa einer identischen Klasse von militärischen Wasserfahrzeugen, auch innerhalb eines Loses, durchaus deutliche Abweichungen voneinander aufweisen können. Daher kann eine exakte Wiedergabe eines individuellen militärischen Wasserfahrzeugs in der virtuellen Realität vorteilhaft für den Trainingserfolg sein.

Das Training im Zuge des Normalbetriebs des militärischen Wasserfahrzeugs kann beispielsweise normale Routinen zum Betrieb des militärischen Wasserfahrzeugs umfassen, also beispielsweise übliche Wartungs- und Kontrollaufgaben. Es kann sich bei dem Training auch um ein Training von Abweichung von dem Normalbetrieb etwa im Zuge einer Simulation von Fehlfunktionen, beispielsweise in Form von Gefahrensituationen oder Gefahrenabwehr, handeln, also beispielsweise eines Ausfalls eines oder mehrerer Geräte, eines Wassereinbruchs, eines Brands oder auch einer Gefechtssituation. Zu einer solchen Abweichung von dem Normalbetrieb, etwa im Zuge von Fehlfunktionen, kann es beispielsweise durch einen Treffer des Wasserfahrzeugs im Zuge eines Gefechtstrainings kommen. Bei diesem Training sollen die teilnehmenden Besatzungsmitglieder die Handgriffe erlernen und eintrainieren, welche diese in einer analogen realen Situation dann erleichtert ausführen können.

Beispielsweise umfasst die virtuelle Realität zudem Wiedergaben der am Training beteiligten Besatzungsmitgliedern in Form von Avataren. Ein in der virtuellen Realität wiedergegebener Avatar muss hierbei nicht eine bestimmte Person wiedergeben bzw. repräsentieren, insbesondere nicht das Aussehen der repräsentierten Person. Zur Vereinfachung wird beispielsweise mit generischen Avataren gearbeitet. Ebenso ist es möglich individualisierte oder generische Avatare mit bestimmten charakteristischen Gemeinsamkeiten zu implementieren. Bei den entsprechenden charakteristischen Gemeinsamkeiten kann es sich beispielsweise um körperliche Merkmale, wie etwa Hautfarbe, Haarfarbe, Augenfarbe, Physiognomie etc. handeln. Zur Individualisierung von Avataren können beispielsweise 3D-Scans der Gesichter der Besatzungsmitglieder des Wasserfahrzeugs erstellt werden, sodass jedem der Besatzungsmitglieder jeweils ein individueller Avatar mit den nachmodellierten Gesichtszügen des entsprechenden Besatzungsmitglieds zugeordnet werden kann. Aufgrund der räumlichen Enge in einem Wasserfahrzeug kann gerade die Interaktion zwischen beteiligten Besatzungsmitgliedern wichtig sein. Damit ein Besatzungsmitglied schnell zu einem Ort einer Handlung gelangen kann ist regelmäßig das Passieren weiterer Besatzungsmitglieder notwendig. Um somit ein positives Trainingsergebnis zu erreichen, kann eine virtuelle Simulation bzw. Wiedergabe aller Besatzungsmitglieder, welche sich in der virtuellen Realität befinden, zweckdienlich sein.

Eine Zugangsvorrichtung zum Eintritt in die virtuelle Realität dient hierbei zur Darstellung der in der virtuellen Realität erzeugten Bereiche des militärischen Wasserfahrzeuges und verfügt über Eingabevorrichtung zur Manipulation von Elementen der in der virtuellen Realität erzeugten Bereiche des militärischen Wasserfahrzeuges. Beispielsweise kann die Darstellung der virtuellen Realität über einen Bildschirm, etwa einer Computerkonsole oder eines mobilen tragbaren Endgeräts oder eine entsprechende Datenbrille erfolgen. Beispielsweise kann es sich bei einer solchen Datenbrille um eine VR-Brille mit Headset sowie Motion-Capture-System und/oder Controller handeln. Beispielsweise kann es sich bei einer solchen Datenbrille um eine AR-Brille mit Headset sowie Motion-Capture-System und/oder Controller handeln. Eingaben zur Manipulation der virtuellen Realität können beispielsweise per Tastatur, Maus, Joystick, Controller, Gestenerkennungsvorrichtung, Spracherkennungsvorrichtung oder Motion-Capture-Vorrichtung erfolgen. Eine entsprechende Zugangsvorrichtung umfasst beispielsweise wenigstens eine Wiedergabevorrichtung und eine Eingabevorrichtung. Beispielsweise weist eine Zugangsvorrichtung zusätzlich eine akustische Kommunikationsvorrichtung auf, welche beispielsweise ein Mikrophon und ein oder mehrere Kopfhörer umfasst. Eine entsprechende akustische Kommunikationsvorrichtung ermöglicht es den Besatzungsmitgliedern, welche die Zugangsvorrichtungen nutzen, untereinander und mit anderen an dem Training teilnehmenden Besatzungsmitgliedern in anderen Simulationsumgebungen des Simulationssystems, etwa der ersten Gruppe von Besatzungsmitgliedern, zu kommunizieren.

Unter Eintritt in die virtuelle Realität wird hier das Benutzen einer entsprechenden Zugangsvorrichtung verstanden. Im einfachsten Fall kann der Eintritt in die virtuelle Realität beispielsweise durch das Aufsetzen und Aktivieren einer entsprechenden Datenbrille, dem Aufsetzen und Aktivieren eines entsprechenden Headsets, einem Aufnehmen und Aktivieren eines entsprechenden mobilen Endgeräts und/oder einem Aufrufen einer visuellen Wiedergabe der virtuellen Realität an einem Desktop-PC oder einer entsprechenden Computerkonsole erfolgen.

Nach Ausführungsformen handelt es sich bei den Kopien der zweiten Steuerelemente jeweils um ein vollständiges virtuelles 3D-Modell des entsprechenden zweiten Steuerelements. Die technischen Mittel der zweiten Simulationsumgebung zum Bereitstellen der Kopien der zweiten Steuerelemente umfassen ein oder mehrere Ausgabegeräte mit ein der mehreren Displays zur visuellen Ausgabe der virtuellen 3D-Modelle sowie ein oder mehrere Eingabegeräte zur virtuellen Simulation einer Bedingung der virtuellen 3D-Modelle.

Ausführungsformen können den Vorteil haben, dass es sich bei den virtuellen Kopien der zweiten Steuerelemente um vollständig virtuelle 3D-Modell handelt. In diesem Fall erfolgt eine Einstellung der entsprechenden virtuellen Kopien der zweiten Steuerelemente ausschließlich im virtuellen Raum unter Verwendung von technischen Mitteln. Bei den technischen Mitteln kann es sich beispielsweise um einen Desktop-PC mit entsprechenden Eingabe- und Ausgabemitteln handeln. Ein Nutzer kann an dem entsprechenden Desktop-PC beispielsweise mittels der Eingabemittel, etwa einer Tastatur, Joystick und/oder Controller, einen Avatar in Simulation steuern, welcher die vollständige virtuelle Umgebung des entsprechenden Steuerelements betätigt. Die virtuelle Umgebung, insbesondere das vollständige virtuelle 3D-Modell des entsprechenden Steuerelements, wird dem entsprechenden Besatzungsmitglied beispielsweise auf einem Bildschirm des Desktop-PCs angezeigt. Ferner kann es sich bei den technischen Mitteln beispielsweise um ein Tablet oder ein anderes mobiles tragbares Endgerät handeln, welches sowohl Eingabe- als auch Ausgabemittel umfasst. Mittels der entsprechenden Eingabe- und Ausgabemittel des mobilen tragbaren Endgeräts, etwa in Form eines Touchscreens, kann ein Besatzungsmitglied einen Avatar in der virtuellen Umgebung steuern, welcher das ersten physische Steuerelement betätigt. Beispielsweise umfassen die technischen Mittel eine Datenbrille, etwa eine VR-Brille, welche ein Ausgabegerät darstellt, mittels dessen ein Besatzungsmitglied die virtuelle Simulation mit dem vollständigen virtuellen 3D-Modell des entsprechenden Steuerelements angezeigt wird. Ein die Datenbrille nutzendes Besatzungsmitglied kann einen Avatar innerhalb der virtuellen Simulation durch Gesten und/oder zusätzliche Controller steuern. Die entsprechenden Gesten können beispielsweise mittels digitaler Kameras erfasst und als Eingaben interpretiert werden.

Nach Ausführungsformen umfassen die technischen Mittel der zweiten Simulationsumgebung zum Bereitstellen der Kopien der zweiten Steuerelemente ein oder mehrere taktile Elemente zum physischen Nachstellen haptischer Eigenschaften der ein oder mehreren zweiten Steuerelemente. Die technischen Mittel umfassen ferner ein oder mehrere Augmented-Reality-Geräte, welche dazu konfiguriert sind, zu den taktilen Elementen jeweils ergänzende Bestandteile der entsprechenden zweiten Steuerelemente in virtueller Form bereitzustellen. Die ein oder mehreren Augmented-Reality-Geräte umfassen jeweils ein oder mehrere Displays zur visuellen Ausgabe der ergänzenden virtuellen Bestandteile der Kopien der zweiten Steuerelemente sowie ein oder mehrere Sensoren zum Erfassen von Interaktionen der Besatzungsmitglieder der zweiten Gruppe von Besatzungsmitgliedern, welche die ein oder mehreren Augmented-Reality-Geräte nutzen, mit den taktilen Elementen und/oder den ergänzenden virtuellen Bestandteilen im Zuge einer Bedingung der Kopien der zweiten Steuerelemente.

Ausführungsformen können den Vorteil haben, dass es sich bei der virtuellen Kopie des zweiten Steuerelements nicht um eine rein virtuelle Kopie handelt. Vielmehr wird ein taktiles Element bereitgestellt, welches den Vorteil hat, dass physisch haptische Eigenschaften des entsprechenden zweiten Steuerelements nachgestellt werden. Somit kann ein Besatzungsmitglied, welches die teilweise virtuelle Kopie des zweiten Steuerelements betätigen möchte, nicht nur auf eine korrekte theoretische Betätigung des zweiten Steuerelements, sondern auch hinsichtlich der haptischen Eigenschaften auf eine entsprechende Betätigung trainiert werden.

Ein solches taktiles Element ermöglicht es einen händischen Umgang mit dem entsprechenden zweiten Steuerelement zu trainieren. Das taktile Element ist beispielsweise zu drehen, umzulegen und/oder umfasst zwei Teile, welche auseinander- und/oder zusammengeschraubt werden müssen. Hierbei geht es um das konkrete händische Training an dem taktilen Element, um die konkreten Handgriffe durch praktisches Tun einfach und effizient zu trainieren.

Bei einem taktilen Element kann es sich beispielsweise um eine mechanische Vorrichtung handeln, welche eine mechanische Komponente eines zweiten physischen Steuerelements nachbildet, beispielsweise einen Hebel, einen Schalter, ein Handrad oder dergleichen. Dieses taktile Element weist in der zweiten Simulationsumgebung beispielsweise keine Funktionalität auf. In der physischen Realität der zweiten Simulationsumgebung führt die Betätigung des taktilen Elements beispielsweise zu keiner Eingabe. Die Verwendung des taktilen Elements führt beispielsweise zu einer Eingabe in der virtuellen Realität. Beispielsweise verfügen militärische Wasserfahrzeuge regelmäßig Vorrichtungen zum händischen Bedienen mechanischer Komponenten des Wasserfahrzeugs, wie etwa Handräder. Ein solches Handrad kann beispielsweise als taktiles Element verwendet werden und führt in der virtuellen Realität dazu, dass das Verhalten des Wasserfahrzeugs entsprechend der Einstellung des Handrads simuliert wird. Gleichzeitig führt das Verwenden eines realen mechanischen Handrads dazu, dass das zu trainierende Besatzungsmitglied eine haptische Erfahrung während des Trainings macht, eine Vorstellung für die benötigte Kraft entwickelt und gegebenenfalls seine händischen Fähigkeiten zur schnellen Durchführung der Aufgabe optimieren kann. Vorteilhaft kann sein, wenn das taktile Element, beispielsweise ein Handrad, eine vergleichbare Form, Haptik und/oder Widerstand aufweist, den auch das reale zweite Steuerelement in dem realen Wasserfahrzeug aufweist. Hierbei kommt es nicht notwendiger auf Exaktheit an, sondern darauf, dass das Besatzungsmitglied ein intuitives Gefühl dafür entwickeln kann, wie sich das entsprechende zweite Steuerelement und dessen Betätigung anfühlt, etwa wie viel Kraft zur Betätigung aufzuwenden ist.

Dies kann insbesondere für das Training von Stresssituationen relevant sein, in welchen es nicht nur darum geht, zu wissen, wie ein entsprechendes zweites Steuerelement zu betätigen ist, sondern auch die tatsächliche physische Betätigung zu trainieren. Die entsprechende physische Betätigung sollte motorisch durch das Besatzungsmitglied abgespeichert werden, sodass bei einer tatsächlichen Abweichung von dem Normalbetrieb des Wasserfahrzeugs, etwa im Zuge einer Fehlfunktion des Wasserfahrzeugs, unter hohem Stress die abgespeicherten motorischen Erfahrungen lediglich abgerufen müssen und somit ohne Nachdenken die richtigen Handgriffe intuitiv anwendet werden. Diese Fähigkeiten können insbesondere in gefährlichen und für die Besatzungsmitglieder stressigen Situationen, wie etwa einem Gefecht, insbesondere im Fall eines Treffers des Wasserfahrzeugs, von großer Bedeutung für die Sicherheit des Wasserfahrzeugs sowie die Besatzungsmitglieder an Bord des Wasserfahrzeugs sein.

Ein entsprechendes taktiles Element kann in die Simulation unter Verwendung von Augmented-Reality-Geräten eingebunden werden. Die entsprechenden Augmented-Reality-Geräte können beispielsweise von den technischen Mitteln der zweiten Simulationsumgebung bereitgestellt werden. Diese Geräte können dazu konfiguriert sein, die taktilen Elemente durch zusätzliche Bestandteile in virtueller Form zu ergänzen. Beispielsweise kann virtuell der Hintergrund und/oder die Umgebung des entsprechenden zweiten Steuerelements ergänzt werden, sodass das entsprechende Besatzungsmitglied darauf trainiert wird, das zu betätigende zweite Steuerelement in einer komplexen technischen Umgebung mit einer Vielzahl von technischen Komponenten schnell zu erkennen. Die tatsächliche Betätigung des entsprechenden zweiten Steuerelements kann dann durch das taktile Element auch physisch trainiert werden. Ferner können die ergänzenden Bestandteile beispielsweise Hinweise anzeigen und/oder Komponenten des zu betätigenden zweiten Steuerelementes visuell ergänzen, welche das taktile Element nicht umfasst. Die ergänzenden virtuellen Bestandteile können auf Displays der Augmented-Reality-Geräte bereitgestellt und mit dem taktilen Element überlagert werden. Beispielsweise umfassen die Augmented-Reality-Geräte eine Datenbrille mit einem semitransparenten Display, wodurch ergänzende Bestandteile in virtueller Form angezeigt. Mit diesen ergänzenden virtuellen Bestandteilen kann das durch das semitransparente Display sichtbare taktile Element visuell überlagert und/oder ergänzt werden.

Unter einer Augmented Reality, d.h. einer erweiterten Realität, wird hier eine computergestützte Erweiterung der Realitätswahrnehmung verstanden. Die Erweiterung der Realitätswahrnehmung kann grundsätzlich alle menschlichen Sinnesmodalitäten ansprechen. Im vorliegenden Fall wird aber zumindest die visuelle Wahrnehmung angesprochen, etwa durch eine visuelle Darstellung von Informationen, etwa die Ergänzung der Wahrnehmung von realen Objekten oder von Bildern oder Videos der entsprechenden realen Objekte mit computergenerierten virtuellen Zusatzinformationen und/oder virtuellen Objekten mittels Einblendung/Überlagerung.

Beispielsweise betrifft die Erweiterung der Realitätswahrnehmung eine Erweiterung der Wahrnehmung der physischen Wirklichkeit/Umgebung ohne elektronische Signalverarbeitung auf natürliche Weise in der Analogwelt. Beispielsweise werden Sinneswahrnehmungen wie Bilder allenfalls durch klassische Hilfsmittel, wie eine Vergrößerungsoptik oder einen Spiegel, abgebildet. Virtuelle Informationen, wie Bilder/Objekte, können auf unterschiedliche Art eingeblendet, etwa durch eine optische Projektion auf eine durchsichtige Scheibe, durch welche auch die entsprechenden natürlichen physischen Objekte betrachtet werden. Virtuelle Informationen werden beispielsweise mittels einer auf einer Sichtfläche, etwa einem Glas einer Datenbrille, integrierte elektrooptische Anzeige mit durchsichtigen Bereichen und zusätzlich virtuell eingeblendeten Informations- und/oder Bildteilen dargestellt. Dies kann beispielsweise mit einer Flüssigkristallanzeige realisiert werden, welche im Grundzustand weitgehend durchsichtig ist und in aktivierten Bereichen die virtuellen Elemente einblendet.

Beispielsweise betrifft die Erweiterung der Realitätswahrnehmung eine Erweiterung der Wahrnehmung der physischen Wirklichkeit/Umgebung, welche einer photoelektrischen Umwandlung einer elektronischen Signalverarbeitung unterworfen ist, bevor sie über eine künstliche Wiedergabe wahrgenommen wird. In diesem Fall erfolgt eine Kombination/Überlagerung der Wiedergabe von Sinneswahrnehmungen mit virtuellen Elementen ausschließlich auf elektronische Weise. Dazu werden Sensordaten, etwa einer Digitalkamera mittels Signalverarbeitung durch softwaregesteuerte Prozessoren aufbereitet, um dann durch einen Ausgangswandler, etwa eine wie Anzeige/Bildschirm, kombiniert wiedergegeben zu werden.

Ein Augmented-Reality-Gerät ist somit ein Gerät, welches dazu konfiguriert ist, Objekte der realen Welt in Echtzeit mit Informationen und/oder Projektionen von digitalen Objekten zu versehen und/oder überlagern, während die entsprechenden Objekte der realen Welt von einem Nutzer des Augmented-Reality-Geräts wahrgenommen werden. Auf diese Weise wird die Wahrnehmung des Nutzers von Objekten der realen Welt durch Informationen und/oder Projektionen digitaler Objekte erweitert. So kann ein Augmented-Reality-Gerät dazu konfiguriert sein, Folgendes zu implementieren und/oder zu verwenden: eine Kombination von Objekten der realen Welt mit virtuellen Informationen und/oder virtuellen Objekten, eine Echtzeit-Interaktion in Form einer Echtzeit-Anpassung von Informationen und/oder digitalen Objekten an Veränderungen der Objekte der realen Welt und/oder an Veränderungen der Wahrnehmung von Objekten der realen Welt, und eine 3D-Registrierung von virtuellen Objekten mit Objekten der realen Welt. Die virtuellen Informationen und/oder virtuellen Objekte, mit denen die realen Objekte überlagert werden, können konstruktiv sein, zum Beispiel indem sie zu den realen Objekten hinzugefügt werden, oder destruktiv, zum Beispiel indem sie zumindest einen Teil der realen Objekte verdecken. Die virtuellen Informationen und/oder virtuellen Objekte können beispielsweise nahtlos mit der Rezeption der Objekte der realen Welt, d.h. der physischen Objekte der physischen Welt, verwoben werden, so dass sie von dem Nutzer als ein immersiver Aspekt der realen Welt wahrgenommen werden. Auf diese Weise kann ein Augmented-Reality-Gerät die laufende Wahrnehmung einer realen Umgebung durch den Nutzer verändern. Dabei wird die reale Umgebung des Nutzers nicht vollständig durch eine simulierte digitale Umgebung ersetzt, wie es bei einer virtuellen Realität der Fall ist. Die reale Umgebung, d.h. die Wahrnehmung der realen Umgebung durch den Nutzer, wird vielmehr mit virtuellen Informationen und/oder virtuellen Objekten angereichert.

Ein Augmented-Reality-Gerät ermöglicht es beispielsweise Komponenten der virtuellen Welt in die Wahrnehmung der realen Welt durch den Nutzer einzublenden. Dies kann eine Integration von immersiven Sinneseindrücken umfassen, die vom Nutzer als natürliche Teile der wahrgenommenen Umgebung wahrgenommen werden. Augmented-Reality-Technologie kann beispielsweise verwendet werden, um die Wahrnehmung der physischen Umgebung durch den Nutzer mit virtuellen Informationen und/oder virtuellen Objekten zu erweitern, die dem Nutzer eine verbesserte Wahrnehmung ermöglichen. Mit Hilfe von Augmented Reality-Technologien können Informationen über die reale Umgebung des Nutzers interaktiv und virtuell manipuliert werden. Virtuelle Informationen über die Umgebung und ihre Objekte können in die reale Welt eingeblendet werden. Erweiterungsverfahren können in Echtzeit und in semantischem Zusammenhang mit physischen Objekten in der Umgebung durchgeführt werden.

Ein Augmented-Reality-Gerät kann beispielsweise ein am Kopf montiertes Display, eine Datenbrille, ein Head-up-Display, eine Kontaktlinse, ein virtuelles Netzhautdisplay, ein Eye-Tap oder ähnliches umfassen. Ein Head-Mounted-Display (HMD) ist ein Anzeigegerät, das auf der Stirn getragen wird, etwa mittels eines Gurts oder eines Helms. Ein HMD ist so konfiguriert, dass es sowohl Bilder der physischen Welt als auch virtuelle Informationen und/oder virtueller Objekte im Sichtfeld des Nutzers anzeigt. Das HMD kann beispielsweise Sensoren zur Überwachung von sechs Freiheitsgraden verwenden, die es dem System ermöglichen, virtuelle Informationen mit der physischen Welt abzugleichen und entsprechend den Kopfbewegungen des Nutzers anzupassen.

Ein Augmented-Reality-Gerät kann zum Beispiel eine Datenbrille umfassen, wobei eine Augmented-Reality-Anzeigen auf der Brille dargestellt wird. Das Augmented-Reality-Gerät kann eine Datenbrille umfassen, die ein oder mehrere Digitalkameras einsetzt, um die reale Sicht des Nutzers abzufangen und eine erweiterte (augmented) Darstellung durch ein Okular wieder anzuzeigen. Das Augmented-Reality-Gerät kann zum Beispiel Augmented-Reality-Bilder durch ein Brillenglas projizieren oder von einer Oberfläche des Brillenglases reflektieren.

Beispielsweise und insbesondere wird als Augmented-Reality-Gerät eine Datenbrille verwendet, welche eine direkte Sicht auf die Umgebung ermöglicht und zusätzlich Elemente virtuell in die Umgebung einblendet. Beispielsweise werden dann virtuelle Teile der zweiten Steuerelemente in die reale Umgebung der zweiten Simulationsumgebung über die entsprechende Datenbrille projiziert. Ferner wird beispielsweise die Umgebung des militärischen Wasserfahrzeugs, in welcher das entsprechende zweite Steuerelement angeordnet ist, in die reale Umgebung der zweiten Simulationsumgebung projiziert. Beispielsweise können auch Avatare weiterer an dem Training teilnehmender Besatzungsmitglieder in die reale Umgebung der zweiten Simulationsumgebung projiziert werden. Beispielsweise ermöglicht ein halbdurchlässiger Spiegel als Brille die Sicht auf die Umgebung und auf ein Display, welches die zusätzlichen Elemente der virtuellen Realität darstellt. Alternativ kann die Datenbrille auch eine Digitalkamera aufweisen, welche die Umgebung erfasst, in die Aufnahmebilder dann diese zusätzlichen Elemente der virtuellen Realität hineinrechnet und das Gesamtbild dann dem die entsprechende Datenbrille nutzenden Besatzungsmitglied darstellt.

Ein Augmented-Reality-Gerät kann zum Beispiel ein Head-up-Display (HUD) umfassen. Ein HUD ist ein transparentes Display, das Daten anzeigt, ohne dass der Nutzer seinen Blick von seinem gewohnten Standpunkt abwenden muss.

Ein Augmented-Reality-Gerät kann zum Beispiel eine Kontaktlinse umfassen, die Augmented-Reality-Bilder anzeigt. Eine solche bionische Kontaktlinse kann ein in die Linse eingebettetes Anzeigeelement mit integrierten Schaltkreisen, LEDs und einer Antenne für eine drahtlose Kommunikation umfassen.

Ein Augmented-Reality-Gerät kann zum Beispiel eine virtuelle Netzhautanzeige (VRD) umfassen. Das Augmented-Reality-Gerät kann so konfiguriert sein, dass es eine Anzeige direkt auf die Netzhaut des Auges eines Nutzers scannt.

Ein Augmented-Reality-Gerät kann zum Beispiel ein monokelartiges, am Kopf befestigtes Display umfassen, das vor einem Auge getragen wird und die Funktionen einer Digitalkamera und eines Displays kombiniert. Lichtstrahlen, die andernfalls durch die Mitte der Linse des Auges des Nutzers fallen würden, können eingefangen und durch synthetisches, computergesteuertes Licht für jeden echten Lichtstrahl ersetzt werden.

Nach Ausführungsformen umfassen die ein oder mehreren ersten Steuerelemente ein oder mehrere Ventile, Schalter und/oder berührungssensitive Elemente des Wasserfahrzeugs. Nach Ausführungsformen umfassen die ein oder mehreren zweiten Steuerelemente ein oder mehrere Ventile, Schalter und/oder berührungssensitive Elemente des Wasserfahrzeugs.

Nach Ausführungsformen umfassen die ein oder mehreren ersten Steuerelemente jeweils eine mechanisch betätigbare Komponente. Nach Ausführungsformen umfassen die ein oder mehreren zweiten Steuerelemente jeweils eine mechanisch betätigbare Komponente.

Beispielsweise handelt es sich bei einem ersten und/oder zweiten Steuerelement um ein Ventil oder einen Schalter mit einem elektrischen Antrieb, der per Automationssystem über den Leitstand in der ersten Simulationsumgebung und/oder über eine virtuelle Simulation des Leitstands in der zweiten Simulationsumgebung bedient werden kann. Als Rückfallmöglichkeit bei einem Ausfall oder einer Funktionsstörung des elektrischen Antriebs umfasst das Ventil oder der Schalter eine Vorrichtung zur händischen Betätigung. Beispielsweise umfasst das Ventil ein Handrad, welches direkt auf das Getriebe des Ventils geht und eine Betätigung des Ventils per Hand ermöglicht. Beispielsweise lässt sich der Schalter mechanisch per Hand umlegen. Beispielsweise umfasst das entsprechende erste und/oder zweite Steuerelement einen Hebel, welcher sich mechanisch per Hand umlegen lässt.

Nach Ausführungsformen umfasst die erste Simulationsumgebung eine physische Operationszentrale des Wasserfahrzeugs. Nach Ausführungsformen umfasst die erste Simulationsumgebung eine physische Brücke des Wasserfahrzeugs.

Nach Ausführungsformen ist in dem Speicher der Simulationsschnittstelle ferner eine zweite Datenbank mit Definitionen der ein oder mehreren ersten Steuerelemente und der ein oder mehrere Kopien der ein oder mehreren zweiten Steuerelemente gespeichert. Die Definitionen für die definierten ersten Steuerelemente und Kopien der zweiten Steuerelemente legen jeweils eine Erstpriorisierung für einen simulierten Normalbetrieb des Wasserfahrzeugs fest, in welcher die Einstellungen der Steuerparameter gemäß den ersten physischen Steuerelementen gegenüber den Einstellungen gemäß den Kopien der zweiten Steuerelemente als für die Simulation des Wasserfahrzeugs ausschließlich gültige Einstellungen der Steuerparameter priorisiert werden. Die Simulationsschnittstelle des Simulationssystems ist ferner dazu konfiguriert, auf eine simulierte Abweichung von dem Normalbetrieb des Wasserfahrzeugs hin, von ein oder mehreren der Erstpriorisierungen zu ein oder mehrere Zweitpriorisierungen zu wechseln. Die ein oder mehreren Zweitpriorisierungen priorisieren für die simulierte Abweichung von dem Normalbetrieb Einstellungen ein oder mehrerer der Steuerparameter gemäß ein oder mehreren den Zweitpriorisierungen zugeordneten Kopien der zweiten Steuerelemente gegenüber Einstellungen gemäß ein oder mehreren den Zweitpriorisierungen zugeordneten ersten physischen Steuerelemente als für die Simulation des Wasserfahrzeugs ausschließlich gültige Einstellungen der entsprechenden Steuerparameter.

Ausführungsformen können den Vorteil haben, dass ein Simulationssystem zum zeitgleichen Trainieren einer Mehrzahl von Besatzungsmitgliedern eines militärischen Wasserfahrzeugs, beispielsweise unter möglichst realistischen Bedingungen, zur Verfügung gestellt wird. Dabei werden insbesondere nicht nur einzelne Besatzungsmitglieder, sondern das Zusammenwirken der Mehrzahl von Besatzungsmitgliedern trainiert. Bei dieser Mehrzahl von Besatzungsmitgliedern kann es sich insbesondere um Besatzungsmitglieder handeln, welche in verschiedenen Bereichen des militärischen Wasserfahrzeugs eingesetzt werden.

Das Simulationssystem umfasst eine erste Simulationsumgebung zum Trainieren einer ersten Gruppe von Besatzungsmitgliedern sowie eine zweite Simulationsumgebung zum Trainieren einer zweiten Gruppe von Besatzungsmitgliedern. Die erste Simulationsumgebung umfasst einen physischen Leitstand des Wasserfahrzeugs. Bei dem Leitstand handelt es sich um eine technische Einrichtung zum Betrieb des militärischen Wasserfahrzeugs. Der Leitstand umfasst beispielsweise den Steuerstand, über welchen sich für den Betrieb des Wasserfahrzeugs wesentliche Funktionen steuern und regeln lassen. Beispielsweise umfasst der Steuerstand eine Mehrzahl an navigatorischen Instrumenten, technischen Bedienelementen und/oder Komponenten. Hierüber kann das militärische Wasserfahrzeug beispielsweise manövriert und sein Betrieb gesteuert werden. Zudem umfasst der Leitstand beispielsweise taktische Einrichtungen zur Steuerung von Waffensystemen des militärischen Wasserfahrzeugs.

Nach Ausführungsformen stellen ein oder mehrere der von der ersten Datenbank umfassten Schadensszenarien bei einem Ausführen im Zuge des simulierten Betriebs des Wasserfahrzeugs jeweils eine Abweichung von dem Normalbetrieb des Wasserfahrzeugs dar. Ausführungsformen können den Vorteil haben, dass durch Gefechtstreffer hervorgerufene Schadenszenarien und deren Einfluss auf den Betrieb des Wasserfahrzeugs mitberücksichtigt werden können.

Die erste Simulationsumgebung umfasst ein oder mehrere erste physische Steuerelemente des Wasserfahrzeugs, welche jeweils dazu konfiguriert sind, einen Steuerparameter für den Betrieb des Wasserfahrzeugs einzustellen. Bei entsprechenden ersten physischen Steuerelementen handelt es sich beispielsweise um Ventile oder Schalter. Die ersten Steuerelemente umfassen dabei beispielsweise mechanische Komponenten, welche mechanische Einstellungen der entsprechenden ersten Steuerelemente ermöglichen. Aus den Einstellungen der entsprechenden ersten Steuerelemente ergibt sich damit ein physischer Zustand derselben, welcher der Einstellung entspricht. Beispielsweise sind ein oder mehrere der ersten Steuerelemente so konfiguriert, dass die mechanischen Komponenten sowohl elektrisch, etwa unter Ansteuerung eines elektrischen Motors, als auch händisch bedient werden können. Dies hat in realen militärischen Wasserfahrzeugen den Vorteil, dass einerseits eine effektive zentrale elektronische Ansteuerung der entsprechenden ersten Steuerelemente ermöglicht wird und andererseits selbst bei einer elektrischen Störung stets weiterhin eine manuelle Betätigung der entsprechenden mechanischen Komponenten möglich ist. Beispielsweise umfasst der Leitstand in der ersten Simulationsumgebung als erstes Steuerelement ein Bedienelement zur Ansteuerung der entsprechenden elektrisch bedienbaren Komponente. Bei entsprechenden ersten physischen Steuerelementen handelt es sich beispielsweise um Bedienelemente einer Konsole des Leitstands, wie etwa ein Touch-Display, einen Trackball und/oder ein oder mehrere Tasten. Bei einem zweiten Steuerelement kann es sich beispielsweise um eine entsprechende mechanisch bedienbare Komponente handeln.

Der Leitstand ist dazu konfiguriert, mittels der ersten physischen Steuerelemente eingestellte Steuerparameter zu erfassen und an eine Simulationsschnittstelle des Simulationssystems zu kommunizieren. Die entsprechend eingestellten Steuerparameter erlauben eine Simulation des Betriebs des Wasserfahrzeugs basierend auf den entsprechenden Steuerparametern. Beispielsweise kann ein Simulationscomputersystem, welches Zugriff auf die Simulationsschnittstelle besitzt oder die Simulationsschnittstelle umfasst, einen aktuellen Zustand des Wasserfahrzeugs berechnen unter Verwendung eines Zustandssimulationsprogramms, eines digitalen Modells des Wasserfahrzeugs und der eingestellten Steuerparameter.

Einstellungen der ersten physischen Steuerelemente in der ersten Simulationsumgebung werden beispielsweise erfasst bzw. eingelesen, damit deren Effekt auf den Zustand des militärischen Wasserfahrzeugs simuliert und beispielsweise in der virtuellen Realität wiedergegeben werden kann.

Ferner umfasst das Simulationssystem eine von der ersten Simulationsumgebung räumlich getrennte zweite Simulationsumgebung zum Trainieren einer zweiten Gruppe von Besatzungsmitgliedern. Die zweite Gruppe von Besatzungsmitgliedern wird beispielsweise für den Einsatz in anderen Bereichen des militärischen Wasserfahrzeugs als dem Leitstand trainiert. Hierbei kann es sich beispielsweise um einen Maschinenraum, Elektronikgeräteraum, Batterieraum, Torpedoraum, Kombüse, Wohnbereich, und/oder andere Bereiche des Wasserfahrzeugs handeln. Für das entsprechende Training umfasst die zweite Simulationsumgebung technische Mittel, welche dazu konfiguriert sind, eine visuelle Simulation bereitzustellen, welche ein oder mehrere zumindest teilweise virtuelle Kopien zweiter Steuerelement zum Einstellen von Steuerparameters umfasst. Bei der visuellen Simulation kann es sich beispielsweise um eine Simulation handeln, welche neben den anderen Bereichen des militärischen Wasserfahrzeugs auch den Leitstand umfasst. Beispielsweise umfasst die virtuelle Simulation das gesamte militärische Wasserfahrzeug.

Da es technisch beispielsweise schwierig ist, ein vollständiges militärisches Wasserfahrzeug, wie etwa ein Unterseeboot, für Trainingszwecke auf einer beweglich gelagerten Plattform bereitzustellen, ermöglicht es eine Verwendung einer ersten Simulationsumgebung, welche auf einer entsprechend beweglich gelagerten Plattform angeordnet ist, sowie einer von der ersten Simulationsumgebung unabhängig angeordneten zweiten Simulationsumgebung, dass zumindest ausgewählte Bereiche des militärischen Wasserfahrzeugs auf einer beweglich gelagerten Plattform bereitgestellt werden können, welche Bewegungen des militärischen Wasserfahrzeugs im Zuge des simulierten Betriebs nachahmt.

Die zweite Simulationsumgebung ist beispielsweise nicht auf einer beweglich gelagerten Plattform angeordnet. Alternativerweise kann die zweite Simulationsumgebung beispielsweise ebenfalls auf einer zweiten beweglich gelagerten Plattform angeordnet sein, wobei an der zweiten Plattform eine Mehrzahl von hydraulischen, pneumatischen oder elektrischen Aktoren angeordnet sind. Eine Bewegungssteuerung der zweiten Plattform kann die Aktoren ansteuern, um Bewegungen des Wasserfahrzeugs im Zuge des simulierten Betriebs nachzuahmen.

Beispielsweise ermöglicht es die visuelle Simulation den Besatzungsmitgliedern der zweiten Gruppe Tätigkeiten in ein oder mehreren Bereichen des Wasserfahrzeugs zu trainieren. Bei der entsprechenden visuellen Simulation kann es sich beispielsweise um eine vollständige virtuelle Simulation handeln, bei welcher das trainierende Besatzungsmitglied einen Avatar in der virtuellen Umgebung des Wasserfahrzeugs steuert. Beispielsweise handelt es sich bei der visuellen Simulation um eine Mischung aus virtueller Simulation und realen Gegebenheiten. Hierzu umfassen die technischen Mittel beispielsweise Augmented-Reality-Geräte. Beispielsweise sind physische Komponenten und/oder physische Nachbildungen und/oder physische Attrappen von Komponenten des Wasserfahrzeugs in der zweiten Simulationsumgebung angeordnet, welche mit virtuellen Elementen ergänzt werden, sodass sich für das trainierende Besatzungsmitglied aus der Kombination von physisch vorhandenen Komponenten und virtuellen Ergänzungen ein Gesamtbild, d.h. eine visuelle Simulation, ergibt, welche mit den jeweiligen Bereichen des Wasserfahrzeugs übereinstimmt, in welchem das entsprechende Besatzungsmitglied seine Fähigkeiten trainieren soll.

Bei einem militärischen Wasserfahrzeug kann sich für die zu trainierenden Besatzungsmitglieder die Notwendigkeit ergeben, nicht nur an einer Station des Wasserfahrzeugs, d.h. in einem Bereich des Wasserfahrzeugs, zu trainieren. Insbesondere im Falle von Abweichung von dem Normalbetrieb, etwa bei Fehlfunktionen des Wasserfahrzeuges, wie beispielsweise in Gefahren- und/oder Notsituationen, kann ein Einsatz von Besatzungsmitgliedern auch an Orten außerhalb ihres eigentlichen Arbeitsbereichs erforderlich werden. Zu solchen Gefahren- und/oder Notsituationen kann es insbesondere im Fall eines Treffers des Wasserfahrzeugs während eines Gefechts kommen. Hierzu müssen die Besatzungsmitglieder im Zuge des Trainings üblicherweise an mehrere Orte des Wasserfahrzeugs gelangen können. Im Falle eines Trainings unter Verwendung einer Mehrzahl von räumlich getrennten Simulationsumgebungen, kann sich ein physischer Wechsel von einer Simulationsumgebung in die andere für die Besatzungsmittglieder während des Simulationsbetriebs als umständlich, schwierig oder gar unmöglich erweisen.

Beispielsweise im Falle eines Trainings unter Verwendung einer Mehrzahl von räumlich getrennten Simulationsumgebungen, bei welcher zumindest eine der Simulationsumgebungen auf einer beweglich gelagerten Plattform angeordnet ist, kann sich ein physischer Wechsel von einer Simulationsumgebung in die andere für die Besatzungsmittglieder als schwierig bis unmöglich erweisen. Dies gilt insbesondere während einer laufenden Trainingssimulation. Ein Einstieg in eine auf einer beweglichen Plattform gelagerten Simulationsumgebung kann sich schwierig gestalten. Dies gilt insbesondere, wenn die Plattform, etwa als freistehenden Plattform, in einem nicht zu vernachlässigenden Abstand über den Boden angeordnet ist, um ausreichend Bewegungsfreiraum für die Plattform über dem Boden zu gewährleisten. Solange die Simulation läuft, und gegebenenfalls Bewegungen der Plattform noch nicht beendet sind und/oder gerade beendet werden, kann ein Einstieg aus Sicherheitsgründen nicht möglich sein.

Beispielsweise sind ein oder mehreren der zweiten Steuerelemente mit einem der ersten Steuerelement identisch, d.h. es handelt sich bei ein oder mehreren der Kopien zweiter Steuerelemente um Kopien der entsprechenden ersten Steuerelemente. Tritt nun im Zuge der Simulation eine simulierte Abweichung vom Normalbetrieb auf, welcher es erforderlich macht, dass ein Besatzungsmitglied der zweiten Gruppe etwa ein erstes Steuerelement betätigt, welches die erste Simulationsumgebung in physischer Form umfasst, so kann es dem entsprechenden Besatzungsmitglied aufgrund der räumlichen Trennung und/oder der Anordnung der ersten Simulationsumgebung auf einer beweglich gelagerten Plattform jedoch verwehrt sein, zu dem entsprechenden ersten physischen Steuerelement zu gelangen. Vielmehr muss das entsprechende Besatzungsmitglied zur Betätigung des entsprechenden ersten Steuerelements auf eine zumindest teilweise virtuelle Kopie des entsprechenden ersten Steuerelements innerhalb der zweiten Simulationsumgebung zurückgreifen.

Beispielsweise kann sich im Zuge einer Abweichung von dem Normalbetrieb des Wasserfahrzeugs für die zu trainierenden Besatzungsmitglieder die Notwendigkeit ergeben, einen Steuerparameter für den Betrieb des Wasserfahrzeugs, welcher im Normalbetrieb eigentlich von dem Leitstand aus der Entfernung eingestellt wird, vor Ort einzustellen. Hierzu ist beispielsweise ein Ventil oder ein Schalter manuell vor Ort zu betätigen.

Wenn ein Simulationssystem sowohl physische Steuerelemente als auch zumindest teilweise virtuelle Kopien der entsprechenden Steuerelemente umfasst, welche jeweils dazu konfiguriert sind denselben Steuerparameter für den Betrieb des Wasserfahrzeugs einzustellen, stellt sich die Herausforderung Widersprüche und Inkonsistenzen bezüglich der eingestellten Steuerparameter zu vermeiden.

Ein Steuerelement, etwa ein Ventil, welches als physische Komponente in der ersten Simulationsumgebung angeordnet ist, kann beispielsweise nur dort physisch real betätigt und eingestellt werden, da ansonsten der mechanische bzw. physische Zustand des damit eingestellten Steuerparameters nicht mit dem im Zuge der Trainingssimulation verwendeten Steuerparameter übereinstimmt. Eine entsprechende Änderung des physischen Zustands des Steuerelements kann beispielsweise auf die virtuelle Kopie des entsprechenden Steuerelements in der zweiten Trainingsumgebung übertragen werden, sodass die visuelle Simulation denselben Zustand für die Kopie des physischen Steuerelements wiedergibt, den das physische Steuerelement infolge der Einstellung angenommen hat. Besteht nun die Notwendigkeit, einen Steuerparameter mittels der zumindest teilweisen virtuellen Kopie des entsprechenden Steuerelements einzustellen, kann es zu Widersprüchen zwischen der physischen Einstellung des physischen Steuerelements und der virtuellen Einstellungen der virtuellen Kopie des entsprechenden Steuerelements kommen, wodurch sich Komplikationen für die Simulation des Zustands des Wasserfahrzeugs ergeben können. Wird die Einstellung der zumindest teilweisen virtuellen Kopie eines physischen Steuerelements geändert, übertragt sich diese Änderung nicht auf den physischen Zustand des physischen Steuerelements. Der physische Zustand des physischen Steuerelements widerspricht damit der mittels der Kopie vorgenommenen Einstellung. Im Falle eines Ventils kann etwa die virtuelle Kopie des Ventils geschlossen sein, während das physische Ventil nach wie vor offen ist oder umgekehrt. Im Falle eines Schalters kann die virtuelle Kopie des Schalters beispielsweise umgelegt sein, während der physische Schalter dies nicht ist.

Nach Ausführungsformen umfasst der Speicher der Simulationsschnittstelle beispielsweise ferner eine zweite Datenbank. Diese zweite Datenbank umfasst Definitionen aller Steuerelemente, welche für die entsprechenden Steuerelemente jeweils eine Betriebspriorisierung festlegen, z.B. eine Erstpriorisierung und/oder eine Zweitpriorisierung. Die entsprechende Erstpriorisierung legt für den simulierten Normalbetrieb des Wasserfahrzeugs fest, dass die Einstellungen der Steuerparameter gemäß den ersten physischen Steuerelementen gegenüber den Einstellungen gemäß den Kopien der zweiten Steuerelemente priorisiert werden. Mithin handelt es sich gemäß der Erstpriorisierung bei den Einstellungen der Steuerelemente gemäß den ersten physischen Steuerelementen um die für die Simulation des Wasserfahrzeugs ausschließlich gültigen Einstellungen.

Eine entsprechende Erstpriorisierung kann beispielsweise dadurch umgesetzt werden, dass im simulierten Normalbetrieb ausschließlich die erste Simulationsumgebung bzw. der Leitstand Schreibrechte für erfasste Einstellungen besitzt, während die zweite Simulationsumgebung keine Schreibrechte bezüglich der Steuerparameter mittels der virtuellen Kopien der zweiten Steuerelemente besitzt. Beispielsweise besitzt die zweite Simulationsumgebung im simulierten Normalbetrieb des Wasserfahrzeugs lediglich Leserechte zum Lesen der durch die ersten physischen Steuerelemente eingestellten Steuerparameter. Basierend auf diesen Leserechten vermag es die zweite Simulationsumgebung bzw. die technischen Mittel der zweiten Simulationsumgebung die aktuell gültigen mittels der ersten physischen Steuerelemente eingestellten Steuerparameter zu lesen und gegebenenfalls einen Zustand virtueller Kopien von zweiten Steuerelemente, welche zur Steuerung derselben Steuerparameter eingestellt sind, entsprechend anzupassen. Beispielsweise ahmen die Zustände Kopien der zweiten Steuerelemente so die Zustände der ersten physischen Steuerelemente nach. Beispielsweise kann die Anpassung des Zustands virtueller Kopien der zweiten Steuerelemente auch zentral erfolgen.

Ferner ist die Simulationsschnittstelle dazu konfiguriert, auf eine simulierte Abweichung von dem Normalbetrieb des Wasserfahrzeugs hin von den Erstpriorisierungen zu ein oder mehreren Zweitpriorisierungen zu wechseln. Eine Zweitpriorisierung legt für die simulierte Abweichung von dem Normalbetrieb fest, dass die Einstellungen der Steuerparameter gemäß den virtuellen Kopien der zweiten Steuerelemente als für die Simulation des Wasserfahrzeugs ausschließlich gültige Einstellungen der Steuerparameter priorisiert werden. Im Falle einer entsprechenden Abweichung vom Normalbetrieb erfolgt die Simulation des Zustands des Wasserfahrzeugs somit nicht mehr basierend auf den mittels die ersten physischen Steuerelemente eingestellten Steuerparameter, sondern vielmehr auf Basis der mittels der virtuellen Kopien der zweiten Steuerelemente eingestellten Steuerparameter.

Ein Wechsel von ein oder mehreren Erstpriorisierungen hin zu entsprechenden Zweitpriorisierungen kann beispielsweise ausgelöst werden durch die Simulation des Zustands des Wasserfahrzeugs, welcher beispielsweise einer Abweichung von dem normalbetrieb entspricht, die eine Einstellung von ein oder mehreren Steuerparametern mittels der Kopien der zweiten Steuerelemente erforderlich macht. Bei den zweiten Steuerelementen kann es sich beispielsweise um Steuerelemente zur lokalen Einstellung von Steuerparametern vor Ort handeln, wie etwa einem Öffnungsgrad eines Ventils, welches vor Ort per Hand zu betätigen ist. Beispielsweise handelt es sich bei dem entsprechenden Ventil um ein entsprechendes zweites Steuerelement. Bei den ersten Steuerelementen kann es sich beispielsweise um Steuerelemente des Leitstands des Wasserfahrzeugs handeln zur Einstellung von Steuerparametern vom Leitstand aus, d.h. aus der Entfernung, wie etwa einen Öffnungsgrad eines über den Leitstand ansteuerbaren, elektrisch aus der Entfernung betätigbaren Ventils. Beispielsweise handelt es sich bei einem Steuerelement des Leitstands, etwa einer Konsole mit einer benutzerschnittstelle zur Steuerung des elektrisch aus der Entfernung betätigbaren Ventils, um ein entsprechendes erstes Steuerelement. Ein Wechsel von ein oder mehreren Erstpriorisierungen hin zu entsprechenden Zweitpriorisierungen kann beispielsweise ausgelöst werden durch eine Aktion und/oder einen Ausfall eines oder mehrerer der Besatzungsmitglieder. Ein Wechsel von ein oder mehreren Erstpriorisierungen hin zu entsprechenden Zweitpriorisierungen kann beispielsweise ausgelöst werden durch eine externe Aktion, etwa eines Trainers, welcher die Simulation leitet und nicht zu den Besatzungsmitgliedern gehört. Ein solcher Trainer kann das Training beispielsweise von einem Kontrollraum aus überwachen und gegebenenfalls eine Abweichung von dem Normalbetreib des Wasserfahrzeugs, d.h. einen Wechsel von der Erstpriorisierung zu der Zweitpriorisierung. Durch eine entsprechende Priorisierung wird es ermöglicht, dass Widersprüche zwischen den Einstellungen der ersten physischen Steuerelemente und der virtuellen Kopien der entsprechenden zweiten Steuerelemente vermieden werden können.

Für diejenigen Steuerelemente, für welche die Normalbetriebs- und Zweitpriorisierungen gelten, wird eindeutig festgelegt, welche Steuerelemente bzw. welche Ausführungsformen der entsprechenden Steuerelemente, d.h. das erste physische Steuerelement oder die zumindest teilweise virtuellen Kopien des zweiten Steuerelements, für die Einstellungen der Steuerparameter und damit für die Simulation des Betriebs des Wasserfahrzeugs Gültigkeit besitzen. Beispielsweise kann eine Zweitpriorisierung dadurch implementiert werden, dass im Falle einer Abweichung vom Normalbetrieb die Lese- und Schreibrechte für die Steuerparameter neu vergeben werden. Im Zuge der Neuvergabe können beispielsweise die Schreibrechte ausschließlich den virtuellen Kopien der entsprechenden zweiten Steuerelemente zugeordnet werden, während für die ersten physischen Steuerelemente keine Schreibberechtigungen bestehen.

Beispielsweise kann die zweite Datenbank der Simulationsschnittstelle sowohl Definitionen der Erstpriorisierungen als auch der Zweitpriorisierungen umfassen. Ein Wechsel zwischen Erstpriorisierung und Zweitpriorisierung kann beispielsweise mittels eines Flags gesteuert werden. Wird beispielsweise ein entsprechender Flag gesetzt, so erfolgt beispielsweise ein Wechsel von Erstpriorisierung zu Zweitpriorisierung. Wird der Flag gelöscht, so gilt beispielsweise wieder die Erstpriorisierung. Hierbei können für unterschiedliche Steuerparameter bzw. Steuerelemente unterschiedliche Priorisierungen bestehen. Es müssen nicht alle Flags für alle Steuerparameter bzw. Steuerelemente gleichgesetzt sein. Beispielsweise können für manche der Steuerparameter bzw. Steuerelemente Erstpriorisierungen gelten, während für andere Zweitpriorisierungen gelten. Ebenso ist es möglich, dass die Flags für alle Steuerparameter bzw. Steuerelemente gleichgesetzt sind, d.h. für alle Steuerparameter bzw. Steuerelemente jeweils Erstpriorisierungen oder dass für alle Steuerparameter bzw. Steuerelemente jeweils Zweitpriorisierungen gelten.

Nach Ausführungsformen stellen ein oder mehrere der von der ersten Datenbank umfassten Schadensszenarien bei einem Ausführen im Zuge des simulierten Betriebs des Wasserfahrzeugs jeweils eine Abweichung von dem Normalbetrieb des Wasserfahrzeugs dar.

Ausführungsformen können den Vorteil haben, dass durch Gefechtstreffer hervorgerufene Schadenszenarien und deren Einfluss auf den Betrieb des Wasserfahrzeugs mitberücksichtigt werden können.

Beispielsweise handelt es sich bei der ersten und zweiten Datenbank um zwei voneinander verschieden Datenbanken. Beispielsweise handelt es sich bei der ersten und der zweiten Datenbank um dieselbe Datenbank. Beispielsweise umfasst die erste Datenbank zusätzlich die zweite Datenbank bzw. die Daten der zweiten Datenbank.

Zu einer Abweichung vom Normalbetrieb kann es beispielsweise im Zug eines Treffers des Wasserfahrzeugs in einem Gefecht kommen. Ein entsprechendes Szenario einer Abweichung vom Normalbetrieb, etwa ein Fehlbetriebsszenario des Wasserfahrzeugs, kann beispielsweise wie folgt aussehen: Ein Fehlbetrieb kann beispielsweise Brandgasentwicklung umfassen, welcher zu einem Ausfall der ersten Gruppe von Besatzungsmitgliedern in der ersten Simulationsumgebung führt. Im Zuge des simulierten Betriebs des Wasserfahrzeugs können diese Besatzungsmitglieder beispielsweise keine weiteren Handlungen mehr ausführen. In diesem Fall müssten Besatzungsmitglieder der zweiten Gruppe von Besatzungsmitgliedern in der zweiten Simulationsumgebung beispielsweise zweite Steuerelemente einstellen, welche eigentlich von den Mitgliedern der ersten Gruppe von Besatzungsmitgliedern einzustellen wären und sich beispielsweise in physischer Form in der ersten Simulationsumgebung befinden. Da ein physischer Wechsel von der zweiten Simulationsumgebung in die erste Simulationsumgebung etwa schwierig oder unmöglich ist, können die Mitglieder der zweiten Besatzungsmitglieder beispielsweise mittels der visuellen Simulation in den im Bereich des Wasserfahrzeugs virtuell gelangen, welcher von der ersten Simulationsumgebung physisch bereitgestellt wird. In dieser virtuellen Umgebung können die Mitglieder der zweiten Gruppe von Besatzungsmitgliedern beispielsweise die virtuellen Kopien der zweiten Steuerelemente betätigen und die entsprechenden Steuerparameter einstellen. Da im Falle der Abweichung vom Normalbetrieb die Zweitpriorisierungen gelten, werden die entsprechend eingestellten Steuerparameter nun im Zuge der simulierten Abweichung von dem Normalbetrieb zum Berechnen des Zustands des Wasserfahrzeugs anstelle der Einstellungen der ersten physischen Steuerelemente verwendet. Somit wird eine realistische Simulation ermöglicht, selbst wenn die erste Gruppe von Besatzungsmitgliedern ausfällt und keine Einstellung von Steuerparametern mittels der ersten physischen Steuerelemente in der ersten Simulationsumgebung mehr möglich ist.

Ein Szenario einer Abweichung von dem Normalbetrieb kann ferner allgemein jedes Szenario sein, bei welchem es notwendig wird einen im Normalbetrieb mittels des Leitstands des Wasserfahrzeugs bzw. eines von dem Leitstand umfassten ersten Steuerelement eingestellten Steuerparameter vor Ort unter Verwendung eines zweiten Steuerelements einzustellen. Grund hierfür kann beispielsweise sein, dass die Fernbedienung von dem Leitstand aus ausfällt oder es können ein oder mehrere Besatzungsmitglieder an dem Leitstand ausfallen.

Durch die Verwendung von Priorisierungen, wie die hier beschriebenen Erstpriorisierungen und Zweitpriorisierungen, kann beispielsweise verhindert werden, dass sich Einstellungen von Steuerparametern in der realer ersten Simulationsumgebung über erste physische Steuerelemente und Einstellungen in der virtueller Umgebung über die zumindest teilweisen virtuellen Kopien zweiter physischen Steuerelemente zu Inkonsistenzen oder gar einem gegenseitigem Blockieren im Zuge der Simulation des Betriebs des militärischen Wasserfahrzeugs führen können. Diese Gefahr von Inkonsistenzen besteht insbesondere bei mechanischen Einstellungen, bei denen mechanische Komponenten der entsprechenden Steuerelemente betätigt werden. Beispielsweise kann ein mechanisches Ventil, welches in der ersten Simulationsumgebung in physischer Form angeordnet ist, solange die erste Simulationsumgebung aktiv an der Simulation des Betriebs des militärischen Wasserfahrzeugs teilnimmt, nur dort real umgelegt werden. Ansonsten bestünde die Gefahr, dass der mechanische Zustand des physischen Ventils in der ersten Simulationsumgebung nicht dem Zustand entspricht, welcher für die Durchführung der Simulation zugrunde gelegt wird.

Würde der Simulation des Betriebs des militärischen Wasserfahrzeugs beispielsweise eine Einstellung einer virtuellen Kopie eines Ventils zugrunde gelegt werden, dessen virtueller mechanischer Zustand nicht dem physischen mechanischen Ventil in der ersten Simulationsumgebung entspricht, kann diese zu Problemen während der Simulation des Betriebs führen. Ist beispielsweise das physische Ventil geschlossen, die virtuelle Kopie aber offen und ergibt sich im Zuge der Simulation nun die Anforderung an die Besatzungsmitglieder der ersten Gruppe in der ersten Simulationsumgebung das physische Ventil zu schließen, können sie dies nicht tun. Umgekehrt könnte beispielsweise das physische Ventil offen, die virtuelle Kopie aber geschlossen sein. Ergibt sich im Zuge der Simulation nun die Anforderung an die Besatzungsmitglieder der ersten Gruppe in der ersten Simulationsumgebung das physische Ventil zu öffnen, können sie dies ebenfalls nicht tun. Derartige Probleme können mittels der hier beschriebenen Priorisierungen vermieden werden.

Beispielsweise kann eine Änderung der Einstellung des ersten physischen Steuerelements in der ersten Simulationsumgebung in der zweiten Simulationsumgebung durch eine entsprechende Anpassung des Zustands virtueller Komponenten der Kopie des entsprechenden ersten physischen Steuerelements auch in der zweiten Simulationsumgebung dargestellt werden.

Für rein elektronischer Einstellungen von Steuerparameter, wie etwa an EDV-Systemen dargestellte Informationen, können Inkonsistenzen beispielsweise vermieden werden, da die entsprechenden Einstellungen in beiden Simulationsumgebung angepasst werden können, ohne dass es zu Abweichungen von physischen Zuständen mechanischer Komponenten von den der Simulation zugrunde gelegten Zuständen in der ersten Simulationsumgebung kommt.

Rückmeldungen aus einem Zustandssimulationsprogramm, d.h. unter Verwendung der eingestellten Steuerparameter berechnete bzw. simulierte Zustandswerte des militärischen Wasserfahrzeugs können beispielsweise in beiden Simulationsumgebungen dargestellt werden. Beispielsweise kann ein Wert für einen Tankfüllstand eines Tanks des militärischen Wasserfahrzeugs berechnet werden in Abhängigkeit von einem bisherigen Tankfüllstand und seitens der Besatzungsmitglieder eingestellten Steuerparametern. Der resultierende Zustandswert für den Tankfüllstand kann dann beispielsweise in einen geteilten Speicher (Shared Memory), welchen beispielsweise die Simulationsschnittstelle bereitstellt, geschrieben und beiden Simulationsumgebungen ausgelesen werden sowie angezeigt werden. Beispielsweise kann der Leitstand den entsprechenden Zustandswert aus dem geteilten Speicher auslesen und in einer Anzeigevorrichtung anzeigen. Beispielsweise können die technischen Mittel der zweiten Simulationsumgebung den entsprechenden Zustandswert aus dem geteilten Speicher auslesen und anzeigen.

Bei einem Ausfall aller Besatzungsmitglieder der ersten Gruppe in der ersten Simulationsumgebung infolge einer Abweichung von dem Normalbetrieb, beispielsweise durch Brandgase infolge eines Brands, kann ein Wechsel von der Erstpriorisierung zu der Zweitpriorisierung erfolgen. Infolge dieses Wechsels können nun Steuerparameter in der ersten Simulationsumgebung mittels der zumindest teilweise virtuellen Kopien der zweiten Steuerelemente der ersten Simulationsumgebung virtuell eingestellt und als Grundlage für die Simulation des Betriebs des militärischen Wasserfahrzeugs genutzt werden. Diese Möglichkeit ist im Falle der Erstpriorisierung beispielsweise gesperrt. Beispielsweise wird das Einstellen von Steuerparametern mittels der ersten physischen Steuerelemente in der ersten Simulationsumgebung gesperrt, d.h. die erste Simulationsumgebung wird beispielsweise von der Simulation des Betriebs des militärischen Wasserfahrzeugs abgetrennt. In diesem Fall werden die Einstellungen bzw. Schaltzustände in der ersten Simulationsumgebung irrelevant. Beispielsweise werden Rechte zum Einstellen von Steuerparametern von der ersten Simulationsumgebung auf die zweite Simulationsumgebung und damit vom realen Ram in den virtuellen transferiert.

Zu Abweichungen von dem Normalbetrieb des militärischen Wasserfahrzeugs umfassen kann es beispielsweise im Zuge eines Treffers des Wasserfahrzeugs kommen. Abweichungen von dem Normalbetrieb des militärischen Wasserfahrzeugs umfassen beispielsweise Fehlfunktionen des Wasserfahrzeugs. Beispielsweise umfassen Fehlfunktionen einen Brand, etwa in einer Kombüse des Wasserfahrzeugs, Fehler im EDV-System bzw. elektronischen Komponenten des Wasserfahrzeugs, oder einen Wassereinbruch in einem bestimmten Bereich des Wasserfahrzeugs. Eine Abweichung von dem Normalbetrieb, etwa bei einer Fehlfunktion, kann beispielsweise eine zu lösende Trainingsaufgabe darstellen, welche durch eine Simulationsvorgabe eines Trainers erzeugt wird. Beispielsweise gibt der Trainer einen Treffer des Wasserfahrzeugs über ein Gefechtssimulationssystem vor. Beispielsweise kann sich eine Fehlfunktion aus der Simulation des Betriebs des Wasserfahrzeugs ergeben, etwa infolge eines Bedienungsfehlers oder negativen Auswirkungen eines Ereignisses eines Simulationsszenarios, wie etwa einem Beschuss des militärischen Wasserfahrzeugs.

Beispielsweise umfasst die Simulationsschnittstelle eine Liste von vordefinierten Abweichungen von dem Normalbetrieb, etwa in Form von vordefinierten Fehlfunktionen des Wasserfahrzeuges, für welche ein Wechsel von der Erstpriorisierungen zu Zweitpriorisierungen für ein oder mehrere der den entsprechenden Zweitpriorisierungen zugeordneten ersten Steuerelementen sowie ein oder mehreren den entsprechenden Zweitpriorisierungen zugeordneten Kopien der zweiten Steuerelemente stattfindet. Die auf der Liste aufgeführten Abweichungen von dem Normalbetrieb können beispielsweise Abweichungen umfassen, welche aus einem Treffer d des Wasserfahrzeugs resultieren können. Beispielsweise sind für die vordefinierten Abweichungen von dem Normalbetrieb jeweils ein oder mehrere Erstpriorisierungen festgelegt, für welche im Falle eines Auftretens der entsprechenden Abweichung ein Wechsel zu Zweitpriorisierungen erfolgt, welche der entsprechenden Abweichung zugeordnet sind. Tritt im Zuge der Simulation des Betriebs des Wasserfahrzeugs eine dieser Abweichungen von dem Normalbetrieb, so erfolgt für diese Abweichung der Wechsel von Erstpriorisierungen zu Zweitpriorisierungen, d.h. ein festgelter Wechsel von Erstpriorisierungen zu Zweitpriorisierungen, welche der entsprechenden Abweichung zugeordnet sind.

Nach Ausführungsformen ist in dem Speicher der Simulationsschnittstelle ferner aktuell für die Simulation des Wasserfahrzeugs gültige Steuerparameter gespeichert.

Ausführungsformen können den Vorteil haben, dass die Simulationsschnittstelle die für die Simulation des Wasserfahrzeugs gültigen Steuerparameter bereitstellt. Die entsprechenden Steuerparameter können dann ausgelesen werden und in der ersten sowie zweiten Simulationsumgebung für den simulierten Betrieb des Wasserfahrzeugs genutzt werden. Zusätzlich oder alternativ können die entsprechenden Steuerparameter für eine Simulation des Zustands des Wasserfahrzeugs, etwa durch ein Zustandssimulationsprogramm, verwendet werden. Die daraus resultierenden Zustandswerte können für eine Definition des Zustands des Wasserfahrzeugs und damit die Simulation des Wasserfahrzeugs in der ersten und zweiten Simulationsumgebung genutzt werden.

Nach Ausführungsformen definieren die Erstpriorisierungen und Zweitpriorisierungen jeweils Schreibrechte.

Nach Ausführungsformen legen die Erstpriorisierungen jeweils fest, dass der Leitstand der ersten Simulationsumgebung Schreibrechte zum Schreiben der mittels der ersten physischen Steuerelemente eingestellten und im simulierten Normalbetrieb des Wasserfahrzeugs gültigen Steuerparameter besitzt, während die technischen Mittel der zweiten Simulationsumgebung keine Schreibrechte zum Schreiben der aktuell für die Simulation des Wasserfahrzeugs gültigen Steuerparameter besitzen. Die Zweitpriorisierungen legen jeweils fest, dass die technischen Mittel der zweiten Simulationsumgebung Schreibrechte zum Schreiben der mittels der den Zweitpriorisierungen zugeordneten Kopien der zweiten Steuerelemente eingestellten und in der simulierten Abweichung von dem Normalbetrieb des Wasserfahrzeugs gültigen Steuerparameter besitzen, während der Leitstand keine Schreibrechte zum Schreiben der Steuerparameter, welche mittels der den Zweitpriorisierungen zugeordneten ersten physischen Steuerelemente eingestellt sind, als aktuell für die Simulation des Wasserfahrzeugs gültige Steuerparameter besitzt.

Ausführungsformen können den Vorteil haben, dass die Erstpriorisierungen und Zweitpriorisierungen jeweils über Definitionen von Schreibrechten implementiert werden können. Im Falle der Erstpriorisierungen wird beispielsweise jeweils festgelegt, dass der Leitstand der ersten Simulationsumgebung Schreibrechte zum Schreiben von Steuerparameter besitzt. In diesem Fall handelt es sich bei den entsprechenden Steuerparametern, die geschrieben werden, um die mittels der ersten physischen Steuerelemente eingestellten Steuerparameter. Somit handelt es sich im Normalbetrieb bei den mittels der ersten physischen Steuerelemente eingestellten Steuerparameter um die für den simulierten Normalbetrieb des Wasserfahrzeugs gültigen Steuerparameter, da nur diese entsprechend in der Simulationsschnittstelle als gültig gespeichert werden. Im Falle der Abweichung von dem Normalbetrieb können die Zweitpriorisierungen festlegen, dass die technischen Mittel der zweiten Simulationsumgebung Schreibrechte besitzen. In diesem Fall werden die mittels der virtuellen Kopien der zweiten Steuerelemente eingestellten Steuerparameter in die Simulationsschnittstelle geschrieben und besitzen damit Gültigkeit für die simulierte Abweichung von dem Normalbetrieb des Wasserfahrzeugs. Ein Wechsel zwischen der Erstpriorisierung und der Zweitpriorisierung, d.h. ein Wechsel der Zuordnung der Schreibrechte, kann beispielsweise durch ein Überschreiben der entsprechenden Zuordnungen von Schreibrechten erfolgen. Alternative können die Erstpriorisierungen und die Zweitpriorisierungen die entsprechenden Schreibrechte jeweils definieren, wobei ein Wechsel zwischen Erstpriorisierungen und Zweitpriorisierungen beispielsweise durch Setzen eines oder mehrerer Flags implementiert werden kann. Beispielsweise werden die entsprechenden Flags in der Simulationsschnittstelle in der zweiten Datenbank mit den Definitionen der Steuerelemente sowie der Erstpriorisierungen und/oder Zweitpriorisierungen gespeichert.

Nach Ausführungsformen besitzt der Leitstand der ersten Simulationsumgebung Schreibrechte zum Schreiben der mittels der ersten physischen Steuerelemente eingestellten Steuerparameter, ebenso wie die technischen Mittel der zweiten Simulationsumgebung Schreibrechte zum Schreiben der mittels der Kopien der zweiten Steuerelemente eingestellten Steuerparameter besitzen.

Die Erstpriorisierungen legen jeweils fest, dass die mittels der ersten physischen Steuerelemente eingestellten und von dem Leitstand geschriebenen Steuerparameter als im simulierten Normalbetrieb des Wasserfahrzeugs gültige Steuerparameter gelesen werden, während die mittels der Kopien der zweiten Steuerelemente eingestellten und von den technischen Mitteln der zweiten Simulationsumgebung geschriebene Steuerparameter nicht gelesen werden.

Die Zweitpriorisierungen legen jeweils fest, dass die mittels der den Zweitpriorisierungen zugeordneten Kopien der zweiten Steuerelemente eingestellten und von den technischen Mitteln der zweiten Simulationsumgebung geschriebene Steuerparameter als für die simulierte Abweichung von dem Normalbetrieb des Wasserfahrzeugs gültige Steuerparameter gelesen werden, während die mittels der den Zweitpriorisierungen zugeordneten ersten physischen Steuerelemente eingestellten und von dem Leitstand geschriebenen Steuerparameter nicht gelesen werden.

Ausführungsformen können den Vorteil haben, dass Einstellungen der Steuerparameter stets geschrieben werden, unabhängig davon, ob die Einstellung mittels eines der ersten physischen Steuerelemente oder mittels einer zumindest teilweise virtuellen Kopie eines der zweiten Steuerelemente erfolgt. Die entsprechenden Informationen liegen stets vor. Priorisierungsabhängig wird lediglich entschieden, welche der eingestellten bzw. geschriebenen Steuerparameter für die Simulation des Wasserfahrzeugs als gültige Steuerparameter für die Simulation des Wasserfahrzeugs verwendet werden.

In diesem Fall werden beispielsweise sowohl mittels der ersten physischen Steuerelemente eingestellte Steuerparameter, d.h. erste Steuerparameter, als auch mittels der Kopien der zweiten Steuerelemente eingestellte Steuerparameter, d.h. zweite Steuerparameter. Beispielsweise sind den Simulationsumgebungen jeweils Schnittstellenparameter, in welche die entsprechenden Simulationsumgebungen jeweils per Schnittstellendefinition schreiben dürfen. In diese Schnittstellenparameter können die Simulationsumgebungen beispielsweise jederzeit die in ihnen eingestellten Steuerparameter schreiben. Ein Flag, welches zwischen Erstpriorisierung, z.B. Fernbedienung, und Zweitpriorisierung, z.B. lokale Bedienung unterscheidet, signalisiert dem Simulationsmodell, welchen der Schnittstellenwerte es als für die Simulation des Wasserfahrzeugs gültigen Steuerparameter übernehmen soll. Wenn beispielsweise das Flag auf Normalbetrieb steht und die zweite Simulationsumgebung beispielsweise einen Öffnungsgrad einer virtuellen Kopie eines Ventils in der virtuellen Umgebung in die Simulationsschnittelle schreibt, steht dieser Steuerparameter zwar als Wert in der Simulationsschnittstelle bzw. in einem der zweiten Simulationsumgebung zugeordneten Schnittstellenparameter, wird aber nicht als gültiger Steuerparameter für die Simulation übernommen bzw. verwendet.

Nach Ausführungsformen definiert die Erstpriorisierungen, dass die Erfassung der mittels der ersten physischen Steuerelemente eingestellten Steuerparameter durch den Leitstand der ersten Simulationsumgebung aktiviert ist, während die Erfassung der mittels der Kopien der zweiten Steuerelemente eingestellten Steuerparameter durch die technischen Mittel der zweiten Simulationsumgebung deaktiviert ist. Die Zweitpriorisierungen definiert, dass die Erfassung der mittels der Kopien der zweiten Steuerelemente eingestellten Steuerparameter durch die technischen Mittel der zweiten Simulationsumgebung aktiviert ist, während die Erfassung der mittels der ersten physischen Steuerelemente eingestellten Steuerparameter durch den Leitstand der ersten Simulationsumgebung deaktiviert ist. Ausführungsformen können den Vorteil haben, dass ein Wechsel zwischen Erstpriorisierungen und Zweitpriorisierungen beispielsweise durch ein Aktivieren und Deaktivieren entsprechender Sensoren zum Erfassen von Einstellungen der ersten bzw. zweiten Steuerelemente implementiert werden kann. Beispielsweise kann die Erstpriorisierung definieren, dass ein Erfassen der mittels der ersten physischen Steuerelemente eingestellten Steuerparameter durch den Leitstand aktiviert ist, während eine Erfassung mittels der virtuellen Kopien der zweiten Steuerelemente der eingestellten Steuerparameter durch die technischen Mittel der zweiten Simulationsumgebung deaktiviert ist. In diesem Fall kann beispielsweise die Simulationsschnittstelle den Leitstand der ersten Simulationsumgebung bzw. den technischen Mitteln der zweiten Simulationsumgebung jeweils anzeigen, ob ein Normalbetrieb oder eine Abweichung von dem Normalbetrieb der Simulation vorliegt. Im Falle des Normalbetriebs ist die Erfassung der Einstellungen der ersten physischen Steuerelemente aktiviert, während eine entsprechende Erfassung der virtuellen Kopien der zweiten Steuerelemente deaktiviert ist. Tritt nun im Zuge der Simulation des Wasserfahrzeugs eine Abweichung von dem Normalbetrieb auf, welcher einen Wechsel von Erstpriorisierungen zu Zweitpriorisierungen erfordert, wird die Erfassung der virtuellen Kopien der zweiten Steuerelemente beispielsweise aktiviert, während die Erfassung der ersten physischen Steuerelemente im Gegenzug beispielsweise deaktiviert wird. Beispielsweise zeigt die Simulationsschnittstelle an, dass ein Wechsel vom Normalbetrieb zu einer Abweichung von dem Normalbetrieb erfolgt, woraufhin der Leitstand der ersten Simulationsumgebung die Erfassung der Einstellung der ersten physischen Steuerelemente deaktiviert, während die technischen Mittel der zweiten Simulationsumgebung die Erfassung der virtuellen Kopien der zweiten Steuerelemente aktivieren.

Nach Ausführungsformen wird die Simulationsschnittstelle von einem Simulationscomputersystem bereitgestellt, welches einen Speicher mit ausführbaren Programminstruktionen eines Zustandssimulationsprogramms zum Simulieren eines Zustands des Wasserfahrzeugs und einem digitalen Modell des Wasserfahrzeugs umfasst sowie einen Prozessor. Ein Ausführen der Programminstruktionen durch den Prozessor veranlasst das Simulationscomputersystem dazu, einen aktuellen Zustand des Wasserfahrzeugs unter Verwendung des digitalen Modells des Wasserfahrzeugs, der für die Simulation des Wasserfahrzeugs gültigen Steuerparameter sowie der von dem ausgelesenen Schadensszenario definierten Schadensparameter zu simulieren.

Ausführungsformen können den Vorteil haben, dass mittels des Simulationscomputersystems ein aktueller Zustand des Wasserfahrzeugs simuliert bzw. berechnet werden kann. Hierzu nutzt das Simulationscomputersystem ein Simulationsprogramm. Das Simulationsprogramm verwendet ein digitales Modell des Wasserfahrzeugs. Das entsprechende digitale Modell des Wasserfahrzeugs beschreibt das Wasserfahrzeug und es werden Zustandsparameter des Wasserfahrzeugs sowie deren Abhängigkeiten definiert. Das Zustandssimulationsprogramm greift beispielsweise auf die von dem ausgelesenen Schadensszenario definierten Schadensparameter zu und berechnet in Abhängigkeit von diesen Schadensparametern die für die Zustandsparameter des Wasserfahrzeugs aktuell gültigen Zustandswerte. Somit werden im Falle eines Treffers beispielsweise die aus dem Treffer resultierenden Schäden, d.h. die von dem ausgelesenen Schadensszenario definierten Schadensparameter des Wasserfahrerzeugs und damit deren Einfluss auf den Zustand des Wasserfahrzeugs berücksichtigt.

Das Zustandssimulationsprogramm greift ferner beispielsweise auf die gültigen Steuerparameter des Wasserfahrzeugs zurück und berechnet in Abhängigkeit von diesen Steuerparametern die für die Zustandsparameter des Wasserfahrzeugs aktuell gültigen Zustandswerte. Die resultierenden Zustandswerte werden der ersten Simulationsumgebung bzw. dem Leitstand sowie der zweiten Simulationsumgebung bzw. den technischen Mitteln der zweiten Simulationsumgebung zur Verfügung gestellt, sodass diese der ersten und zweiten Gruppe von Besatzungsmitgliedern jeweils den aktuell simulierten Zustand des Wasserfahrzeugs anzeigen können.

Ferner erfolgt beispielsweise auch eine Bewegungssteuerung einer bewegbar gelagerten Plattform, auf welcher die erste Simulationsumgebung angeordnet sein kann, in Abhängigkeit von berechneten Zustandswerten des Wasserfahrzeugs, z.B. Neigungswinkeln des Wasserfahrzeugs.

Beispielsweise umfasst das digitale Modell des Wasserfahrzeugs ein hydrodynamisches Modell zur Berechnung der Bewegung des Wasserfahrzeugs. Beispielsweise werden Befehle des Steuerstands zum Steuern des Wasserfahrzeugs an das Simulationscomputersystem. Von dem Zustandssimulationsprogramm wird unter Verwendung des hydrodynamischen Modells beispielsweise eine Geschwindigkeit als Zustandswert des Wasserfahrzeugs berechnet. Diese Geschwindigkeit kann beispielsweise zur Bestimmung der Position des Wasserfahrzeugs verwendet werden. Beispielsweise kann diese Geschwindigkeit eine von einem Taktiksimulationsprogramm ausgelesen und zur Berechnung der Position des Wasserfahrzeugs in einer taktischen Lage verwendet werden.

Bei einem simulierten Waffenabschuss einer Bordwaffe mit Munition, deren Gewicht einen relevanten Einfluss auf das Gesamtgewicht des Wasserfahrzeugs, wie etwa ein Torpedo im Falle eines Unterseeboots, kann beispielsweise eine Verringerung des Gewichts des Wasserfahrzeugs als aktualisierter Zustandswert berechnet werden. Eine Verringerung des Gewichts kann beispielsweise Einfluss auf den Tiefgang bzw. die Tauchtiefe des Wasserfahrzeugs haben.

Nach Ausführungsformen erfolgt ein Wechsel von dem simulierten Normalbetrieb des Wasserfahrzeugs zu der simulierten Abweichung von dem Normalbetrieb des Wasserfahrzeugs auf einen Empfang eines externen Wechselbefehls durch die Simulationsschnittstelle hin.

Ausführungsformen können den Vorteil haben, dass ein Wechsel von dem simulierten Normalbetrieb des Wasserfahrzeugs zu der simulierten Abweichung von dem Normalbetrieb des Wasserfahrzeugs auf einen externen Wechselbefehl hin erfolgen kann. Der entsprechende externe Wechselbefehl kann beispielsweise durch ein an der Simulation beteiligtes Besatzungsmitglied, etwa den Kapitän des Wasserfahrzeugs, durch eine entsprechende Eingabe erfolgen. Beispielsweise wird der externe Wechselbefehl von einem Trainer eingegeben, welcher die Simulation leitet und nicht zu den Besatzungsmitgliedern gehört. Somit kann individuell jederzeit von dem Normalbetrieb zu einer Abweichung von dem Normalbetrieb, etwa auf einen Fehlbetrieb, gewechselt werden und eine schnelle Reaktionsfähigkeit der an dem Training teilnehmenden Besatzungsmitgliedern trainiert werden. Beispielsweise wird ein solcher externer Befehl zum Wechsel von dem simulierten Normalbetrieb des Wasserfahrzeugs zu der simulierten Abweichung von dem Normalbetrieb des Wasserfahrzeugs auf einen Treffer des Wasserfahrzeugs und/oder in Abhängigkeit von den für den Treffer ausgelesenen Schadensparameter gegeben.

Beispielsweise umfasst das Simulationssystem einen Kontrollraum mit Eingabemitteln zur Steuerung des Ablaufs der Simulation in der ersten und zweiten Simulationsumgebung. Beispielsweise sind die Eingabemittel zum Eingriff in die Simulation des Betriebs des Wasserfahrzeugs ausgebildet sind. Beispielsweise können über die Eingabemittel der Ausfall einzelner Stationen, ein Wassereinbruch oder ein Feuerausbruch simuliert werden. Hierdurch können auch nicht übliche Betriebszustände, d.h. Abweichungen von dem Normalbetrieb, insbesondere Fehlfunktionen, leicht dargestellt werden. Ein Trainer, welcher die Simulation leitet und nicht zu den Besatzungsmitgliedern gehört, kann somit das Training beispielsweise von dem Kontrollraum aus überwachen und gegebenenfalls eine Fehlfunktion und/oder einen Wechsel von der Erstpriorisierung zu der Zweitpriorisierung initiieren. Beispielsweise gibt der Trainer hierzu unter Verwendung der Eingabemittel zur Steuerung des Ablaufs der Simulation einen entsprechenden Befehl ein. Beispielsweise kann im Zuge der Steuerung des Ablaufs der Simulation auch ein Treffer des Wasserfahrzeugs über ein Gefechtssimulationssystem vorgegeben werden.

Nach Ausführungsformen erfolgt ein Wechsel von dem simulierten Normalbetrieb des Wasserfahrzeugs zu der simulierten Abweichung von dem Normalbetrieb des Wasserfahrzeugs durch die Simulationsschnittstelle automatisch im Zuge des Ausführens des Zustandssimulationsprogramms, falls der simulierte Zustand des Wasserfahrzeugs die Abweichung von dem Normalbetrieb umfasst.

Ausführungsformen können den Vorteil haben, dass der Wechsel von dem simulierten Normalbetrieb des Wasserfahrzeugs zu der simulierten Abweichung von dem Normalbetrieb ein Ergebnis des simulierten Zustands des Wasserfahrzeugs sein kann. Dieser simulierte Zustand kann beispielsweise Schäden berücksichtigen, welche von einem Treffer des Wasserfahrzeugs herrühren. Zur Definition entsprechenden Schäden bzw. eines entsprechenden Schadensszenarios können beispielsweise von der ersten Datenbank bereitgestellte Schadensparameter verwendet werden. Umfasst der mittels des Zustandssimulationsprogramms simulierte Zustand des Wasserfahrzeugs die entsprechende Abweichung von dem Normalbetrieb, so kann ein entsprechender Wechselbefehl an die Simulationsschnittstelle durch das Computersystem gegeben werden.

Nach Ausführungsformen umfasst die simulierte Abweichung von dem Normalbetrieb des Wasserfahrzeugs einen Ausfall der ersten Gruppe von Besatzungsmitgliedern. Ausführungsformen können den Vorteil haben, dass das Simulationssystem es ermöglicht, einen vollständigen oder teilweisen Ausfall der ersten Gruppe von Besatzungsmitgliedern zu trainieren. Ein entsprechender Ausfall der ersten Gruppe von Besatzungsmitgliedern kann beispielsweise daraus resultieren, dass die entsprechenden Besatzungsmitglieder physisch nicht mehr in der Lage sind, ihre Aufgaben auszuführen und/oder gemäß der Simulation den von der ersten Simulationsumgebung umfassten Bereich des Wasserfahrzeugs räumen mussten. Entsprechende Szenarien können beispielsweise bei einem Brand auftreten.

Nach Ausführungsformen handelt es sich bei dem militärischen Wasserfahrzeug um eines der folgenden Wasserfahrzeuge: ein Unterseeboot, einen Flugzeugträger, einen Hubschrauberträger, einen Kreuzer, einen Zerstörer, eine Fregatte, eine Korvette, ein Landungsschiff, einen Minenleger, ein Minenräumfahrzeug, ein Minenjagdfahrzeug, ein Patrouillenboot, ein Schnellboot, ein Aufklärungsschiff.

Ausführungsformen umfassen ferner ein System aus einem militärischen Wasserfahrzeug mit einem physischen Leitstand und aus einem zugehörigen Simulationssystem nach einer der zuvor beschriebenen beispielhaften Ausführungsformen des Simulationssystems zum Durchführen eines zeitgleichen kooperativen Gefechtstrainings einer Mehrzahl von Besatzungsmitgliedern des militärischen Wasserfahrzeugs in dem Simulationssystem. Bei dem physischen Leitstand in der ersten Simulationsumgebung des Simulationssystems handelt es sich um einen zu dem physischen Leitstand des Wasserfahrzeugs baugleichen Leitstand.

Ausführungsformen umfassen ferner ein Verfahren zum Betrieb eines Simulationssystems zum Durchführen eines zeitgleichen kooperativen Gefechtstrainings einer Mehrzahl von Besatzungsmitgliedern eines militärischen Wasserfahrzeugs. Das Simulationssystem umfasst eine erste Simulationsumgebung mit einem physischen Leitstand des Wasserfahrzeugs zum Trainieren einer ersten Gruppe von Besatzungsmitgliedern.

Die erste Simulationsumgebung umfasst ein oder mehrere erste physische Steuerelemente des Wasserfahrzeugs. Die ersten physischen Steuerelemente sind jeweils dazu konfiguriert, einen oder mehrere Steuerparameter für den Betrieb des Wasserfahrzeugs einzustellen. Der Leitstand ist dazu konfiguriert, mittels der ersten physischen Steuerelemente eingestellte Steuerparameter zu erfassen und an eine Simulationsschnittstelle des Simulationssystems zu kommunizieren.

Das Simulationssystem umfasst ferner eine von der ersten Simulationsumgebung räumlich getrennte zweite Simulationsumgebung zum Trainieren einer zweiten Gruppe von Besatzungsmitgliedern. Die zweite Simulationsumgebung umfasst technische Mittel, welche dazu konfiguriert sind, eine visuelle Simulation bereitzustellen, welche ein oder mehrere zumindest teilweise virtuelle Kopien ein oder mehrerer zweiter physischer Steuerelemente des Wasserfahrzeugs zum Einstellen der Steuerparameter umfasst. Die technischen Mittel sind ferner dazu konfiguriert, mittels der Kopien eingestellte Steuerparameter zu erfassen und an die Simulationsschnittstelle des Simulationssystems zu kommunizieren.

Die Simulationsschnittstelle des Simulationssystems umfasst einen Speicher. In dem Speicher ist eine erste Datenbank mit einer Mehrzahl von Datensätzen von Trefferparametern für eine Mehrzahl von unterschiedlichen Trefferszenarien des Wasserfahrzeugs und den Trefferszenarien jeweils zugeordneten Schadensszenarien des Wasserfahrzeugs gespeichert. Die Schadensszenarien definieren jeweils Schadensparameter des Wasserfahrzeugs. Die Schadensszenarien für die Trefferszenarien sind unter Verwendung eines Schadensmodells des Wasserfahrzeugs vorberechnet.

Das Verfahren umfasst:
- Empfangen zumindest eines Satzes von Trefferparametern für zumindest einen Treffer des Wasserfahrzeugs von einem Gefechtssimulationssystem durch die Simulationsschnittstelle im Zuge des Gefechtstrainings,
- Vergleichen der empfangenen Trefferparameter mit den Trefferparametern der in der ersten Datenbank gespeicherten Datensätze,
- Bestimmen eines Datensatzes von Trefferparametern der Mehrzahl von Datensätzen in der ersten Datenbank, dessen Trefferparameter die geringsten Abweichungen von den empfangenen Trefferparametern aufweisen,
- Auslesen des dem bestimmten Datensatz zugeordneten Schadensszenario aus der ersten Datenbank,
- Steuern zumindest der von den technischen Mitteln der zweiten Simulationsumgebung bereitgestellten visuellen Simulation zum Wiedergeben des ausgelesenen Schadensszenarios.

Ausführungsformen des Verfahrens können beispielsweise zum Betrieb jeder der zuvor beschriebenen beispielhaften Ausführungsformen des Simulationssystems zum Durchführen eines zeitgleichen kooperativen Gefechtstrainings einer Mehrzahl von Besatzungsmitgliedern eines militärischen Wasserfahrzeugs konfiguriert sein.

Nach Ausführungsformen umfasst das Verfahren ferner ein Anzeigen ein oder mehrere der Schadensparameter des ausgelesenen Schadensszenarios auf ein oder mehreren Anzeigevorrichtungen des Leitstands.

Nach Ausführungsformen sind die in der ersten Datenbank gespeicherten Schadensszenarien des Wasserfahrzeugs für die Trefferszenarien unter Verwendung einer Finite-Element-Methode für das Wasserfahrzeug vorberechnet. Nach Ausführungsformen umfasst das Verfahren ferner ein Speichern der ein oder mehreren vorberechneten Schadensszenarien des Wasserfahrzeugs, beispielsweise aller vorberechneten Schadensszenarien, in der ersten Datenbank. Nach Ausführungsformen umfasst das Verfahren ferner ein Vorberechnen ein oder mehreren zu speichernder Schadensszenarien des Wasserfahrzeugs, beispielsweise aller zu speichernden Schadensszenarien, für die Trefferszenarien unter Verwendung der Finite-Element-Methode für das Wasserfahrzeug.

Nach Ausführungsformen umfasst das Verfahren ferner ein Anpassen ein oder mehrerer individueller Wiedergaben der visuellen Simulation durch ein oder mehrere der technischen Mitteln der zweiten Simulationsumgebung unter Verwendung ein oder mehrere der Schadensparameter des ausgelesenen Schadensszenarios an ein oder mehrere aus dem Schadensszenario resultierende Umweltbedingungen, um individuelle Auswirkungen der resultierenden Umweltbedingungen auf ein oder mehrere Besatzungsmitglieder der zweiten Gruppe von Besatzungsmitgliedern zu simulieren.

Nach Ausführungsformen umfasst die Anpassungen der individuellen Wiedergaben ein oder mehrere der folgenden visuellen Effekte: ein Flimmern der visuellen Wiedergabe, ein zeitweises Aussetzen der visuellen Wiedergabe, ein Farbwechsel der visuellen Wiedergabe, eine Einschränkung eines von der visuellen Wiedergabe umfassten Sichtfelds, ein Verschwimmen der visuellen Wiedergabe, ein Verlangsamen der visuellen Wiedergabe.

Nach Ausführungsformen werden ferner ein oder mehrere der folgenden akustischen Effekte zum Simulieren individueller Auswirkungen der resultierenden Umweltbedingungen verwendet: ein zeitweises Aussetzen akustischer Wiedergaben, ein reduzierend einer Lautstärke akustischer Wiedergaben, ein Verrauschen akustischer Wiedergaben, ein Überlagern akustischer Wiedergaben mit einem Pfeifton.

Nach Ausführungsformen ist in dem Speicher ferner eine zweite Datenbank mit Definitionen der ein oder mehreren ersten Steuerelemente und der ein oder mehrere Kopien der ein oder mehreren zweiten Steuerelemente gespeichert. Die Definitionen für die definierten ersten Steuerelemente und Kopien der zweiten Steuerelemente legen jeweils eine Erstpriorisierung für einen simulierten Normalbetrieb des Wasserfahrzeugs fest, in welcher die Einstellungen der Steuerparameter gemäß den ersten physischen Steuerelementen gegenüber den Einstellungen gemäß den Kopien der zweiten Steuerelemente als für die Simulation des Wasserfahrzeugs ausschließlich gültige Einstellungen der Steuerparameter priorisiert werden.

Das Verfahren umfasst ferner auf eine simulierte Abweichung von dem Normalbetrieb des Wasserfahrzeugs hin, wechseln von ein oder mehreren der Erstpriorisierungen zu ein oder mehrere Zweitpriorisierungen. Die ein oder mehreren Zweitpriorisierungen priorisieren für die simulierte Abweichung von dem Normalbetrieb Einstellungen ein oder mehrerer der Steuerparameter gemäß ein oder mehreren den Zweitpriorisierungen zugeordneten Kopien der zweiten Steuerelemente gegenüber Einstellungen gemäß ein oder mehreren den Zweitpriorisierungen zugeordneten ersten physischen Steuerelemente als für die Simulation des Wasserfahrzeugs ausschließlich gültige Einstellungen der entsprechenden Steuerparameter.

Im Weiteren werden Ausführungsformen der Erfindung mit Bezugnahme auf die Zeichnungen näher erläutert. Es zeigen:
- Figur 1: ein schematisches Blockdiagramm eines exemplarischen Simulationssystems,
- Figur 2: ein schematisches Blockdiagramm eines weiteren exemplarischen Simulationssystems,
- Figur 3: ein schematisches Diagramm einer ersten exemplarischen Simulationsumgebung,
- Figur 4: ein schematisches Diagramm einer zweiten exemplarischen Simulationsumgebung,
- Figuren 5: exemplarische Ausführungsformen von Steuerelementen,
- Figur 6: ein schematisches Blockdiagramm eines exemplarischen Leitstands,
- Figur 7: ein schematisches Blockdiagramm eines exemplarischen technischen Mittels,
- Figur 8: ein schematisches Blockdiagramm eines exemplarischen Simulationscomputersystems,
- Figur 9: ein schematisches Blockdiagramm eines exemplarischen Gefechtssimulationssystems,
- Figur 10: ein schematisches Blockdiagramm eines exemplarischen FEM-Computersystems,
- Figur 11: ein schematisches Flussdiagramm eines exemplarischen Verfahrens zum Gefechtstrainings einer Mehrzahl von Besatzungsmitgliedern eines militärischen Wasserfahrzeugs,
- Figur 12: ein schematisches Flussdiagramm einer exemplarischen Abweichung von dem Normalbetrieb,
- Figur 13: ein schematisches Flussdiagramm einer exemplarischen Abweichung von dem Normalbetrieb,
- Figur 14: ein schematisches Flussdiagramm einer exemplarischen Abweichung von dem Normalbetrieb,
- Figur 15: ein schematisches Flussdiagramm eines exemplarischen Verfahrens zum Simulieren des Zustands eines Wasserfahrzeugs,
- Figur 16: ein schematisches Flussdiagramm eines exemplarischen Verfahrens zum Simulieren des Zustands eines Wasserfahrzeugs im Falle eines Treffers,
- Figur 17: ein schematisches Blockdiagramm eines weiteren exemplarischen Simulationssystems,
- Figur 18: ein schematisches Blockdiagramm eines weiteren exemplarischen Simulationssystems,
- Figur 19: eine Darstellung eines exemplarischen Simulationssystems,
- Figur 20: eine Darstellung einer ersten exemplarischen Simulationsumgebung,
- Figur 21: eine Darstellung exemplarischer Konsolen eines Leitstands.

Elemente der nachfolgenden Ausführungsformen, die einander entsprechen, werden mit denselben Bezugszeichen gekennzeichnet.

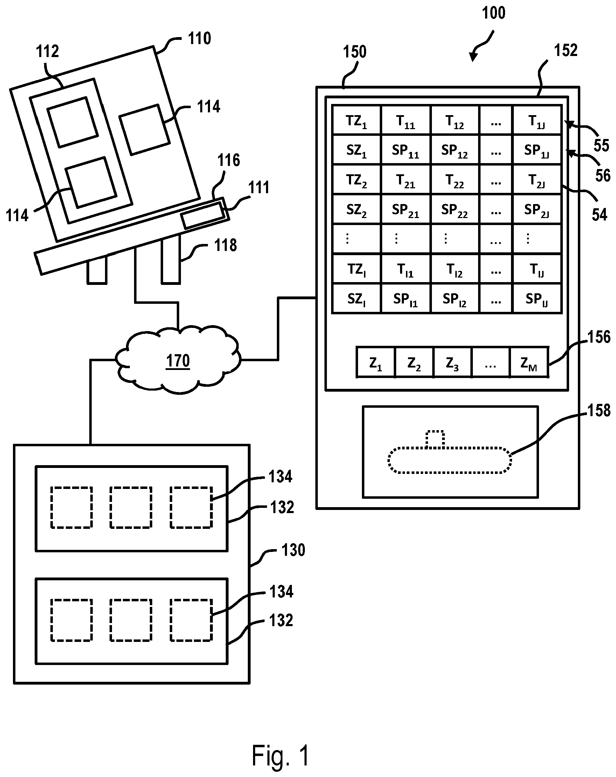

Figur 1 zeigt ein exemplarisches Simulationssystem 100. Das exemplarische Simulationssystem 100 umfasst eine erste Simulationsumgebung 110 sowie eine zweite Simulationsumgebung 130. Ferner umfasst das Simulationssystem 100 ein Simulationscomputersystem 150, welches eine Simulationsschnittstelle 152 bereitstellt. Die unterschiedlichen Komponenten des Simulationscomputersystems 100, d.h. die erste Simulationsumgebung 110, die zweite Simulationsumgebung 130 sowie das Simulationscomputersystem 150, sind mittels Kommunikationsverbindungen über ein Kommunikationsnetzwerk 170 kommunikativ miteinander verbunden. Die erste Simulationsumgebung 110 umfasst einen Leitstand 112, welcher beispielsweise erste physische Steuerelemente 114 bereitstellt, etwa in Form von Bedienelementen des Leitstands 112. Die erste Simulationsumgebung 110 kann ferner beispielsweise erste physische Steuerelemente 114 umfassen, welche nicht von dem Leitstand 112 umfasst sind. Die erste Simulationsumgebung 110 ist beispielsweise auf einer beweglichen Plattform 116 angeordnet. An der Plattform 116 sind Aktoren 118 angeordnet. Bei diesen Aktoren 118 kann es sich beispielsweise um hydraulische, pneumatische und/oder elektrische Aktoren handeln. Eine Bewegungssteuerung 111 der Plattform 116 steuert die Aktoren 118 an, um die Bewegung des Wasserfahrzeugs im Zuge des simulierten Betriebs nachzuahmen. Die Bewegungssteuerung 111 ist an der Plattform 116 angeordnet. Beispielsweise kann die Bewegungssteuerung 111 auch von der Plattform 116 entfernt angeordnet sein. Beispielsweise kann das Simulationscomputersystem 150 die Bewegungssteuerung 111 umfassen.

Die zweite Simulationsumgebung 130 umfasst technische Mittel 132, welche dazu konfiguriert sind, eine visuelle Simulation mit zumindest teilweisen virtuellen Kopien 134 zweiter physischen Steuerelemente bereitzustellen. Bei den entsprechenden technischen Mitteln 132 kann es sich beispielsweise um ein oder mehrere Desktop-PCs, mobile tragbare Endgeräte, wie etwa Tablets, oder Datenbrillen, handeln. Ein oder mehrere der entsprechenden zweiten physischen Steuerelemente können beispielsweise identisch zu ein oder mehreren ersten Steuerelementen 114 der ersten Simulationsumgebung 110 sein. Ein oder mehrere der entsprechenden zweiten physischen Steuerelemente können beispielsweise unterschiedlich zu ein oder mehreren ersten Steuerelementen 114 der ersten Simulationsumgebung 110 sein, aber jeweils dazu konfiguriert sein, denselben Steuerparameter einzustellen.

Die von dem Simulationscomputersystem 150 bereitgestellte Simulationsschnittstelle 152 umfasst beispielsweise eine erste Datenbank 54 mit einer Mehrzahl von Datensätzen von Trefferparametern 55 für eine Mehrzahl von unterschiedlichen Trefferszenarien TZ₁, TZ₂, ..., TZ_{I} des Wasserfahrzeugs. Den einzelnen Trefferszenarien TZ₁, TZ₂, ..., TZ_{I} ist jeweils ein Schadensszenario SZ₁, SZ₂, ..., SZ_{I} des Wasserfahrzeugs zugeordnet, welches Schadensparameter 56 des Wasserfahrzeugs für das jeweilige Trefferszenarien TZ₁, TZ₂, ..., TZ_{I} definiert. Die Trefferszenarien TZ₁, TZ₂, ..., TZ_{I} sind jeweils durch eine Mehrzahl von ein oder mehreren Trefferparametern 55 definiert. Die Trefferparameter 55 umfassen beispielsweise die Trefferparameter T₁₁, T₁₂, ..., T_{1J}, welche das Trefferszenario TZ₁ definieren. Das Trefferszenario TZ₂ ist beispielsweise durch die Trefferparameter T₂₁, T₂₂, ..., T_{2J} definiert. Das Trefferszenario TZ_{I} ist beispielsweise durch die Trefferparameter T_{I1}, T_{I2}, ..., T_{IJ} definiert. Ebenso sind die Schadensszenarien SZ₁, SZ₂, ..., SZ_{I} sind jeweils durch eine Mehrzahl von ein oder mehreren Schadensparametern 56 definiert. Die Schadensparameter 56 umfassen beispielsweise die Schadensparameter SP₁₁, SP₁₂, ..., SP_{1J}, welche das Schadensszenario TZ₁ definieren. Das Schadensszenario SZ₂ ist beispielsweise durch die Schadensparameter SP₂₁, SP₂₂, ..., SP_{2J} definiert. Das Schadensszenario SZ_{I} ist beispielsweise durch die Schadensparameter SP_{I1}, SP_{I2}, ..., SP_{IJ} definiert. Die Schadensszenarien SZ₁, SZ₂, ..., SZ_{I} für die Trefferszenarien TZ₁, TZ₂, ..., TZ_{I} sind unter Verwendung eines Schadensmodells des Wasserfahrzeugs, welches beispielsweise auf der Finite-Element-Methode basiert, vorberechnet. Diese Trefferparameter 55 umfassen beispielsweise Angaben zu einem Einschlagswinkel, einer Einschlagsposition, einer Krafteinwirkung und/oder einer Geschossart des jeweiligen Treffers. Die Schadensparameter 56 können beispielsweise eine Art des Schadens, etwa einen Feuerausbruch, einen Wassereinbruch, eine Beschädigung von Vorrichtungen des Wasserfahrzeugs, eine Fehlfunktion von Vorrichtungen des Wasserfahrzeugs, einen Ausfall von Vorrichtungen des Wasserfahrzeugs, eine Zerstörung von Vorrichtungen und/oder Bereichen des Wasserfahrzeugs, und/oder eine Unterbrechung von technischen Leitungen beschreiben. Ferner können die Schadensparameter 56 beispielsweise eine Position und/oder eine Stärke, d.h. ein Ausmaß, des entsprechenden Schadens definieren. Diese Angaben zu den Trefferparametern 55 und den für diese Treffer berechneten Schadensparametern 56 können beispielsweise in einer Tabelle oder einer anderen Datenstruktur in der Datenbank 152 abgespeichert sein.

Kommt es im Zuge einer Gefechtssimulation zu einem Treffer des militärischen Wasserfahrzeugs, so ist dieser Treffer durch eine Mehrzahl von Trefferparametern charakterisiert. Basierend auf diesen Trefferparametern, welche das Simulationscomputersystem 150 beispielsweise von einem Gefechtssimulationssystem, etwa über das Netzwerk 170 empfängt, wird derjenige Datensatz in der Datenbank 150 bestimmt, dessen Trefferparameter 55 die geringsten Abweichungen von den empfangenen Trefferparametern aufweisen. Somit kann dasjenige Schadensszenario der vorgerechneten Schadensszenarien SZ₁, SZ₂, ..., SZ_{I} bestimmt werden, welches demjenigen Schadenszenario am nächsten kommt, dass durch einen Treffer mit den Trefferparametern gemäß Gefechtssimulation hervorgerufenen werden würde.

In der Datenbank 150 wird also dasjenige Trefferszenario der Trefferszenarien TZ₁, TZ₂, ..., TZ₁ ausgewählt, welches die geringste Abweichung an Trefferparametern aufweist. Für dieses ausgewählte Trefferszenario wird das zugehörige vorberechnete Schadenszenario mit seinen Schadensparametern 56 ausgelesen. In dem Simulationssystem 100 werden gemäß den ausgelesenen Schadensparametern 56 beispielsweise Schäden dargestellt, welche von den Besatzungsmitgliedern des militärischen Wasserfahrzeugs zeitgleich und kooperativ bekämpft werden müssen.

Beispielsweise wird die von den technischen Mitteln 132 der zweiten Simulationsumgebung 130 bereitgestellte visuelle Simulation zum Wiedergeben des ausgelesenen Schadensszenarios gesteuert. Unter Verwendung der ausgelesenen Schadensparameter des bestimmten Datensatzes wird das entsprechende Schadensszenario in der visuellen Simulation wiedergegeben. Beispielsweise werden infolge des Treffers auftretenden Schäden an derjenigen Position, von derjenigen Art und/oder in demjenigen Umfang angezeigt, wie sie von den ausgelesenen Schadensparametern definiert werden. Beispielsweise wird an einer von den Schadensparametern definierten Position des militärischen Wasserfahrzeugs in der visuellen Simulation ein Feuer, ein Wassereinbruch und/oder ein anderer Schaden angezeigt. Dieser angezeigte Schaden ist von ein oder mehreren Besatzungsmitgliedern des militärischen Wasserfahrzeugs, beispielsweise zeitgleich und kooperativ, zu bekämpfen.

Ferner werden ein oder mehrere der Schadensparameter des ausgelesenen Schadensszenarios beispielsweise auf dem Leitstand 122 in der ersten Simulationsumgebung 110 anzeigt, sodass sich ein oder mehrere Besatzungsmitglieder der ersten Gruppe von Besatzungsmitgliedern, welche in der ersten Simulationsumgebung 110 trainieren, an der Bekämpfung des durch den Treffer hervorgerufenen Schadens beteiligen können. Beispielsweise wird auf Anzeigevorrichtungen des Leitstands 110 eine Position und/oder Art des Schadens angezeigt. Beispielsweise umfasst der Schaden einen Ausfall, eine Störung und/oder eine Beschädigung ein oder mehrerer technischer Komponenten des Wasserfahrzeugs, welche auf den Anzeigevorrichtungen des Leitstands 110 angezeigt werden. Beispielsweise werden für die entsprechenden Komponenten Ausfall-, eine Störungs- und/oder eine Beschädigungsmeldung auf den Anzeigevorrichtungen des Leitstands 110 angezeigt. Beispielsweise wird auf dem Leitstand 110 ein Alam ausgegeben, wie etwa ein Feueralarm und/oder ein Alarm wegen eines Wassereinbruchs. Die Besatzungsmitglieder der ersten Gruppe von Besatzungsmitgliedern könne daraufhin beispielsweise aktive Maßnahmen zur Bekämpfung des Schadens und/oder seiner Auswirkungen vornehmen. Beispielsweise können sie Gegenmaßnahmen veranlassen. Beispielsweise können sie redundante Systeme nutzen, um Kapazitäten umzuverteilen und so ausgefallene, gestörte und/oder beschädigte Systemkomponenten zu ersetzen. Ferner können sie beispielsweise Maßnahmen durch Besatzungsmitglieder der zweiten Gruppe von Besatzungsmitgliedern unterstützen und/oder koordinieren. Ferner kann beispielsweise die Bewegungssteuerung 111 der Plattform 116 die Aktoren 118 ansteuern, um Bewegungen des Wasserfahrzeugs in Folge des Treffers nachzuahmen. Beispielsweise umfassen die Schadensparameter 56 zusätzlich Parameter, welche Bewegungen des Wasserfahrzeugs infolge des Treffers definieren. Beispielsweise werden unabhängig von dem spezifischen Trefferszenario, jeweils dieselben Bewegungen des Wasserfahrzeugs simuliert. Zusätzlich oder alternativ können Bewegungen des Wasserfahrzeugs infolge des Treffers durch Bewegungen der von den technischen Mitteln 132 der zweiten Simulationsumgebung 130 bereitgestellte visuelle Simulation simuliert werden.

Ferner umfasst die Schnittstelle 152 beispielsweise Zustandsdaten 156 mit Zustandswerten Z₁, Z₂, ... Z_{M}, welche das Simulationscomputersystem 150 im Zuge des simulierten Betriebs des Wasserfahrzeugs berechnet. Beispielsweise führt das Simulationscomputersystem 150 ein Zustandssimulationsprogramm aus, welches unter Verwendung eines digitalen Modells 158 des Wasserfahrzeugs sowie aktueller Steuerparameter des Wasserfahrzeugs und, im Falle eines Treffers, der ausgelesenen Schadensparameter die Zustände 156 des Wasserfahrzeugs berechnet. Die Steuerparameter des Wasserfahrzeugs werden beispielsweise mittels Steuerelementen 114 der ersten Simulationsumgebung 110 und/oder zumindest teilweise virtuellen Kopien von Steuerelementen 134 in der zweiten Simulationsumgebung 130 eingestellt. Für eine entsprechende Berechnung der aktuellen Zustände des Wasserfahrzeugs in Form der Zustandsdaten 156 verwendet das Simulationsprogram beispielsweise die zuletzt berechnete Zustandswerte als Ausgangswerte. Ergibt sich eine Änderung, werden die zuletzt berechneten Zustandswerte mit den entsprechenden aktualisierten Zustandswerten überschrieben. Die entsprechenden Zustandsdaten 156 können von der ersten Simulationsumgebung 110 bzw. dem Leitstand 112 sowie der zweiten Simulationsumgebung 130 bzw. den technischen Mitteln 132 über das Netzwerk 170 abgerufen werden, um den jeweiligen Besatzungsmitgliedern in der ersten Simulationsumgebung 110 und der zweiten Simulationsumgebung 130 den aktuellen Zustand des Wasserfahrzeugs anzuzeigen.

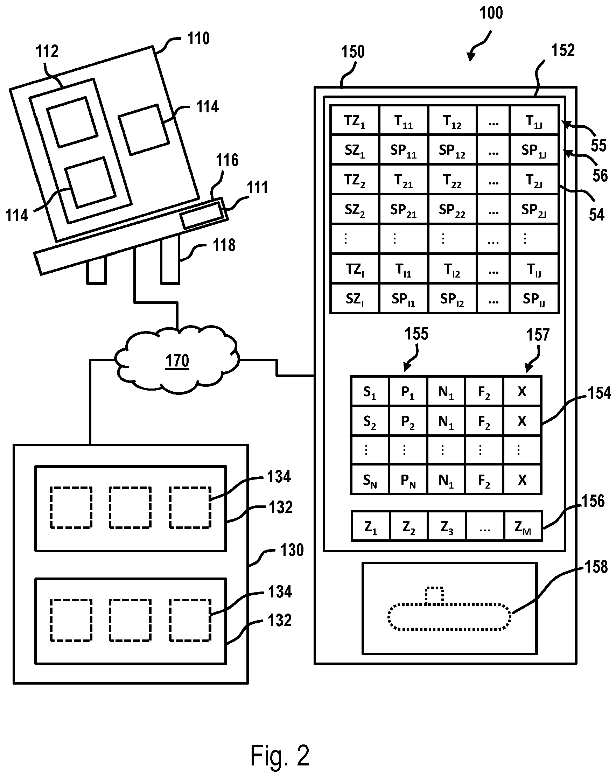

Figur 2 zeigt ein weiteres exemplarisches Simulationssystem 100. Das in Figur 2 angezeigte Simulationssystem 100 stimmt mit dem in Figur 1 gezeigten Simulationssystem 100 überein. Zusätzlich weist, im Falle des in Figur 2 gezeigten Simulationssystem 100, die von dem Simulationscomputersystem 150 bereitgestellte Simulationsschnittstelle 152 ferner eine zweite Datenbank 154 mit Definitionen S₁, S₂, ... S_{N} der ersten Steuerelemente 114 und der zumindest teilweise virtuellen Kopien 134 der zweiten Steuerelemente. Die zweite Datenbank 154 kann beispielsweise eine von der ersten Datenbank 54 verschiedene Datenbank sein. Alternativerweise kann auch die erste Datenbank 54 die zweite Datenbank 154 umfassen. Beispielsweise umfasst die zweite Datenbank 154 für jedes der Steuerelemente 114 und/oder jede Kopie 134 eines Steuerelements jeweils einen aktuell gültigen Steuerparameter 155, d.h. P₁, P₂, ... P_{N}. Beispielsweise sind diese in der zweiten Datenbank 154 eingetragenen Steuerparameter 155 die jeweils aktuell gültigen mittels Steuerelemente 114 oder den zumindest teilweise virtuellen Kopien 134 eingestellten Steuerparameter. Beispielsweise umfassen die in der zweiten Datenbank 154 eingetragenen Steuerparameter 155 alle mittels der ersten Steuerelemente 114 und der Kopien der zweiten Steuerelemente eingestellten Steuerparameter, aus welche jeweils die aktuell gültigen Steuerparameter basierend auf der jeweils geltenden Priorisierung ausgewählt werden. Ferner legt die zweite Datenbank 154 für die Steuerelemente 114 und Kopien 134 von Steuerelementen beispielsweise jeweils Erstpriorisierungen N₁, N₂, ... N_{N} sowie Zweitpriorisierungen F₁, F₂, ... F_{N} fest. Die Erstpriorisierungen N₁, N₂, ... N_{N} definieren beispielsweise für einen Normalbetrieb des Wasserfahrzeugs die Einstellungen der ersten physischen Steuerelemente 114 als ausschließlich gültige Steuerparameter 155 zum Eintrag in die zweite Datenbank 154. Die Zweitpriorisierungen F₁, F₂, ... F_{N} definieren beispielsweise jeweils die Einstellungen der den entsprechenden Zweitpriorisierungen F₁, F₂, ... F_{N} zugeordneten zumindest teilweise virtuellen Kopien 134 der zweiten physischen Steuerelemente als jeweils ausschließlich gültigen Steuerparameter 155 zum Eintrag in die zweite Datenbank 154. Eine entsprechende Priorisierung kann beispielsweise durch entsprechende Schreibrechte implementiert werden. Beispielsweise ordnen die Erstpriorisierungen N₁, N₂, ... N_{N} der ersten Simulationsumgebung 110 bzw. dem Leitstand 112 der ersten Simulationsumgebung 110 die alleinigen Schreibrechte zum Schreiben der gültigen Steuerparameter 155 in die zweite Datenbank 154 zu. Beispielsweise ordnen die Zweitpriorisierungen F₁, F₂, ... F_{N} den technischen Mitteln 132 der zweiten Simulationsumgebung 130 die ausschließlichen Schreibrechte zum Schreiben der Steuerparameter 155 in die zweite Datenbank 154 zu. Ein Wechsel zwischen den Betriebszuständen kann beispielsweise durch Setzen eines Flags 157 erfolgen. Ist ein entsprechendes Flag 157 für eines oder mehrere der Steuerelemente S₁, S₂, ... S_{N} gesetzt, so gelten beispielsweise die Zweitpriorisierungen F₁, F₂, ... F_{N} für die entsprechenden Steuerelemente S₁, S₂, ... S_{N}. Ist beispielsweise kein Flag 157 gesetzt, so gelten für die entsprechenden Steuerelemente S₁, S₂, ... S_{N} beispielsweise jeweils die Erstpriorisierung N₁, N₂, ... N_{N}. Alternativerweise kann beispielsweise ein Wechsel zwischen Betriebszuständen durch ein Überschreiben erfolgen. Beispielsweise umfasst die zweite Datenbank 154 im Normalbetrieb nur die Erstpriorisierungen N₁, N₂, ... N_{N}. Beispielsweise werden im Falle einer simulierten Abweichung von dem Normalbetrieb des Wasserfahrzeugs die entsprechenden Erstpriorisierungen N₁, N₂, ... N_{N} jeweils durch entsprechende Zweitpriorisierungen F₁, F₂, ... F_{N} überschrieben. Eine solche Abweichung von dem Normalbetrieb des Wasserfahrzeugs kann beispielsweise aus einem Treffer des Wasserfahrzeugs resultieren.

Alternativerweise können die Erstpriorisierungen N₁, N₂, ... N_{N} sowie die Zweitpriorisierungen F₁, F₂, ... F_{N} jeweils Aktivierungen der Erfassung der Einstellungen der ersten physischen Steuerelemente 114 bzw. der zumindest teilweise virtuellen Kopien 134 der zweiten physischen Steuerelemente definieren. Beispielsweise definieren die Erstpriorisierungen N₁, N₂, ... N_{N}, dass eine Erfassung der Einstellungen der ersten physischen Steuerelemente 114 durch die Simulationsumgebung 110 bzw. den Leitstand 112 aktiviert ist, während eine Erfassung der Einstellung der zumindest teilweise virtuellen Kopien 134 der zweiten physischen Steuerelemente deaktiviert ist. Demgegenüber definieren die Zweitpriorisierungen F₁, F₂, ... F_{N} beispielsweise eine Deaktivierung der Erfassung der Einstellung der ersten physischen Steuerelemente 114, während die Erfassung der Einstellungen der zumindest teilweise virtuellen Kopien 134 der zweiten physischen Steuerelemente aktiviert wird. Wiederum kann ein Wechsel zwischen Erstpriorisierungen N₁, N₂, ... N_{N} und Zweitpriorisierungen F₁, F₂, ... F_{N} mittels Flags oder eines entsprechenden Überschreibens implementiert werden.

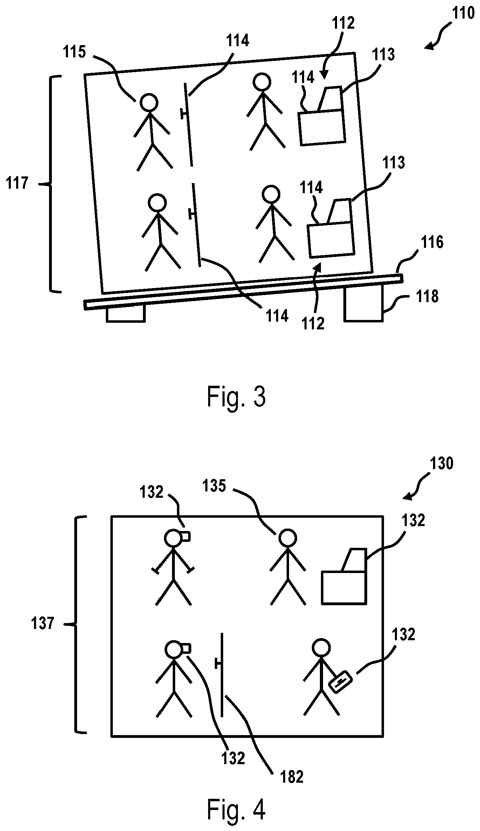

Figur 3 zeigt eine erste exemplarische Simulationsumgebung 110. Die Simulationsumgebung 110 ist beispielsweise auf einer beweglichen Plattform 116 angeordnet. An der Plattform 116 sind Aktoren 118, beispielsweise hydraulische, pneumatische und/oder elektrische Aktoren, angeordnet, welche dazu konfiguriert sind, Bewegungen des Wasserfahrzeugs im Zuge des simulierten Betriebs nachzuahmen. In der ersten Simulationsumgebung 110 befindet sich eine erste Gruppe 117 von Besatzungsmitgliedern 115, welche in der ersten Simulationsumgebung 110 trainiert werden. Zum Training der einzelnen Besatzungsmitglieder 115 der ersten Gruppe 117 von Besatzungsmitgliedern umfasst die erste Simulationsumgebung 110 einen Leitstand 112, beispielsweise mit ein oder mehreren Konsolen 113. Auf diesen Konsolen 113 werden im Falle eines Treffers beispielsweise ein oder mehrere für diesen Treffer ausgelesenen Schadenparameter angezeigt. Ferner umfassen die entsprechenden Konsolen beispielsweise ein oder mehrere erste physische Steuerelemente 114. Bei entsprechenden ersten physischen Steuerelementen handelt es sich beispielsweise um Bedienelemente der Konsole, wie etwa ein Touch-Display, einen Trackball und/oder ein oder mehrere Tasten. Zusätzlich oder alternativ umfasst die erste Simulationsumgebung 110 beispielsweise ein oder mehrere erste physische Steuerelemente 114 unabhängig von dem Leitstand 112. Bei den entsprechenden ersten physischen Steuerelemente 114 kann es sich beispielsweise um Schalter oder Ventile handeln. Im Zuge des simulierten Betriebs des Wasserfahrzeugs können die Besatzungsmitglieder 115 die ersten physischen Steuerelemente 114 dazu verwenden, Steuerparameter einzustellen, die entsprechend erfasst und an eine Simulationsschnittstelle kommuniziert werden. Basierend auf den Einstellungen der Steuerparameter mittels der ersten physischen Steuerelemente 114 werden gegebenenfalls Zustandsänderungen des Wasserfahrzeugs im Zuge der Simulation berechnet und entsprechend wiedergegeben. Die Wiedergabe der entsprechenden Zustände kann beispielsweise über Anzeigen der Konsolen 113 des Leitstands 112 und/oder über die Aktoren 118 erfolgen.

Figur 4 zeigt eine exemplarische zweite Simulationsumgebung 130 zum Trainieren einer zweiten Gruppe 137 von Besatzungsmitgliedern 135. Einzelne Besatzungsmitglieder 135 werden jeweils technische Mittel 132 bereitgestellt, welche dazu konfiguriert sind, eine visuelle Simulation bereitzustellen. Im Falle eines Treffers wird die von den technische Mittel 132 bereitgestellte visuelle Simulation beispielsweise zum Wiedergeben eines für diesen Treffer ausgelesenen Schadensszenarios gesteuert, etwa unter Verwendung von ein oder mehreren dieses Schadensszenario definierenden ausgelesenen Schadenparametern. Die entsprechende visuelle Simulation umfasst dabei zumindest teilweise virtuelle Kopien 134 zweiter Steuerelemente. Beispielsweise sind ein oder mehrere der zweiten Steuerelemente identisch zu ein oder mehreren der ersten Steuerelemente 114 der ersten Simulationsumgebung 110 und/oder beispielsweise sind ein oder mehrere der zweiten Steuerelemente unterschiedlich zu ein oder mehreren der ersten Steuerelemente 114 der ersten Simulationsumgebung 110, aber dazu konfiguriert, denselben Steuerparameter wie ein entsprechendes erstes Steuerelement 114 der ersten Simulationsumgebung 110einzustellen. Die visuelle Simulation kann beispielsweise den in der ersten Simulationsumgebung 110 simulierten Bereich des Wasserfahrzeugs umfassen. Alternativer Weise umfasst die visuelle Simulation den in der ersten Simulationsumgebung 110 simulierten Bereich des Wasserfahrzeugs beispielsweise nicht. Ferner kann die visuelle Simulation weitere Bereiche des Wasserfahrzeugs umfassen. Die technischen Mittel 132 können beispielsweise Datenbrillen umfassen, welche eine vollständige virtuelle Simulation ermöglichen, innerhalb derer ein Besatzungsmitglied 135 mittels Gestensteuerung und/oder ein oder mehreren Controllern mit den virtuellen Komponenten der Simulation interagieren kann. Beispielsweise umfassen die technischen Mittel 132 einen Bildschirm, welcher die vollständig virtuelle Simulation anzeigen kann, innerhalb derer ein Besatzungsmitglied 135 einen Avatar mittels entsprechender Eingabemittel steuern kann. Beispielsweise umfassen die technischen Mittel ein mobiles tragbares Endgerät in Form eines Tablets, welches eine vollständige virtuelle Simulation wiedergibt, in welcher ein Besatzungsmitglied 135 einen Avatar mittels des Tablets steuern kann. Beispielsweise umfassen die technischen Mittel 132 ein Augmented-Reality-Gerät, etwa in Form einer Datenbrille, welches dazu konfiguriert ist, ein von den technischen Mitteln 132 umfasstes taktiles Element 182 mit Bestandteilen des entsprechenden zweiten Steuerelements in virtueller Form zu ergänzen. Dies hat den Vorteil, dass das entsprechende Besatzungsmitglied 135 die haptischen Eigenschaften des entsprechenden zweiten Steuerelements, welche durch das taktile Element 182 physisch nachgestellt werden, trainieren kann. Ergänzende Bestandteile des zweiten Steuerelements, welche nicht von dem taktilen Element 182 umfasst sind, werden beispielsweise in virtueller Form bereitgestellt. Ferner kann zudem die Umgebung, in welcher das entsprechende zweite Steuerelement angeordnet ist, in virtueller Form wiedergegeben werden.

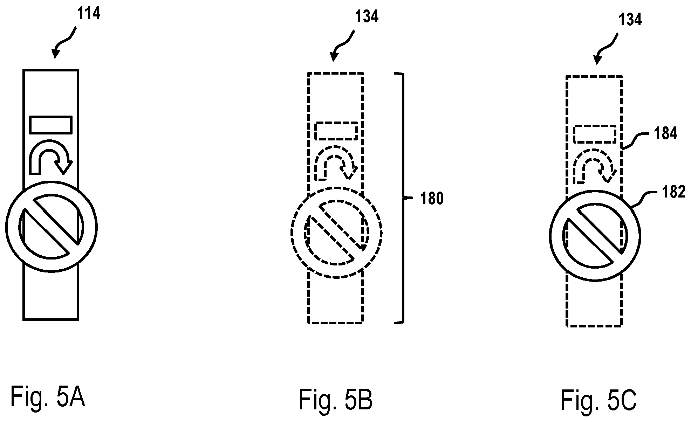

Figur 5a zeigt ein exemplarisches erstes Steuerelement 114 in physischer Form. Beispielhafter Weise ist ein erstes physisches Steuerelement 114 in Form eines Ventils mit einem Handrad zur händischen Betätigung gezeigt. Figur 5b zeigt eine virtuelle Kopie 134 eines zweiten physischen Steuerelements. Dieses zweite physische Steuerelement ist beispielsweise identisch mit dem ersten Steuerelement 114 aus Figur 5a. Bei der virtuellen Kopie handelt es sich u beispielsweise m ein vollständiges virtuelles 3D-Modell des entsprechenden physischen Steuerelements 114 aus Figur 5a. Figur 5c zeigt schließlich eine teilweise virtuelle Kopie 134 eines zweiten Steuerelements, welches beispielsweise identisch ist mit dem ersten physischen Steuerelements 114 aus Figur 5a. Im Falle der teilweisen virtuellen Kopie 134 ist ein taktiles Element 182 in Form eines Handrads zum Schließen und Öffnen des entsprechenden Ventils vorgesehen. Ein Besatzungsmitglied, welches eine Betätigung des entsprechenden Steuerelements unter Verwendung der teilweisen virtuellen Kopie 134 trainiert, kann das taktile Element 182 fassen und physisch drehen, wodurch beispielsweise physisch die haptischen Eigenschaften des physischen Steuerelements 114 aus Figur 5a nachgestellt werden. Das entsprechende taktile Element 182 wird durch zusätzliche Bestandteile 182 in virtueller Form ergänzt, sodass sich für das entsprechende Besatzungsmitglied, welches die teilweise virtuelle Kopie 134 des zweiten physischen Steuerelements betätigt, ein visueller Gesamteindruck ergibt, der beispielsweise identisch mit dem visuellen Eindruck des physischen Steuerelements 114 aus Figur 5a ist. Zudem werden durch das taktile Element 182 auch die haptischen Eigenschaften bei der Betätigung des zugrundeliegenden zweiten physischen Steuerelements durch die die teilweise virtuelle Kopie 134 nachgeahmt.

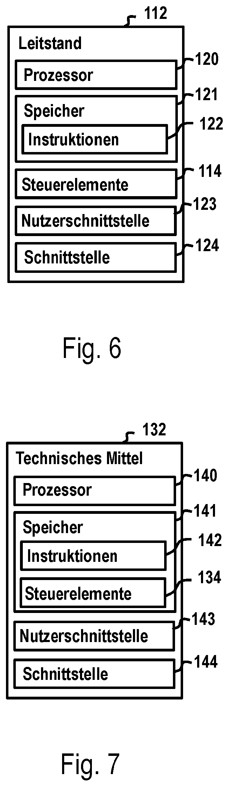

Figur 6 zeigt den Leitstand 112 in schematischer Form. Der Leitstand 112 umfasst einen Prozessor 120 sowie einen Speicher 121 mit Programminstruktionen 122. Durch ein Ausführen der Programminstruktionen 122 durch den Prozessor 120 des Leitstands 112 wird der Prozessor dazu gesteuert, Funktionen des Leitstands bereitzustellen und auszuführen. Hierzu umfasst der Leitstand eine Nutzerschnittstelle 123, welche Eingabe- und Ausgabemittel umfasst, sodass ein Besatzungsmitglied den Leitstand unter Verwendung der Nutzerschnittstelle 123 zur Steuerung des Wasserfahrzeugs nutzen kann. Ferner umfasst der Leitstand 112 eine Schnittstelle zur Ausgabe und Eingabe von Kommunikationssignalen. Beispielsweise kann der Leitstand 112 Steuersignale an Komponenten des Wasserfahrzeugs senden und Rückmeldungen über den Zustand der entsprechenden Komponenten des Wasserfahrzeugs erhalten. Im Zuge des Simulationssystems dient die Schnittstelle 124 zur Kommunikation über das Netzwerk 170, beispielsweise technischen Mitteln 132 der zweiten Simulationsumgebung 130 und/oder mit einem Simulationscomputersystem 150. Ferner umfasst der Leitstand 112 beispielsweise ein oder mehrere erste physische Steuerelemente 114. Beispielsweise können mittels der Ausgabemittel der Nutzerschnittstelle 123i m Falle eines Treffers ein oder mehrere für diesen Treffer ausgelesenen Schadenparameter angezeigt werden.

Figur 7 zeigt eine schematische Darstellung eines exemplarischen technischen Mittels 132. Das technische Mittel 132 umfasst einen Prozessor 140 sowie einen Speicher 141 mit Programminstruktionen 142. Eine ausführende Programminstruktionen 142 durch den Prozessor 141 veranlasst den Prozessor 141 dazu, das technische Mittel 132 Funktionen für ein Besatzungsmitglied bereitzustellen. Hierzu umfasst das technische Mittel 132 beispielsweise eine Nutzerschnittstelle 143 mit Ausgabemitteln. Die Nutzerschnittstelle 143 ermöglicht es dem Besatzungsmitglied mit dem technischen Mittel 132 zu interagieren. In dem Speicher 141 des technischen Mittels 132 ist beispielsweise ein vollständiges oder teilweises virtuelles Modell zum Beistellen von zumindest teilweise virtuellen Kopien 134 von ein oder mehreren zweiten Steuerelemente gespeichert. Hierbei handelt es sich beispielsweise um ein vollständiges virtuelles 3D-Modell, des entsprechenden zweiten Steuerelements oder um ergänzende Bestandteile des entsprechenden zweiten Steuerelements in virtueller Form. Das technische Mittel 132 ist dazu konfiguriert unter Verwendung der Nutzerschnittstelle 134 einem das technische Mittel 132 nutzenden Besatzungsmitglied eine visuelle Simulation bereitzustellen. Diese visuelle Simulation umfasst die jeweiligen zumindest teilweise virtuellen Kopien 134 der zweiten Steuerelemente. Die Nutzerschnittstelle 134 ermöglicht es dem Besatzungsmitglied beispielsweise ferner mit der bereitgestellten zumindest teilweise virtuellen Kopie 134 zu interagieren. Ferner umfassen die technischen Mittel 132 beispielsweise Kommunikationsschnittstellen 144 zur Kommunikation mit externen Komponenten, beispielsweise mit anderen technischen Mitteln 132, über das Netzwerk 170 mit der ersten Simulationsumgebung 110 und/oder über das Netzwerk 170 mit einem Simulationscomputersystem 150. Im Falle eines Treffers wird die von dem technische Mittel 132 unter Verwendung der Nutzerschnittstelle 134 bereitgestellte visuelle Simulation beispielsweise zum Wiedergeben eines für diesen Treffer ausgelesenen Schadensszenarios gesteuert, etwa unter Verwendung von ein oder mehreren dieses Schadensszenario definierenden ausgelesenen Schadenparametern.

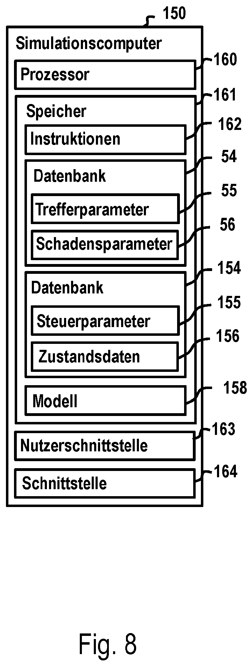

Figur 8 zeigt das exemplarische Simulationscomputersystem 150. Das Simulationscomputersystem 150 umfasst einen Prozessor 160 sowie einen Speicher 161 mit Programminstruktionen 162. Die Programminstruktionen 162 sind dazu konfiguriert durch den Prozessor 160 das Simulationscomputersystem 150 zu steuern. Beispielsweise umfassen die Programminstruktionen 162 ein Zustandssimulationsprogramm. Das Simulationscomputersystem kann beispielsweise eine Nutzerschnittstelle 136 umfassen, welche es einem Nutzer ermöglicht, mit dem Simulationscomputersystem 150 zu interagieren. Ferner umfasst das Simulationscomputersystem 150 eine Kommunikationsschnittstelle 164, welche eine Kommunikation des Simulationscomputersystems 150 mit anderen Komponenten des Simulationssystems, wie etwa dem Leitstand 112 der ersten Simulationsumgebung 110 oder den technischen Mitteln 132 der zweiten Simulationsumgebung 132, etwa über ein Kommunikationsnetzwerk 170, ermöglicht.

Der Speicher 161 des Simulationscomputersystems 150 umfasst beispielsweise eine erste Datenbank 54. In der ersten Datenbank 54 ist eine Mehrzahl von Datensätzen mit Trefferparametern 55 für eine Mehrzahl von unterschiedlichen Trefferszenarien des Wasserfahrzeugs gespeichert. Den Trefferszenarien ist jeweils ein Schadensszenarium des Wasserfahrzeugs zugeordnet, welche Schadensparameter 56 des Wasserfahrzeugs definiert. Die entsprechenden Schadensparameter 56 sind ebenfalls in den Datensätzen in dem Speicher 161 des Simulationscomputersystems 150 gespeichert. Die Schadensszenarien bzw. deren Schadensparameter 56 für die Trefferszenarien bzw. die Trefferparameter 55 sind unter Verwendung eines Schadensmodells des Wasserfahrzeugs, welches beispielsweise auf einer Finite-Elemente-Methode basiert, vorberechnet.

Ferner umfasst der Speicher des Simulationscomputersystems 150 beispielsweise eine zweite Datenbank 154, in welcher die aktuellen Steuerparameter 155 gespeichert sind, welche mittels der ersten physischen Steuerelemente 114 und der zumindest teilweise virtuellen Kopien 134 der zweiten Steuerelemente eingestellt sind. Ferner umfasst die zweite Datenbank 154 beispielsweise Zustandsdaten 156 des Wasserfahrzeugs, welche für den simulierten Betrieb des Wasserfahrzeugs unter Verwendung der aktuellen Steuerparameter 155, beispielsweise durch ein Zustandssimulationsprogramm, berechnet wurden. Die entsprechenden aktuellen Steuerparameter 155 sowie die Zustandsdaten 156 stellt das Simulationscomputersystem 150 beispielsweise zum Abruf durch externe Komponenten, wie etwa den Leitstand 112 der ersten Simulationsumgebung 110 und/oder die technischen Mittel 132 der zweiten Simulationsumgebung 130 bereit. Im Falle eines Treffers werden beispielsweise zusätzlich Schadensparameter 56 eines dem entsprechenden Treffer am nächsten kommenden Schadenszenarios zum Abruf bereitgestellt.

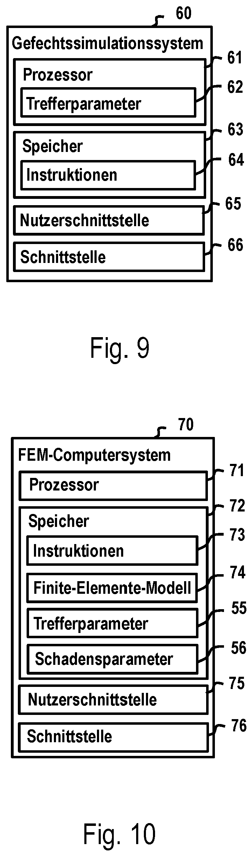

Figur 9 zeigt ein exemplarisches Gefechtssimulationssystem 60. Das Gefechtssimulationssystem 60 umfasst einen Prozessor 61 sowie einen Speicher 62 mit Programminstruktionen 64. Die Programminstruktionen 64 sind dazu konfiguriert durch den Prozessor 61 das Gefechtssimulationssystem 60 zum Ausführen einer Gefechtssimulation zu steuern. Das Gefechtssimulationssystem 60 berechnet im Zuge einer Gefechtssimulation, welche das Gefechtssimulationssystem 60 beispielsweise unter Verwendung eines Gefechtssimulationsprogramms ausführt, einen Treffer des Wasserfahrzeugs. Der entsprechende Treffer ist durch Trefferparameter 62 definiert. Das Gefechtssimulationssystem 60 kann beispielsweise eine Nutzerschnittstelle 65 umfassen, welche es einem Nutzer ermöglicht, mit dem Gefechtssimulationssystem 60 zu interagieren. Ferner umfasst das Gefechtssimulationssystem 60 eine Kommunikationsschnittstelle 66, welche eine Kommunikation des Gefechtssimulationssystems 60 mit anderen Komponenten des Simulationssystems, wie etwa dem Simulationscomputersystem 150, beispielsweise über ein Kommunikationsnetzwerk 170, ermöglicht. Die den Treffer des Wasserfahrzeugs gemäß der Gefechtssimulation definierenden Trefferparameter 62 sendet das Gefechtssimulationssystem 60 beispielsweise an das Simulationscomputersystem 150 zum Bestimmen eines dem entsprechenden Treffer am nächsten kommendes vorberechnetes Schadensszenario.

Figur 10 zeigt ein exemplarisches FEM-Computersystem 70. Das FEM-Computersystem 70 umfasst einen Prozessor 71 sowie einen Speicher 72 mit Programminstruktionen 74. Die Programminstruktionen 74 sind dazu konfiguriert durch den Prozessor 71 das FEM-Computersystem 70 zum Ausführen einer FEM-Berechnung zu steuern. Das FEM-Computersystem 70 berechnet im Zuge beispielsweise Schadensparameter 56 für einen durch Trefferparameter 55 definierten Treffer des militärischen Wasserfahrzeugs. Hierzu verwendet das FEM-Computersystem 70 beispielsweise ein Finite-Elemente-Modell des Wasserfahrzeugs. Auf dem FEM-Computersystem 70 werden durch die Programminstruktionen 74 beispielsweise ein oder mehrere Computerprogramme implementiert, welche ein oder mehrere der folgenden Komponenten zum Ausführen einer FEM-Berechnung umfassen: ein CAD-Programm, einen FE-Präprozessor, einen FEM-Gleichungslöser, und einen FE-Postprozessor. Das FEM-Computersystem 70 ist konfiguriert zum Vorberechnen einer Mehrzahl von Schadensszenarien, welche jeweils durch eine Mehrzahl von Schadensparametern 56 definiert werden, für eine Mehrzahl von Trefferszenarien, welche jeweils durch eine Mehrzahl von Trefferparametern 55 definiert werden. Die resultierenden Schadensszenarien bzw. Schadensparametern 56 werden unter Verwendung der zugehörigen Trefferszenarien bzw. Trefferparametern 55 zur späteren Verwendung im Zuge eines oder mehrerer Gefechtstrainings durch das Simulationssystem vorberechnet. Das FEM-Computersystem 70 kann beispielsweise eine Nutzerschnittstelle 75 umfassen, welche es einem Nutzer ermöglicht, mit dem FEM-Computersystem 70 zu interagieren. Ferner umfasst das FEM-Computersystem 70 eine Kommunikationsschnittstelle 76, welche eine Kommunikation des FEM-Computersystems 70 mit anderen Komponenten des Simulationssystems, wie etwa dem Simulationscomputersystem 150, beispielsweise über ein Kommunikationsnetzwerk 170, ermöglicht. Die Datenübertragung kann dabei beispielsweise kabelgebunden oder kabellos erfolgen. Beispielsweise stellt das FEM-Computersystem 70 die vorberechneten Schadensszenarien bzw. Schadensparametern 56 zusammen mit den zugehörigen Trefferszenarien bzw. Trefferparametern 55 zur späteren Verwendung im Zuge eines oder mehrerer Gefechtstrainings dem Simulationssystem 100, etwa dem Simulationscomputersystem 150, zur Verfügung.

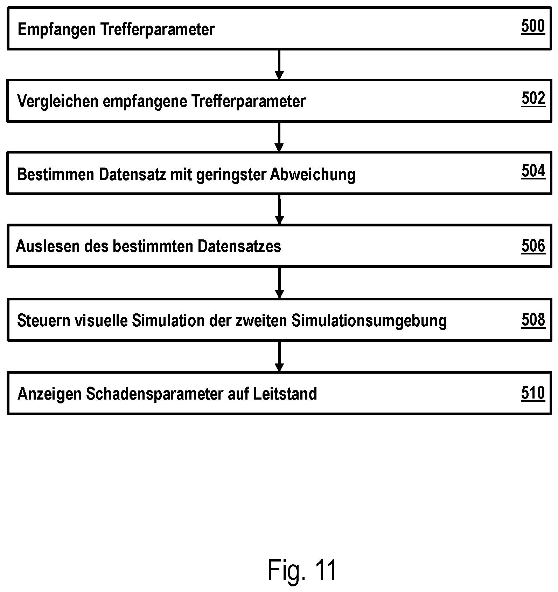

Figur 11 zeigt ein Verfahren zum Betrieb eines Simulationssystems zum Durchführen eines zeitgleichen kooperativen Gefechtstrainings einer Mehrzahl von Besatzungsmitgliedern eines militärischen Wasserfahrzeugs. Das Simulationssystem umfasst eine erste Simulationsumgebung mit einem physischen Leitstand des Wasserfahrzeugs zum Trainieren einer ersten Gruppe von Besatzungsmitgliedern. Die erste Simulationsumgebung umfasst ein oder mehrere erste physische Steuerelemente des Wasserfahrzeugs. Die ersten physischen Steuerelemente sind jeweils dazu konfiguriert, einen oder mehrere Steuerparameter für den Betrieb des Wasserfahrzeugs einzustellen. Der Leitstand ist dazu konfiguriert, mittels der ersten physischen Steuerelemente eingestellte Steuerparameter zu erfassen und an eine Simulationsschnittstelle des Simulationssystems zu kommunizieren.

Das Simulationssystem umfasst ferner eine von der ersten Simulationsumgebung räumlich getrennte zweite Simulationsumgebung zum Trainieren einer zweiten Gruppe von Besatzungsmitgliedern. Die zweite Simulationsumgebung umfasst technische Mittel, welche dazu konfiguriert sind, eine visuelle Simulation bereitzustellen, welche ein oder mehrere zumindest teilweise virtuelle Kopien ein oder mehrerer zweiter physischer Steuerelemente des Wasserfahrzeugs zum Einstellen der Steuerparameter umfasst. Die technischen Mittel sind ferner dazu konfiguriert, mittels der Kopien eingestellte Steuerparameter zu erfassen und an die Simulationsschnittstelle des Simulationssystems zu kommunizieren.

Die Simulationsschnittstelle des Simulationssystems umfasst einen Speicher. In dem Speicher ist eine erste Datenbank mit einer Mehrzahl von Datensätzen von Trefferparametern für eine Mehrzahl von unterschiedlichen Trefferszenarien des Wasserfahrzeugs und den Trefferszenarien jeweils zugeordneten Schadensszenarien des Wasserfahrzeugs gespeichert. Die Schadensszenarien definieren jeweils Schadensparameter des Wasserfahrzeugs. Die Schadensszenarien für die Trefferszenarien sind unter Verwendung eines Schadensmodells des Wasserfahrzeugs vorberechnet.

In Block 500 wird im Zuge des Gefechtstrainings zumindest ein Satz von Trefferparametern für zumindest einen Treffer des Wasserfahrzeugs von einem Gefechtssimulationssystem durch die Simulationsschnittstelle empfangen. In Block 510 werden die empfangenen Trefferparameter mit den Trefferparametern der in der ersten Datenbank gespeicherten Datensätze verglichen. In Block 512 wird ein Datensatz von Trefferparametern der Mehrzahl von Datensätzen in der ersten Datenbank bestimmt, dessen Trefferparameter die geringsten Abweichungen von den empfangenen Trefferparametern aufweisen. In Block 514 wird das dem bestimmten Datensatz zugeordnete Schadensszenario aus der ersten Datenbank ausgelesen. In Block 516 wird zumindest die von den technischen Mitteln der zweiten Simulationsumgebung bereitgestellte visuelle Simulation zum Wiedergeben des ausgelesenen Schadensszenarios gesteuert. In Block 518 werden auf ein oder mehreren Anzeigevorrichtungen des Leitstands fakultativ ein oder mehrere der Schadensparameter des ausgelesenen Schadensszenarios angezeigt. Beispielsweise werden die Schadensparameter zum Berechnen eines aktuellen Zustands des Wasserfahrzeugs unter Verwendung eines digitalen Modells des Wasserfahrzeugs sowie für die Simulation des Wasserfahrzeugs gültigen Steuerparameter verwendet.

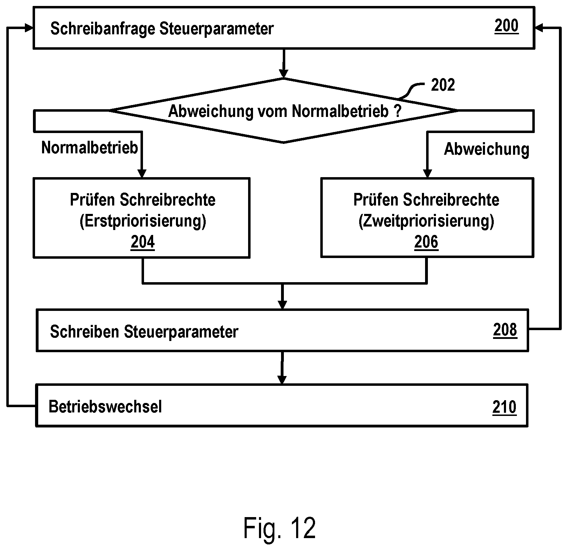

Figur 12 zeigt ein Verfahren zum Schreiben aktueller Steuerparameter in die Simulationsschnittstelle. In Block 200 empfängt die Simulationsschnittstelle eine Schreibanfrage zum Schreiben eines Steuerparameters. Die entsprechende Schreibanfrage kann beispielsweise für einen Steuerparameter gelten, welcher mittels eines ersten physischen Steuerelements eingestellt wurde, oder für einen Steuerparameter, welcher mittels einer zumindest teilweise virtuellen Kopie eines zweiten physischen Steuerelements eingestellt wurde. In Block 202 wird beispielsweise bestimmt, ob ein Normalbetrieb oder eine Abweichung von dem Normalbetrieb vorliegt. Eine Abweichung von dem Normalbetrieb kann beispielsweise aus einem Treffer des Wasserfahrzeugs resultieren. Diese Prüfung kann beispielsweise auf einem Flag basieren. Ist ein entsprechender Flag nicht gesetzt, kann es sich beispielsweise um den Normalbetrieb handeln. Ist ein entsprechender Flag gesetzt, kann es sich beispielsweise um eine Abweichung von dem Normalbetrieb handeln. Wird in Block 202 festgestellt, dass es sich bei dem simulierten Betrieb des Wasserfahrzeugs um einen Normalbetrieb handelt, wird das Verfahren in Block 204 fortgesetzt. In diesem Fall wird ein Schreibrecht basierend auf der Erstpriorisierung zum Schreiben des angefragten Steuerparameters geprüft. Fällt die Prüfung positiv aus, wird der entsprechende Steuerparameter in Block 208 in die Simulationsschnittstelle geschrieben. Fällt die Prüfung negativ aus, wird das Schreiben des Steuerparameters verweigert und die Schreibanfrage aus Block 200 abgelehnt. Wird in Block 202 festgestellt, dass es sich bei dem simulierten Betrieb des Wasserfahrzeugs um eine Abweichung von dem Normalbetrieb handelt, d.h. um eine simulierte Abweichung von dem Normalbetrieb, wird das Verfahren in Block 206 fortgesetzt. In Block 206 werden Schreibrechte für die Schreibanfrage basierend auf der Zweitpriorisierungen geprüft. Fällt die Prüfung positiv aus, wird das Verfahren in Block 208 fortgesetzt und der entsprechende Steuerparameter in die Simulationsschnittstelle geschrieben. Fällt die Prüfung negativ aus, wird das Schreiben des Steuerparameters verweigert und die Schreibanfrage aus Block 200 abgelehnt. Dieses Verfahren wird für Schreibanfragen im Zuge des simulierten Betriebs des Wasserfahrzeugs beispielsweise wiederholt ausgeführt. Beispielsweise wird jedes Mal eine entsprechende Schreibanfrage gestellt, wenn im Zuge des Trainings eine Einstellung eines Steuerparameters mittels eines ersten Steuerelements oder einer zumindest teilweise virtuellen Kopie eines zweiten Steuerelements geändert wird. Im Zuge des simulierten Betriebs kann es zu einem Betriebswechsel in Block 210 von dem Normalbetrieb zu einer Abweichung von dem Normalbetrieb oder umgekehrt kommen. Nachfolgende Schreibanfragen in Block 200 werden dann jeweils unter Berücksichtigung des entsprechenden Betriebswechsels geprüft.

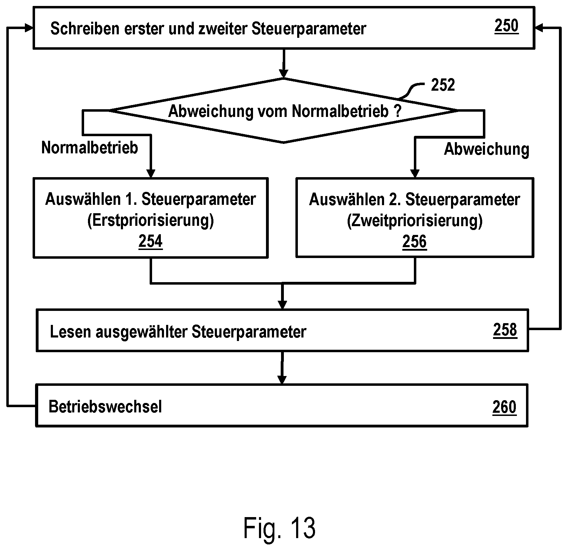

Figur 13 zeigt ein Verfahren zum Auswählen aktueller Steuerparameter in der Simulationsschnittstelle aus geschriebenen Steuerparameter. In diesem Fall werden beispielsweise sowohl mittels der ersten physischen Steuerelemente eingestellte Steuerparameter, d.h. erste Steuerparameter, als auch mittels der Kopien der zweiten Steuerelemente eingestellte Steuerparameter, d.h. zweite Steuerparameter. Beispielsweise sind den Simulationsumgebungen jeweils Schnittstellenparameter, in welche die entsprechenden Simulationsumgebungen jeweils per Schnittstellendefinition schreiben dürfen. In diese Schnittstellenparameter können die Simulationsumgebungen beispielsweise jederzeit die in ihnen eingestellten Steuerparameter schreiben. Ein Flag, welches zwischen Erstpriorisierung, z.B. Fernbedienung, und Zweitpriorisierung, z.B. lokale Bedienung unterscheidet, signalisiert dem Simulationsmodell, welchen der Schnittstellenwerte es als für die Simulation des Wasserfahrzeugs gültigen Steuerparameter übernehmen soll. Wenn beispielsweise das Flag auf Normalbetrieb steht und die zweite Simulationsumgebung beispielsweise einen Öffnungsgrad einer virtuellen Kopie eines Ventils in der virtuellen Umgebung in die Simulationsschnittelle schreibt, steht dieser Steuerparameter zwar als Wert in der Simulationsschnittstelle bzw. in einem der zweiten Simulationsumgebung zugeordneten Schnittstellenparameter, wird aber nicht als gültiger Steuerparameter für die Simulation übernommen bzw. verwendet.

In Block 250 werden sowohl die ersten als auch die zweiten Steuerparameter in die Simulationsschnittstelle geschrieben. In Block 252 wird beispielsweise bestimmt, ob ein Normalbetrieb oder eine Abweichung von dem Normalbetrieb vorliegt. Eine Abweichung von dem Normalbetrieb kann beispielsweise aus einem Treffer des Wasserfahrzeugs resultieren. Eine solche Prüfung erfolgt beispielsweise auf eine Leseanfrage zum Lesen der aktuell für die Simulation des Wasserfahrzeugs gültige Steuerparameter hin. Diese Prüfung kann beispielsweise auf einem Flag basieren. Ist ein entsprechender Flag nicht gesetzt, kann es sich beispielsweise um den Normalbetrieb handeln. Ist ein entsprechender Flag gesetzt, kann es sich beispielsweise um eine Abweichung von dem Normalbetrieb handeln. Wird in Block 252 festgestellt, dass es sich bei dem simulierten Betrieb des Wasserfahrzeugs um einen Normalbetrieb handelt, wird das Verfahren in Block 254 fortgesetzt. In diesem Fall werden beispielsweise die ersten Steuerparameter ausgewählt basierend auf der Erstpriorisierung. Wird in Block 202 für ein oder mehrere der Steuerelemente bzw. zugehörigen Steuerparameter festgestellt, dass es sich bei dem simulierten Betrieb des Wasserfahrzeugs um eine Abweichung von dem Normalbetrieb handelt, d.h. um eine simulierte Abweichung von dem Normalbetrieb, wird das Verfahren in Block 256 fortgesetzt. In Block 256 werden beispielsweise die zweiten Steuerparameter ausgewählt, welche mittels der den Zweitpriorisierungen der entsprechenden Abweichung vom Normalbetrieb zugeordneten Kopien der zweiten Steuerelemente eingestellt wurden. In Block 258 werden die ausgewählten ersten und/oder zweiten Steuerparameter gelesen und als aktuell für die Simulation des Wasserfahrzeugs gültige Steuerparameter verwendet. Im Zuge des simulierten Betriebs kann es zu einem Betriebswechsel in Block 260 von dem Normalbetrieb zu einer Abweichung von dem Normalbetrieb oder umgekehrt kommen. Nachfolgende Leseanfragen beim Initiieren des Blocks 252 werden dann jeweils unter Berücksichtigung des entsprechenden Betriebswechsels geprüft.

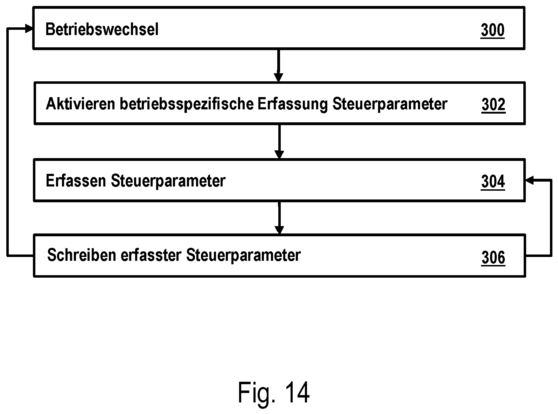

Figur 14 zeigt ein Verfahren zum Betriebswechsel basierend auf einer Aktivierung und Deaktivierung der Erfassung von Einstellungen der ersten physischen Steuerparameter sowie der zumindest teilweise virtuellen Kopien. Ist die Erfassung mittels eines ersten physischen Steuerparameter deaktiviert, kann beispielsweise keine Einstellung eines zugeordneten Steuerparameters mittels des entsprechenden ersten Steuerelements vorgenommen werden. Ist die Erfassung mittels einer Kopie eines zweiten physischen Steuerparameters deaktiviert, kann beispielsweise keine Einstellung eines zugeordneten Steuerparameters mittels der entsprechenden Kopie vorgenommen werden. Beispielsweise kann die entsprechende Kopie gar nicht betätigt werden, solange für sie die Erstpriorisierung en gelten. In Block 300 kommt es zu einem Betriebswechsel von dem Normalbetrieb zu einer Abweichung von dem Normalbetrieb oder umgekehrt. Eine Abweichung von dem Normalbetrieb kann beispielsweise aus einem Treffer des Wasserfahrzeugs resultieren. Daraufhin erfolgt eine Aktivierung der betriebsspezifischen Erfassung der Einstellungen von Steuerparametern. Im Normalbetrieb wird eine Erfassung der Einstellungen der physischen Steuerparameter aktiviert, während eine Erfassung der Einstellungen der zumindest teilweise virtuellen Kopien der physischen Steuerparameter deaktiviert wird. Im Zuge einer simulierten Abweichung von dem Normalbetrieb wird die Erfassung der Einstellungen der ersten physischen Steuerelemente deaktiviert, während die Erfassung der Einstellungen der zumindest teilweise virtuellen Kopien zweiter physischen Steuerelemente aktiviert wird. In Block 304 erfolgt ein Erfassen der Steuerparameter derjenigen Steuerelemente, deren Einstellungserfassung aktiviert wurde. Im Falle eines Normalbetriebs erfolgt die Erfassung der Einstellung der physischen Steuerparameter, im Falle einer Abweichung von dem Normalbetrieb ist dies die Erfassung der Einstellungen der zumindest teilweise virtuellen Kopien der zweiten physischen Steuerelemente. In Block 306 werden die erfassten Steuerparameter in die Simulationsschnittstelle geschrieben. Das Verfahren wird in Block 304 fortgesetzt. Änderungen der Einstellungen von Steuerelementen, für welche die Erfassung aktiviert ist, werden in Block 304 erfasst und in Block 306 in die Simulationsschnittstelle geschrieben. Kommt es zu einem erneuten Betriebswechsel von der Abweichung von dem Normalbetrieb zu dem Normalbetrieb oder umgekehrt, so wird das Verfahren mit Block 300 fortgesetzt.

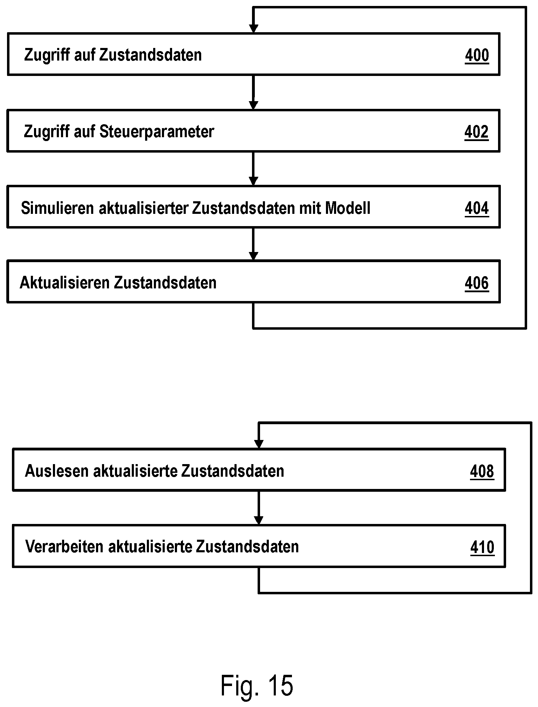

Figur 15 zeigt ein exemplarisches Verfahren zur Simulation von Zuständen eines Wasserfahrzeugs. In Block 400 erfolgt ein Zugriff auf aktuelle Zustandsdaten für das Wasserfahrzeug. Die entsprechenden aktuellen Zustandsdaten können das Ergebnis eines vorangegangenen Simulationsschritts sein. In Block 402 erfolgt ein Zugriff auf aktuelle Steuerparameter für das Wasserfahrzeug. Diese Steuerparameter werden beispielsweise mittels erster physischer Steuerelemente oder zumindest teilweise virtueller Kopien zweiter physischer Steuerelemente eingestellt. In Block 404 wird ein aktueller Zustand des Wasserfahrzeugs unter Verwendung der Zustandsdaten aus Block 400 sowie der Steuerparameter aus Block 402 unter Verwendung eines digitalen Modells des Wasserfahrzeugs simuliert. Dies wird beispielsweise durch ein Zustandssimulationsprogramm ausgeführt. Die Ergebnisse der entsprechenden Simulation werden in Block 406 zum Aktualisieren der Zustandsdaten verwendet. Das Verfahren wird beispielsweise wiederholt zyklisch fortgesetzt mit Block 400. Beispielsweise wird das Verfahren jedes Mal wiederholt, wenn sich ein Steuerparameter ändert.

Unabhängig von der Aktualisierung der Zustandsdaten, d.h. asynchron zu den Blöcken 400 bis 406, können die aktualisierten Zustandsdaten in Block 408 von weiteren Komponenten des Simulationssystems ausgelesen werden. Beispielsweise werden die aktualisierten Zustandsdaten von einer ersten Simulationsumgebung bzw. dem Leitstand in der ersten Simulationsumgebung und der zweiten Simulationsumgebung bzw. den technischen Mitteln der zweiten Simulationsumgebung aus der Simulationsschnittstelle ausgelesen. In Block 410 werden die ausgelesenen Zustandsdaten verarbeitet, beispielsweise werden die ausgelesenen Zustandsdaten den Besatzungsmitgliedern im Zuge des Trainings angezeigt. Das Verfahren wird beispielsweise bei Bedarf oder zyklisch mit Block 408 fortgesetzt.

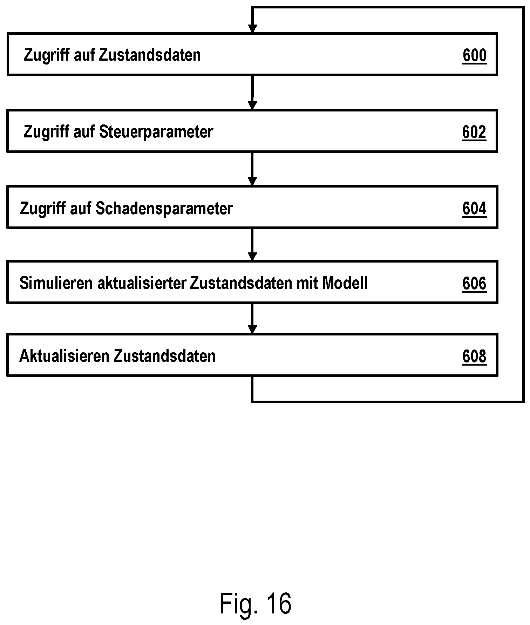

Figur 16 zeigt ein exemplarisches Verfahren zur Simulation von Zuständen eines Wasserfahrzeugs im Falle eines Treffers des Wasserfahrzeugs im Zuge einer Gefechtssimulation. In Block 600 erfolgt ein Zugriff auf aktuelle Zustandsdaten für das Wasserfahrzeug. Die entsprechenden aktuellen Zustandsdaten können das Ergebnis eines vorangegangenen Simulationsschritts sein. In Block 602 erfolgt ein Zugriff auf aktuelle Steuerparameter für das Wasserfahrzeug. Diese Steuerparameter werden beispielsweise mittels erster physischer Steuerelemente oder zumindest teilweise virtueller Kopien zweiter physischer Steuerelemente eingestellt. In Block 604 erfolgt ein Zugriff auf Schadensparameter eines Schadensszenarios, welches dem Treffer zugeordnet wird. Dieser Zugriff erfolgt beispielsweise gemäß dem Verfahren aus Figur 11. Im Zuge des Gefechtstrainings wird von einem Gefechtssimulationssystem für den entsprechenden Treffer ein Satz von Trefferparametern empfangen. Die empfangenen Trefferparameter werden mit den Trefferparametern von in einer Datenbank der Simulationsschnittstelle gespeicherten Datensätze verglichen. In einem Speicher der Simulationsschnittstelle ist eine entsprechende Datenbank mit einer Mehrzahl von Datensätzen von Trefferparametern für eine Mehrzahl von unterschiedlichen Trefferszenarien des Wasserfahrzeugs und den Trefferszenarien jeweils zugeordneten Schadensszenarien des Wasserfahrzeugs gespeichert. Die Schadensszenarien definieren jeweils Schadensparameter des Wasserfahrzeugs. Die Schadensszenarien für die Trefferszenarien sind unter Verwendung eines Schadensmodells des Wasserfahrzeugs vorberechnet. Unter Verwendung der empfangenen Trefferparameter wird ein Datensatz der Mehrzahl von Datensätzen bestimmt, dessen Trefferparameter die geringsten Abweichungen von den empfangenen Trefferparametern aufweisen. Um auf die Schadensparameter des Schadensszenarios zuzugreifen, welches dem Treffer bzw. dem bestimmten Datensatz zugeordnet wird, wird das Schadensszenario des bestimmten Datensatzes mit den Schadensparametern aus der Datenbank ausgelesen. In Block 606 wird ein aktueller Zustand des Wasserfahrzeugs unter Verwendung der Zustandsdaten aus Block 600, der Steuerparameter aus Block 602 sowie der von dem ausgelesenen Schadensszenario definierten Schadensparameter aus Block 404 unter Verwendung eines digitalen Modells des Wasserfahrzeugs simuliert. Dies wird beispielsweise durch ein Zustandssimulationsprogramm ausgeführt. Die Ergebnisse der entsprechenden Simulation werden in Block 608 zum Aktualisieren der Zustandsdaten verwendet. Das Verfahren wird beispielsweise wiederholt zyklisch fortgesetzt mit Block 600. Beispielsweise wird das Verfahren jedes Mal wiederholt, wenn sich ein Steuerparameter ändert. Beispielsweise wird das Verfahren jedes Mal wiederholt, wenn sich von einem Gefechtssimulationssystem ein Satz von Trefferparametern für einen Treffer des Wasserfahrzeugs im Zuge der Gefechtssimulation empfangen wird.

Unabhängig von der Aktualisierung der Zustandsdaten, d.h. asynchron zu den Blöcken 600 bis 606, können ferner, wie in Figur 14 gezeigt, die aktualisierten Zustandsdaten in Block 408 von weiteren Komponenten des Simulationssystems ausgelesen werden. Beispielsweise werden die aktualisierten Zustandsdaten von einer ersten Simulationsumgebung bzw. dem Leitstand in der ersten Simulationsumgebung und der zweiten Simulationsumgebung bzw. den technischen Mitteln der zweiten Simulationsumgebung aus der Simulationsschnittstelle ausgelesen. In Block 410 werden die ausgelesenen Zustandsdaten verarbeitet, beispielsweise werden die ausgelesenen Zustandsdaten den Besatzungsmitgliedern im Zuge des Trainings angezeigt. Das Verfahren wird beispielsweise bei Bedarf oder zyklisch mit Block 408 fortgesetzt.

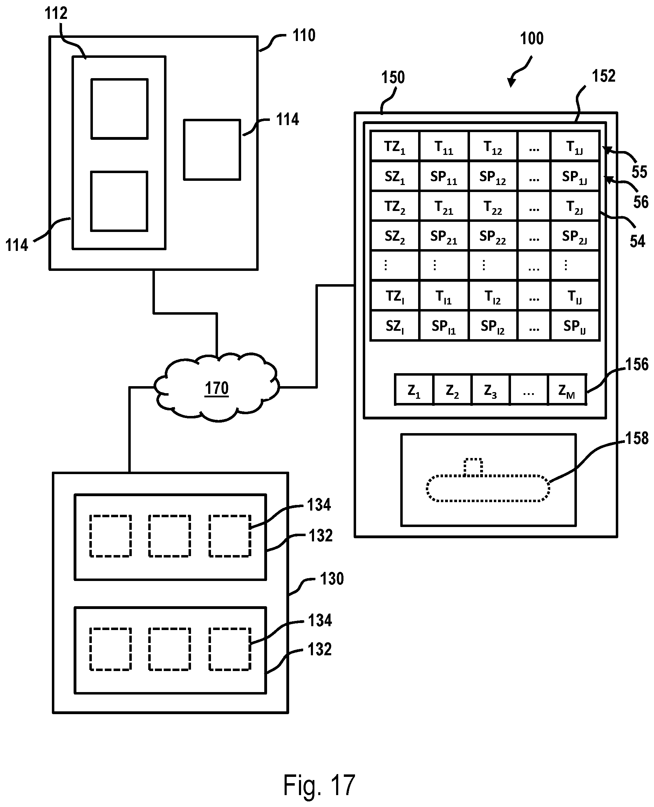

Figur 17 zeigt ein exemplarisches Simulationssystem 100, welches dem Simulationssystem 100 aus Figur 1 entspricht. Das exemplarische Simulationssystem 100 umfasst eine erste Simulationsumgebung 110 sowie eine zweite Simulationsumgebung 130. Ferner umfasst das Simulationssystem 100 ein Simulationscomputersystem 150, welches eine Simulationsschnittstelle 152 bereitstellt. Die unterschiedlichen Komponenten des Simulationscomputersystems 100, d.h. die erste Simulationsumgebung 110, die zweite Simulationsumgebung 130 sowie das Simulationscomputersystem 150, sind mittels Kommunikationsverbindungen über ein Kommunikationsnetzwerk 170 kommunikativ miteinander verbunden. Der Unterschied gegenüber dem Simulationssystem 100 aus Figur 1 besteht darin, dass die erste Simulationsumgebung 110 aus Figur 17 nicht auf einer beweglichen Plattform angeordnet ist. Es handelt sich somit um eine unbewegte, d.h. statische, Simulationsumgebung 110.

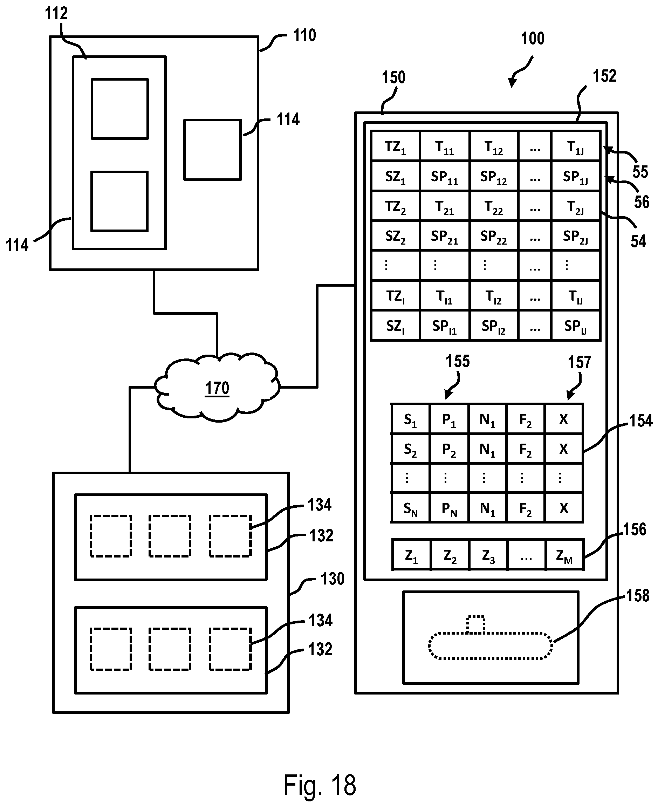

Figur 18 zeigt ein exemplarisches Simulationssystem 100, welches dem Simulationssystem 100 aus Figur 2 entspricht. Das exemplarische Simulationssystem 100 umfasst eine erste Simulationsumgebung 110 sowie eine zweite Simulationsumgebung 130. Ferner umfasst das Simulationssystem 100 ein Simulationscomputersystem 150, welches eine Simulationsschnittstelle 152 bereitstellt. Die unterschiedlichen Komponenten des Simulationscomputersystems 100, d.h. die erste Simulationsumgebung 110, die zweite Simulationsumgebung 130 sowie das Simulationscomputersystem 150, sind mittels Kommunikationsverbindungen über ein Kommunikationsnetzwerk 170 kommunikativ miteinander verbunden. Der Unterschied gegenüber dem Simulationssystem 100 aus Figur 2 besteht darin, dass die erste Simulationsumgebung 110 aus Figur 18 nicht auf einer beweglichen Plattform angeordnet ist. Es handelt sich somit um eine unbewegte, d.h. statische, Simulationsumgebung 110.

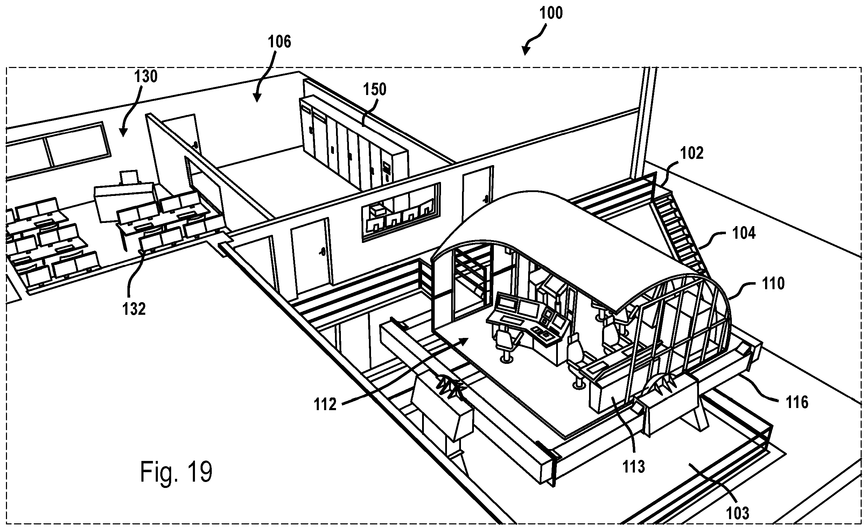

Figur 19 zeigt ein exemplarisches Simulationssystem 100, welches eine erste Simulationsumgebung 110 sowie eine zweite Simulationsumgebung 130 umfasst. Die erste Simulationsumgebung 110 mit einem Leitstand 112, welcher beispielsweise eine Mehrzahl von Konsolen 113 umfasst, ist auf einer beweglichen Plattform 116 angeordnet. Die Plattform 116 wird mittels einer Mehrzahl von Aktoren bewegt. Bei diesen Aktoren handelt es sich beispielsweise um hydraulische, pneumatische und/oder elektrische Aktoren. Die Plattform 116 ist beispielsweise erhöht angeordnet, sodass sie ausreichenden Bewegungsfreiheit relative zu dem Boden 103 unterhalb der Plattform 116 aufweist, um etwa Neigungsbewegungen ausführen zu können. Die auf der erhöhten Plattform 116 angeordnete erste Simulationsumgebung 110 ist beispielsweise über eine Leiter 104 und/oder eine statische Plattform bzw. einen Laufsteg 102 erreichbar. Beispielsweise ist die erste Simulationsumgebung 110 in einer Halle angeordnet.

Die zweite Simulationsumgebung 130 ist beispielsweise in einem Nebenraum angeordnet und umfasst technische Mittel 132, welche dazu konfiguriert sind, eine visuelle Simulation mit zumindest teilweisen virtuellen Kopien erster physischer Steuerelemente bereitzustellen. Bei den entsprechenden technischen Mitteln 132 kann es sich beispielsweise um ein oder mehrere Desktop-PCs, mobile tragbare Endgeräte, wie etwa Tablets, oder Datenbrillen, handeln. In Figur 19 sind die technischen Mittel 132 in Form einer Mehrzahl von Desktop-PCs bereitgestellt.

Schließlich umfasst das Simulationssystem 100 ferner einen Serverraum 106 mit dem Simulationscomputersystem 150, welches beispielsweise einen oder mehrerer Server umfasst und eine Simulationsschnittstelle bereitstellt. In einem Speicher der Simulationsschnittstelle bzw. des Simulationscomputersystem 150 ist eine erste Datenbank mit einer Mehrzahl von Datensätzen von Trefferparametern für eine Mehrzahl von unterschiedlichen Trefferszenarien des Wasserfahrzeugs und den Trefferszenarien jeweils zugeordneten Schadensszenarien des Wasserfahrzeugs gespeichert. Die Schadensszenarien definieren jeweils Schadensparameter des Wasserfahrzeugs. Die Schadensszenarien für die Trefferszenarien sind unter Verwendung eines Schadensmodells des Wasserfahrzeugs vorberechnet. Ferner ist die Simulationsschnittstelle des Simulationscomputersystems 150 dazu konfiguriert, zumindest einen Satz von Trefferparametern für zumindest einen Treffer des Wasserfahrzeugs von einem Gefechtssimulationssystem durch die Simulationsschnittstelle im Zuge des Gefechtstrainings zu empfangen. Die empfangenen Trefferparameter werden mit den Trefferparametern der in der ersten Datenbank gespeicherten Datensätze verglichen und es wird ein Datensatz von Trefferparametern der Mehrzahl von Datensätzen in der ersten Datenbank bestimmt, dessen Trefferparameter die geringsten Abweichungen von den empfangenen Trefferparametern aufweisen. Das dem bestimmten Datensatz zugeordnete Schadensszenario wird aus der ersten Datenbank ausgelesen und zumindest die von den technischen Mitteln der zweiten Simulationsumgebung bereitgestellte visuelle Simulation wird zum Wiedergeben des ausgelesenen Schadensszenarios gesteuert. Ferner werden beispielsweise auf ein oder mehreren Anzeigevorrichtungen der Konsolen 113 des Leitstands 112 ein oder mehrere der Schadensparameter des ausgelesenen Schadensszenarios angezeigt.

In dem Speicher der Simulationsschnittstelle bzw. des Simulationscomputersystem 150 ist ferner beispielsweise eine zweite Datenbank mit Definitionen der ein oder mehreren ersten Steuerelemente sowie der ein oder mehreren Kopien der zweiten Steuerelemente gespeichert ist, wobei die Definitionen für die definierten Steuerelemente und Kopien jeweils eine Erstpriorisierung für einen simulierten Normalbetrieb des Wasserfahrzeugs festlegen. Ferner ist die Simulationsschnittstelle des Simulationscomputersystems 150 beispielsweise dazu konfiguriert, auf eine simulierte Fehlfunktion des Wasserfahrzeugs hin, von den Erstpriorisierungen der ein oder mehreren ersten Steuerelemente und der ein oder mehreren Kopien der zweiten Steuerparameter zu ein oder mehrere Zweitpriorisierungen zu wechseln. Eine entsprechende Fehlfunktion des Wasserfahrzeugs kann beispielsweise von einem Treffer des Wasserfahrzeugs herrühren.

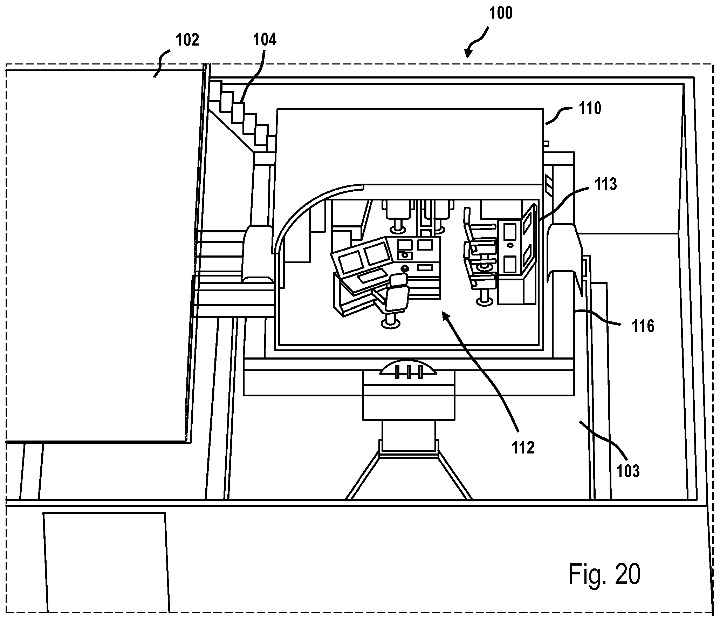

Figur 20 zeigt eine Detailansicht der exemplarischen ersten Simulationsumgebung 110 aus Figur 19 mit einem Leitstand 112, welcher beispielsweise eine Mehrzahl von Konsolen 113 umfasst. Die erste Simulationsumgebung 110 ist auf einer beweglichen Plattform 116 angeordnet. Die Plattform 116 wird beispielsweise mittels einer Mehrzahl von Aktoren bewegt. Bei diesen Aktoren handelt es sich beispielsweise um hydraulische, pneumatische und/oder elektrische Aktoren. Die Plattform 116 ist beispielsweise erhöht angeordnet, sodass sie ausreichenden Bewegungsfreiheit relative zu dem Boden 103 unterhalb der Plattform 116 aufweist, um etwa Neigungsbewegungen ausführen zu können. Die auf der erhöhten Plattform 116 angeordnete erste Simulationsumgebung 110 ist beispielsweise über eine Leiter 104 und/oder eine statische Plattform bzw. einen Laufsteg 102 erreichbar.

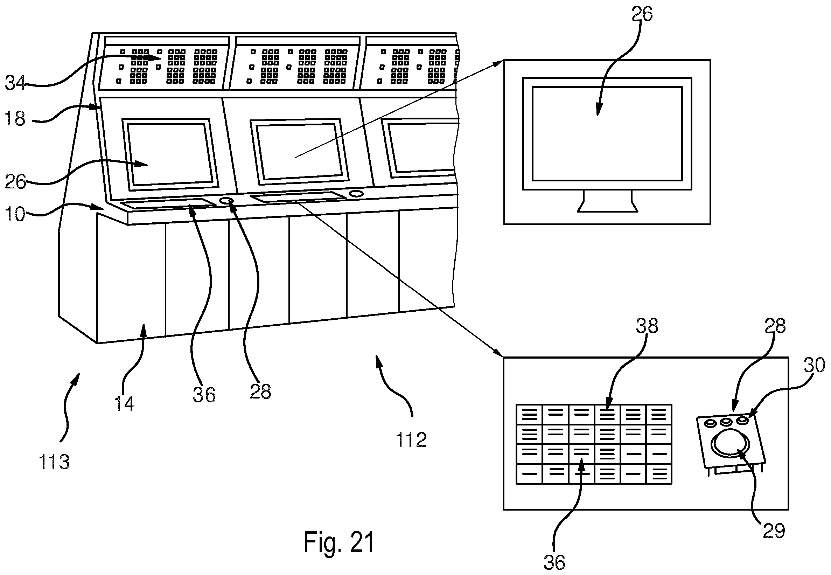

Figur 21 zeigt exemplarische Konsolen 113 einer ersten Simulationsumgebung. Diese Konsolen 113 sind beispielsweise Bestandteile eines in der ersten Simulationsumgebung angeordneten Leitstands 112. Figur 21 zeigt beispielsweise eine Gruppe von drei Konsolen 113. Jede der Konsolen 113 trägt beispielsweise jeweils eine Rechnereinheit 14, eine Anzeige- und Bedieneinheit 18, einen Darstellungs-Bildschirm 26 und einen berührungssensitiven Bildschirm 36. Die Konsolen 113 umfassen beispielsweise ein vorstehendes Bord 10, welches auf einer dem Nutzer zugewandte Vorderseite der entsprechenden Konsole 113 vorsteht. Das Bord ist beispielsweise zwischen zwei Einschüben eingeordnet, d.h. unterhalb eines Einschubs der Konsole 113 für die Anzeige- und Bedieneinheit 18 und oberhalb eines Einschubs für die Rechnereinheit 14. Beispielsweise trägt das Bord den berührungssensitiven Bildschirm 36 sowie ferner ein Auswahlgerät 28. Unterhalb des Bords 10 ist die Rechnereinheit 14, beispielsweise in einem Einschub der Konsole 113, angeordnet. Die Rechnereinheit 14 steuert beispielsweise die die Anzeige- und Bedieneinheit 18 an und verarbeitet von der Anzeige- und Bedieneinheit 18 erfasste Nutzereingaben.

Die Anzeige- und Bedieneinheit 18 umfasst beispielsweise einen Bildschirm 26 für eine Darstellung von Zuständen und/oder Funktionen des Wasserfahrzeugs. Beispielsweise werden auf dem Bildschirm 26 zumindest Teile eines digitalen Modells des Wasserfahrzeugs dargestellt. Die Anzeige- und Bedieneinheit 18 umfasst ferner beispielsweise einen berührungssensitiv Bildschirm 36 etwa für eine Darstellung von durchführbaren Aktionen bzw. initiierbaren Funktionen des Wasserfahrzeugs. Der berührungssensitiv Bildschirm 36 ist beispielsweise in berührungssensitive Bereiche 38 unterteilt, welche jeweils eine auswählbare Aktion anzeigen. Ein Nutzer kann einen berührungssensitiven Bereich 38 auswählen, beispielsweise indem der Nutzer den entsprechenden Bereich 38 berührt. Beispielsweise haben die Bereiche 38 jeweils die Form eines Rechtecks hat. Beispielsweise sind die Bereiche 38 nebeneinander und untereinander sowie nicht überlappend in Zeilen und Spalten auf dem Bildschirm 36 angeordnet. Ferner kann der Bildschirm 36 auf dem Bord 10 beispielsweise zusätzlich einen oder mehrere nicht berührungssensitive Bereiche aufweisen, z.B. um Meldungen an den Nutzer auszugeben.

Ferner umfasst die Anzeige- und Bedieneinheit 18 ein oder mehrere Eingabegeräte, wie etwa das Auswahlgerät 28, zum Erfassen von Nutzereingaben. Das Auswahlgerät 28 ist beispielsweise in dem Bord 10 montiert. Ferner umfasst das Auswahlgerät 28 beispielsweise einen mit einem Trackball 29 sowie ein oder mehrere Tasten 30.

Ferner umfassen die Konsolen 113 beispielsweise Instrumententafel 34 mit Meldeleuchten, welche bestimmte Betriebszustände von Bestandteilen des Wasserfahrzeugs anzeigen. Diese Instrumententafeln 34 sind beispielsweise in Einschüben der Konsolen 113, etwa oberhalb der Anzeige- und Bedieneinheit 18, angeordnet.

Die Anzeige- und Bedieneinheit 18 erfasst beispielsweise Nutzereingaben, etwa eine Auswahl eines auf dem Bildschirm 26 dargestellten Objekts des Wasserfahrzeugs. Nutzereingaben können beispielsweise unter Verwendung des Auswahlgeräts 28 und/oder des berührungssensitiven Bildschirms 36 erfasst werden. Die Anzeige- und Bedieneinheit 18 übermittelt basierend auf den erfassten Nutzereingaben an die Rechnereinheit 14, dass und welchen Bestandteil der Nutzer ausgewählt hat. Beispielsweise gibt die Anzeige- und Bedieneinheit 18 ein Bestätigungssignal aus, nachdem der Nutzer eine Auswahl getroffen hat. Das Bestätigungssignal kann zum Beispiel das Aufleuchten einer Meldeleuchte an der Instrumententafel 34 oder ein sonstiges visuell oder akustisch oder taktil erfassbares Signal sein,
zum Beispiel eine Hervorhebung des ausgewählten Bestandteils in der Darstellung auf dem Bildschirm 26 oder eine Vibration, etwa des Auswahlgeräts 28, beispielsweise des Trackballs 29. Das Bestätigungssignal zeigt dem Benutzer, dass seine Auswahl erfasst worden ist.

Als Reaktion auf die Auswahl eines Objekts auf dem Bildschirm 26 und damit des zugehörigen Bestandteils des Wasserfahrzeugs ermittelt die Rechnereinheit 14, welche Aktionen an demjenigen Bestandteil, das durch das ausgewählte Objekt repräsentiert wird, durchgeführt werden können. Bei dem entsprechenden Bestandteil handelt es sich beispielsweise um ein Ventil, des auf dem Bildschirm 26 dargestellten Teilsystems des Wasserfahrzeugs, beispielsweise eines Kühlungssystems. Beispielsweise greift die Rechnereinheit 14 lesend auf eine rechnerverfügbare Tabelle zu, in welcher die möglichen Aktionen für diesen ausgewählten Bestandteil abgespeichert sind. Anschließend veranlasst die Rechnereinheit 14 die Anzeige und Bedieneinheit 18 dazu, eine Aktionen-Darstellung zu generieren und auf dem berührungssensitiven Bildschirm 36 anzuzeigen.

Diese Aktionen-Darstellung zeigt die ermittelten Aktionen, die an demjenigen Bestandteil durchführbar sind, den das ausgewählte Objekt in der Darstellung auf dem Bildschirm 26 repräsentiert. Die Aktionen-Darstellung der möglichen Aktionen ist also kontextabhängig, denn die Aktionen-Darstellung hängt davon ab, welches Objekt der Darstellung auf dem Bildschirm 26 und damit welcher Bestandteil zuvor ausgewählt wurde.

### Bezugszeichenliste

- 10: Bord
- 14: Rechnereinheit
- 18: Anzeige- und Bedieneinheit
- 26: Bildschirm
- 28: Auswahlgerät
- 29: Track-Ball
- 30: Tasten
- 34: Instrumententafel
- 36: berührungssensitiver Bildschirm
- 38: berührungssensitiver Bildschirmbereich
- 54: erste Datenbank
- 55: Trefferparameter
- 56: Schadensparameter
- 60: Gefechtssimulationssystem
- 61: Prozessor
- 62: Trefferparameter
- 63: Speicher
- 64: Instruktionen
- 65: Nutzerschnittstelle
- 66: Kommunikationsschnittstelle
- 70: FEM-Computersystem
- 71: Prozessor
- 72: Speicher
- 73: Programminstruktionen
- 74: Finite-Elemente-Modell
- 75: Nutzerschnittstelle
- 76: Kommunikationsschnittstelle100 Simulationssystem
- 102: statische Plattform
- 103: Boden
- 104: Leiter
- 106: Serverraum
- 110: erste Simulationsumgebung
- 111: Bewegungssteuerung
- 112: Leitstand
- 113: Konsole
- 114: physisches Steuerelement
- 115: Besatzungsmitglied
- 116: beweglich gelagerte Plattform
- 117: erste Gruppe Besatzungsmitglieder
- 118: Aktoren
- 120: Prozessor
- 121: Speicher
- 122: Instruktionen
- 123: Nutzerschnittstelle
- 124: Kommunikationsschnittstelle
- 130: zweite Simulationsumgebung
- 132: technisches Mittel
- 134: Kopie eines Steuerelements
- 135: Besatzungsmitglied
- 137: zweite Gruppe Besatzungsmitglieder
- 140: Prozessor
- 141: Speicher
- 142: Instruktionen
- 143: Nutzerschnittstelle
- 144: Kommunikationsschnittstelle
- 150: Simulationscomputersystem
- 152: Simulationsschnittstelle
- 154: zweite Datenbank
- 155: Steuerparameter
- 156: Zustandsdaten
- 157: Flag
- 158: digitales Modell des Wasserfahrzeugs
- 160: Prozessor
- 161: Speicher
- 162: Instruktionen
- 163: Nutzerschnittstelle
- 164: Kommunikationsschnittstelle
- 170: Netzwerk
- 180: virtuelles 3D-Modell eines Steuerelements
- 182: taktiles Element
- 184: virtuelle Bestandteile der Kopie des Steuerelements

## Patentansprüche

1. Simulationssystem (100) zum Durchführen eines zeitgleichen kooperativen Gefechtstrainings einer Mehrzahl von Besatzungsmitgliedern (115, 135) eines militärischen Wasserfahrzeugs, wobei das Simulationssystem (100) eine erste Simulationsumgebung (110) mit einem physischen Leitstand (112) des Wasserfahrzeugs zum Trainieren einer ersten Gruppe (117) von Besatzungsmitgliedern (115) umfasst,
wobei die erste Simulationsumgebung (110) ein oder mehrere erste physische Steuerelemente (114) des Wasserfahrzeugs umfasst, wobei die ersten physischen Steuerelemente (114) jeweils dazu konfiguriert sind, einen oder mehrere Steuerparameter (155) für den Betrieb des Wasserfahrzeugs einzustellen,
wobei der Leitstand (112) dazu konfiguriert ist, mittels der ersten physischen Steuerelemente (114) eingestellte Steuerparameter (155) zu erfassen und an eine Simulationsschnittstelle (152) des Simulationssystems (100) zu kommunizieren,
wobei das Simulationssystem (100) ferner eine von der ersten Simulationsumgebung (110) räumlich getrennte zweite Simulationsumgebung (130) zum Trainieren einer zweiten Gruppe (137) von Besatzungsmitgliedern (135) umfasst, wobei die zweite Simulationsumgebung (130) technische Mittel (132) umfasst, welche dazu konfiguriert sind, eine visuelle Simulation bereitzustellen, welche ein oder mehrere zumindest teilweise virtuelle Kopien (134) ein oder mehrerer zweiter physischer Steuerelemente (114) des Wasserfahrzeugs zum Einstellen der Steuerparameters (155) umfasst,
wobei die technischen Mittel (132) ferner dazu konfiguriert sind, mittels der Kopien (134) eingestellte Steuerparameter (155) zu erfassen und an die Simulationsschnittstelle (152) des Simulationssystems (100) zu kommunizieren,
wobei die Simulationsschnittstelle (152) des Simulationssystems (100) einen Speicher umfasst,
**dadurch gekennzeichnet, dass** in dem Speicher eine erste Datenbank (54) mit einer Mehrzahl von Datensätzen von Trefferparametern (55) für eine Mehrzahl von unterschiedlichen Trefferszenarien an dem Wasserfahrzeug und den Trefferszenarien jeweils zugeordneten Schadensszenarien an dem Wasserfahrzeug gespeichert ist, wobei die Schadensszenarien jeweils Schadensparameter (56) an dem Wasserfahrzeug definieren, wobei die Schadensszenarien für die Trefferszenarien unter Verwendung eines Schadensmodells (74) an dem Wasserfahrzeug vorberechnet sind, wobei das Simulationssystem (100) konfiguriert ist zum
• Empfangen zumindest eines Satzes von Trefferparametern (62) für zumindest einen Treffer an dem Wasserfahrzeug von einem Gefechtssimulationssystem (60) durch die Simulationsschnittstelle (152) im Zuge des Gefechtstrainings,
• Vergleichen der empfangenen Trefferparameter (62) mit den Trefferparametern (55) der in der ersten Datenbank (54) gespeicherten Datensätze,
• Bestimmen eines Datensatzes von Trefferparametern der Mehrzahl von Datensätzen in der ersten Datenbank (54), dessen Trefferparameter die geringsten Abweichungen von den empfangenen Trefferparametern (62) aufweisen,
• Auslesen des dem bestimmten Datensatz zugeordneten Schadensszenario aus der ersten Datenbank (54),
• Steuern zumindest der von den technischen Mitteln (132) der zweiten Simulationsumgebung (130) bereitgestellten visuellen Simulation zum Wiedergeben des ausgelesenen Schadensszenarios.

2. Simulationssystem (100) nach Anspruch 1, wobei das Simulationssystem (100) ferner dazu konfiguriert ist, auf ein oder mehreren Anzeigevorrichtungen des Leitstands (112) ein oder mehrere der Schadensparameter des ausgelesenen Schadensszenarios anzuzeigen.

3. Simulationssystem (100) nach einem der vorangehenden Ansprüche, wobei das Bestimmen des Datensatzes von Trefferparametern (55) in der ersten Datenbank (54), dessen Trefferparameter die geringsten Abweichungen von den empfangenen Trefferparametern aufweisen (62), ein Berechnen von Differenzen zwischen den empfangenen Trefferparametern und Trefferparametern der in der ersten Datenbank (54) gespeicherten Datensätze umfasst.

4. Simulationssystem (100) nach einem der vorangehenden Ansprüche, wobei das Bestimmen des Datensatzes von Trefferparametern (55) in der ersten Datenbank (54), dessen Trefferparameter die geringsten Abweichungen von den empfangenen Trefferparametern (62) aufweisen, für ein oder mehrere der in der ersten Datenbank (54) gespeicherten Datensätze ein Berechnen einer gewichteten Summe der Abweichungen zwischen den empfangenen Trefferparametern (62) und den Trefferparametern des jeweiligen Datensatzes umfasst.

5. Simulationssystem (100) nach einem der vorangehenden Ansprüche, wobei die erste Simulationsumgebung (110) auf einer beweglich gelagerten Plattform (116) angeordnet ist, wobei an der Plattform (116) eine Mehrzahl von hydraulischen, pneumatischen und/oder elektrischen Aktoren (118) angeordnet ist, welche von einer Bewegungssteuerung (111) der Plattform (116) angesteuert werden, um Bewegungen des Wasserfahrzeugs im Zuge des simulierten Betriebs nachzuahmen.

6. Simulationssystem (100) nach Anspruch 5, wobei die Bewegungssteuerung (111) dazu konfiguriert ist, die Aktoren (118) gemäß ein oder mehrere der Schadensparameter des ausgelesenen Schadensszenarios anzusteuern, um Bewegungen des Wasserfahrzeugs im Zuge des zu simulierenden Schadensszenarios nachzuahmen.

7. Simulationssystem (100) nach einem der vorangehenden Ansprüche, wobei die in der ersten Datenbank (54) gespeicherten Schadensszenarien an dem Wasserfahrzeug für die Trefferszenarien unter Verwendung einer Finite-Element-Methode für das Wasserfahrzeug vorberechnet sind.

8. Simulationssystem (100) nach einem der vorangehenden Ansprüche, wobei eine oder mehrere individuelle Wiedergaben der visuellen Simulation durch ein oder mehrere der technischen Mitteln (132) der zweiten Simulationsumgebung (130) unter Verwendung ein oder mehrere der Schadensparameter des ausgelesenen Schadensszenarios an ein oder mehrere aus dem Schadensszenario resultierende Umweltbedingungen angepasst werden, um individuelle Auswirkungen der resultierenden Umweltbedingungen auf ein oder mehrere Besatzungsmitglieder der zweiten Gruppe (137) von Besatzungsmitgliedern (135) zu simulieren.

9. Simulationssystem (100) nach Anspruch 8, wobei die Anpassungen der individuellen Wiedergaben ein oder mehrere der folgenden visuellen Effekte umfasst: ein Flimmern der visuellen Wiedergabe, ein zeitweises Aussetzen der visuellen Wiedergabe, ein Farbwechsel der visuellen Wiedergabe, eine Einschränkung eines von der visuellen Wiedergabe umfassten Sichtfelds, ein Verschwimmen der visuellen Wiedergabe, ein Verlangsamen der visuellen Wiedergabe.

10. Simulationssystem (100) nach eine der Ansprüche 8 bis 9, wobei ferner ein oder mehrere der folgenden akustischen Effekte zum Simulieren individueller Auswirkungen der resultierenden Umweltbedingungen verwendet werden: ein zeitweises Aussetzen akustischer Wiedergaben, ein reduzierend einer Lautstärke akustischer Wiedergaben, ein Verrauschen akustischer Wiedergaben, ein Überlagern akustischer Wiedergaben mit einem Pfeifton.

11. Simulationssystem (100) nach einem der vorangehenden Ansprüche, wobei das Simulationssystem (100) ferner das Gefechtssimulationssystem (60) umfasst.

12. Simulationssystem (100) nach einem der vorangehenden Ansprüche, wobei es sich bei den Kopien (134) der zweiten Steuerelemente jeweils um ein vollständiges virtuelles 3D-Modell (180) des entsprechenden zweiten Steuerelements handelt, wobei die technischen Mittel (132) der zweiten Simulationsumgebung (130) zum Bereitstellen der Kopien (134) der zweiten Steuerelemente ein oder mehrere Ausgabegeräte mit ein der mehreren Displays zur visuellen Ausgabe der virtuellen 3D-Modelle (180) sowie ein oder mehrere Eingabegeräte zur virtuellen Simulation einer Bedingung der virtuellen 3D-Modelle (180) umfassen.

13. Simulationssystem (100) nach einem der Ansprüche 1 bis 11, wobei die technischen Mittel (132) der zweiten Simulationsumgebung (130) zum Bereitstellen der Kopien (134) der zweiten Steuerelemente ein oder mehrere taktile Elemente (182) zum physischen Nachstellen haptischer Eigenschaften der ein oder mehreren zweiten Steuerelemente umfassen, wobei die technischen Mittel (132) ferner ein oder mehrere Augmented-Reality-Geräte umfassen, welche dazu konfiguriert sind, zu den taktilen Elementen (182) jeweils ergänzende Bestandteile (184) der entsprechenden zweiten Steuerelemente in virtueller Form bereitzustellen, wobei die ein oder mehreren Augmented-Reality-Geräte jeweils ein oder mehrere Displays zur visuellen Ausgabe der ergänzenden virtuellen Bestandteile (184) der Kopien (134) der zweiten Steuerelemente umfassen sowie ein oder mehrere Sensoren zum Erfassen von Interaktionen der Besatzungsmitglieder (135) der zweiten Gruppe (137) von Besatzungsmitgliedern (135), welche die ein oder mehreren Augmented-Reality-Geräte nutzen, mit den taktilen Elementen (182) und/oder den ergänzenden virtuellen Bestandteilen (184) im Zuge einer Bedingung der Kopien (134) der zweiten Steuerelemente.

14. Simulationssystem (100) nach einem der vorangehenden Ansprüche, wobei die ein oder mehreren ersten Steuerelemente (114) ein oder mehrere Ventile, Schalter und/oder berührungssensitive Elemente des Wasserfahrzeugs umfassen und/oder
wobei die zweiten Steuerelemente ein oder mehrere Ventile, Schalter und/oder berührungssensitive Elemente des Wasserfahrzeugs umfassen.

15. Simulationssystem (100) nach Anspruch 14, wobei die ein oder mehreren ersten Steuerelemente (114) jeweils eine mechanisch betätigbare Komponente umfassen und/oder wobei die ein oder mehreren zweiten Steuerelemente jeweils eine mechanisch betätigbare Komponente umfassen.

16. Simulationssystem (100) nach einem der vorangehenden Ansprüche, wobei in dem Speicher der Simulationsschnittstelle (152) ferner eine zweite Datenbank (154) mit Definitionen der ein oder mehreren ersten physischen Steuerelemente (114) und der ein oder mehrere Kopien (134) der ein oder mehreren zweiten Steuerelemente gespeichert ist, wobei die Definitionen für die definierten ersten Steuerelemente (114) und Kopien (134) der zweiten Steuerelemente jeweils eine Erstpriorisierung für einen simulierten Normalbetrieb des Wasserfahrzeugs festlegen, in welcher die Einstellungen der Steuerparameter (155) gemäß den ersten physischen Steuerelementen (114) gegenüber den Einstellungen gemäß den Kopien (134) der zweiten Steuerelemente als für die Simulation des Wasserfahrzeugs ausschließlich gültige Einstellungen der Steuerparameter (155) priorisiert werden,
wobei die Simulationsschnittstelle (152) des Simulationssystems (100) ferner dazu konfiguriert ist, auf eine simulierte Abweichung von dem Normalbetrieb des Wasserfahrzeugs hin, von ein oder mehreren der Erstpriorisierungen zu ein oder mehreren Zweitpriorisierungen zu wechseln, wobei die ein oder mehreren Zweitpriorisierungen für die simulierte Abweichung von dem Normalbetrieb Einstellungen ein oder mehrerer der Steuerparameter (155) gemäß ein oder mehreren den Zweitpriorisierungen zugeordneten Kopien (134) der zweiten Steuerelemente gegenüber Einstellungen gemäß ein oder mehreren den Zweitpriorisierungen zugeordneten ersten physischen Steuerelemente (114) als für die Simulation des Wasserfahrzeugs ausschließlich gültige Einstellungen der entsprechenden Steuerparameter (155) priorisieren.

17. Simulationssystem (100) nach Anspruch 16, wobei ein oder mehrere der von der ersten Datenbank (54) umfassten Schadensszenarien bei einem Ausführen im Zuge des simulierten Betriebs des Wasserfahrzeugs jeweils eine Abweichung von dem Normalbetrieb des Wasserfahrzeugs darstellen.

18. Simulationssystem (100) nach einem der Ansprüche 16 bis 17, wobei in dem Speicher der Simulationsschnittstelle (152) ferner aktuell für die Simulation des Wasserfahrzeugs gültige Steuerparameter (155) gespeichert sind.

19. Simulationssystem (100) nach Anspruch 18, wobei die Erstpriorisierungen und Zweitpriorisierungen jeweils Schreibrechte zum Schreiben von Steuerparameter (155) in den Speicher der Simulationsschnittstelle (152) definieren.

20. Simulationssystem (100) nach Anspruch 19, wobei die Erstpriorisierungen jeweils festlegen, dass der Leitstand (112) der ersten Simulationsumgebung (110) Schreibrechte zum Schreiben der mittels der ersten physischen Steuerelemente (114) eingestellten und im simulierten Normalbetrieb des Wasserfahrzeugs gültigen Steuerparameter (155) besitzt, während die technischen Mittel (132) der zweiten Simulationsumgebung (130) keine Schreibrechte zum Schreiben der aktuell für die Simulation des Wasserfahrzeugs gültigen Steuerparameter (155) besitzen,
wobei die Zweitpriorisierungen jeweils festlegen, dass die technischen Mittel (132) der zweiten Simulationsumgebung (130) Schreibrechte zum Schreiben der mittels der den Zweitpriorisierungen zugeordneten Kopien (134) der zweiten Steuerelemente eingestellten und in der simulierten Abweichung von dem Normalbetrieb des Wasserfahrzeugs gültigen Steuerparameter (155) besitzen, während der Leitstand (112) keine Schreibrechte zum Schreiben der Steuerparameter (155), welche mittels der den Zweitpriorisierungen zugeordneten ersten physischen Steuerelemente (114) eingestellt sind, als aktuell für die Simulation des Wasserfahrzeugs gültige Steuerparameter (155) besitzt.

21. Simulationssystem (100) nach Anspruch 19, wobei sowohl der Leitstand (112) der ersten Simulationsumgebung (110) Schreibrechte zum Schreiben der mittels der ersten physischen Steuerelemente (114) eingestellten Steuerparameter (155) besitzt, als auch die technischen Mittel (132) der zweiten Simulationsumgebung (130) Schreibrechte zum Schreiben der mittels der Kopien (134) der zweiten Steuerelemente eingestellten Steuerparameter (155) besitzen,
wobei die Erstpriorisierungen jeweils festlegen, dass die mittels der ersten physischen Steuerelemente (114) eingestellten und von dem Leitstand (112) geschriebenen Steuerparameter (155) als im simulierten Normalbetrieb des Wasserfahrzeugs gültige Steuerparameter (155) gelesen werden, während die mittels der Kopien (134) der zweiten Steuerelemente eingestellten und von den technischen Mitteln (132) der zweiten Simulationsumgebung (130) geschriebene Steuerparameter (155) nicht gelesen werden,
wobei die Zweitpriorisierungen jeweils festlegen, dass die mittels der den Zweitpriorisierungen zugeordneten Kopien (134) der zweiten Steuerelemente eingestellten und von den technischen Mitteln (132) der zweiten Simulationsumgebung (130) geschriebene Steuerparameter (155) als für die simulierte Abweichung von dem Normalbetrieb des Wasserfahrzeugs gültige Steuerparameter (155) gelesen werden, während die mittels der den Zweitpriorisierungen zugeordneten ersten physischen Steuerelemente (114) eingestellten und von dem Leitstand (112) geschriebenen Steuerparameter (155) nicht gelesen werden.

22. Simulationssystem (100) nach einem der Ansprüche 16 bis 18, wobei die Erstpriorisierungen definiert, dass die Erfassung der mittels der ersten physischen Steuerelemente (114) eingestellten Steuerparameter (155) durch den Leitstand (112) der ersten Simulationsumgebung (110) aktiviert ist, während die Erfassung der mittels der Kopien (134) der zweiten Steuerelemente eingestellten Steuerparameter (155) durch die technischen Mittel (132) der zweiten Simulationsumgebung (130) deaktiviert ist,
wobei die Zweitpriorisierungen definiert, dass die Erfassung der mittels der Kopien (134) der zweiten Steuerelemente eingestellten Steuerparameter (155) durch die technischen Mittel (132) der zweiten Simulationsumgebung (130) aktiviert ist, während die Erfassung der mittels der ersten physischen Steuerelemente (114) eingestellten Steuerparameter (155) durch den Leitstand (112) der ersten Simulationsumgebung (110) deaktiviert ist.

23. Simulationssystem (100) nach einem der Ansprüche 16 bis 22, wobei die Simulationsschnittstelle (152) von einem Simulationscomputersystem (150) bereitgestellt wird, welches einen Speicher (161) mit ausführbaren Programminstruktionen (162) eines Zustandssimulationsprogramms zum Simulieren eines Zustands des Wasserfahrzeugs und einem digitalen Modell (158) des Wasserfahrzeugs umfasst sowie einen Prozessor (160), wobei ein Ausführen der Programminstruktionen (162) durch den Prozessor (160) das Simulationscomputersystem (150) dazu veranlasst, einen aktuellen Zustand des Wasserfahrzeugs unter Verwendung des digitalen Modells (158) des Wasserfahrzeugs, der für die Simulation des Wasserfahrzeugs gültigen Steuerparameter (155) sowie der von dem ausgelesenen Schadensszenario definierten Schadensparameter zu simulieren.

24. Simulationssystem (100) nach einem der Ansprüche 16 bis 23, wobei ein Wechsel von dem simulierten Normalbetrieb des Wasserfahrzeugs zu der simulierten Abweichung von dem Normalbetrieb des Wasserfahrzeugs durch die Simulationsschnittstelle (152) automatisch im Zuge des Ausführens des Zustandssimulationsprogramms erfolgt, falls der simulierte Zustand des Wasserfahrzeugs die Abweichung von dem Normalbetrieb umfasst.

25. Simulationssystem (100) nach einem der Ansprüche 16 bis 24, wobei die simulierte Abweichung von dem Normalbetrieb des Wasserfahrzeugs einen Ausfall der ersten Gruppe (117) von Besatzungsmitgliedern (115) umfasst.

26. Simulationssystem (100) nach einem der vorangehenden Ansprüche, wobei die erste Simulationsumgebung (110) eine physische Operationszentrale des Wasserfahrzeugs umfasst, wobei die erste Simulationsumgebung (110) beispielsweise eine physische Brücke des Wasserfahrzeugs umfasst.

27. Simulationssystem (100) nach einem der vorangehenden Ansprüche, wobei es sich bei dem militärischen Wasserfahrzeug um eines der folgenden Wasserfahrzeuge handelt: ein Unterseeboot, einen Flugzeugträger, einen Hubschrauberträger, einen Kreuzer, einen Zerstörer, eine Fregatte, eine Korvette, ein Landungsschiff, einen Minenleger, ein Minenräumfahrzeug, ein Minenjagdfahrzeug, ein Patrouillenboot, ein Schnellboot, ein Aufklärungsschiff.

28. Verfahren zum Betrieb eines Simulationssystems (100) zum Durchführen eines zeitgleichen kooperativen Gefechtstrainings einer Mehrzahl von Besatzungsmitgliedern (115, 135) eines militärischen Wasserfahrzeugs, wobei das Simulationssystem (100) eine erste Simulationsumgebung (110) mit einem physischen Leitstand (112) des Wasserfahrzeugs zum Trainieren einer ersten Gruppe (117) von Besatzungsmitgliedern (115) umfasst,
wobei die erste Simulationsumgebung (110) ein oder mehrere erste physische Steuerelemente (114) des Wasserfahrzeugs umfasst, wobei die ersten physischen Steuerelemente (114) jeweils dazu konfiguriert sind, einen oder mehrere Steuerparameter (155) für den Betrieb des Wasserfahrzeugs einzustellen,
wobei der Leitstand (112) dazu konfiguriert ist, mittels der ersten physischen Steuerelemente (114) eingestellte Steuerparameter (155) zu erfassen und an eine Simulationsschnittstelle (152) des Simulationssystems (100) zu kommunizieren,
wobei das Simulationssystem (100) ferner eine von der ersten Simulationsumgebung (110) räumlich getrennte zweite Simulationsumgebung (130) zum Trainieren einer zweiten Gruppe (137) von Besatzungsmitgliedern (135) umfasst, wobei die zweite Simulationsumgebung (130) technische Mittel (132) umfasst, welche dazu konfiguriert sind, eine visuelle Simulation bereitzustellen, welche ein oder mehrere zumindest teilweise virtuelle Kopien (134) ein oder mehrerer zweiter physischer Steuerelemente zum Einstellen der Steuerparameters (155) umfasst,
wobei die technischen Mittel (132) ferner dazu konfiguriert sind, mittels der Kopien (134) eingestellte Steuerparameter (155) zu erfassen und an die Simulationsschnittstelle (152) des Simulationssystems (100) zu kommunizieren,
wobei die Simulationsschnittstelle (152) des Simulationssystems (100) einen Speicher umfasst, **dadurch gekennzeichnet, dass**
in dem Speicher eine erste Datenbank (54) mit einer Mehrzahl von Datensätzen von Trefferparametern für eine Mehrzahl von unterschiedlichen Trefferszenarien an dem Wasserfahrzeug und den Trefferszenarien jeweils zugeordneten Schadensszenarien an dem Wasserfahrzeug gespeichert ist, wobei die Schadensszenarien jeweils Schadensparameter (56) an dem Wasserfahrzeug definieren, wobei die Schadensszenarien für die Trefferszenarien unter Verwendung eines Schadensmodells (74) an dem Wasserfahrzeug vorberechnet sind,
wobei das Verfahren umfasst:
• Empfangen zumindest eines Satzes von Trefferparametern (62) für zumindest einen Treffer an dem Wasserfahrzeug von einem Gefechtssimulationssystem (60) durch die Simulationsschnittstelle (152) im Zuge des Gefechtstrainings,
• Vergleichen der empfangenen Trefferparameter (62) mit den Trefferparametern (55) der in der ersten Datenbank (54) gespeicherten Datensätze,
• Bestimmen eines Datensatzes von Trefferparametern der Mehrzahl von Datensätzen in der ersten Datenbank (54), dessen Trefferparameter die geringsten Abweichungen von den empfangenen Trefferparametern (62) aufweisen,
• Auslesen des dem bestimmten Datensatz zugeordneten Schadensszenario aus der ersten Datenbank (54),
• Steuern zumindest der von den technischen Mitteln (132) der zweiten Simulationsumgebung (130) bereitgestellten visuellen Simulation zum Wiedergeben des ausgelesenen Schadensszenarios.

29. Verfahren nach Anspruch 28, wobei in dem Speicher der Simulationsschnittstelle (152) ferner eine zweite Datenbank (154) mit Definitionen der ein oder mehreren ersten Steuerelemente (114) und der ein oder mehrere Kopien (134) der ein oder mehreren zweiten Steuerelemente gespeichert ist, wobei die Definitionen für die definierten ersten Steuerelemente (114) und Kopien (134) der zweiten Steuerelemente jeweils eine Erstpriorisierung für einen simulierten Normalbetrieb des Wasserfahrzeugs festlegen, in welcher die Einstellungen der Steuerparameter (155) gemäß den ersten physischen Steuerelementen (114) gegenüber den Einstellungen gemäß den Kopien (134) der zweiten Steuerelemente als für die Simulation des Wasserfahrzeugs ausschließlich gültige Einstellungen der Steuerparameter (155) priorisiert werden,
wobei das Verfahren ferner umfasst:
auf eine simulierte Abweichung von dem Normalbetrieb des Wasserfahrzeugs hin, wechseln von ein oder mehreren der Erstpriorisierungen zu ein oder mehreren Zweitpriorisierungen, wobei die ein oder mehreren Zweitpriorisierungen für die Abweichung von dem Normalbetrieb Einstellungen ein oder mehrerer der Steuerparameter (155) gemäß ein oder mehreren den Zweitpriorisierungen zugeordneten Kopien (134) der zweiten Steuerelemente gegenüber Einstellungen gemäß ein oder mehreren den Zweitpriorisierungen zugeordneten ersten physischen Steuerelemente (114) als für die Simulation des Wasserfahrzeugs ausschließlich gültige Einstellungen der entsprechenden Steuerparameter (155) priorisieren.

## Claims

1. simulation system (100) for conducting simultaneous cooperative combat training for a plurality of crew members (115, 135) of a military vessel, wherein the simulation system (100) comprises a first simulation environment (110) with a physical control station (112) of the vessel for training a first group (117) of crew members (115),
wherein the first simulation environment (110) comprises one or more first physical control elements (114) of the vessel, wherein the first physical control elements (114) are each configured to set one or more control parameters (155) for the operation of the vessel,
wherein the control console (112) is configured to detect control parameters (155) set by means of the first physical control elements (114) and to communicate them to a simulation interface (152) of the simulation system (100),
wherein the simulation system (100) further comprises a second simulation environment (130), spatially separate from the first simulation environment (110), for training a second group (137) of crew members (135), wherein the second simulation environment (130) comprises technical means (132) configured to provide a visual simulation comprising one or more at least partially virtual copies (134) of one or more second physical control elements (114) of the watercraft for adjusting the control parameter (155),
wherein the technical means (132) are further configured to detect control parameters (155) set by means of the copies (134) and to communicate them to the simulation interface (152) of the simulation system (100),
wherein the simulation interface (152) of the simulation system (100) comprises a memory,
**characterised in that** the memory stores a first database (54) containing a plurality of data records of impact parameters (55) for a plurality of different impact scenarios on the watercraft and damage scenarios on the watercraft associated with each of the impact scenarios, wherein the damage scenarios each define damage parameters (56) to the watercraft, the damage scenarios for the impact scenarios having been pre-calculated using a damage model (74) for the watercraft, wherein the simulation system (100) is configured to
• receiving at least one set of impact parameters (62) for at least one impac on the vessel from a combat simulation system (60) via the simulation interface (152) in the course of combat training,
• comparing the received hit parameters (62) with the hit parameters (55) of the data records stored in the first database (54),
• determining a record of hit parameters from the plurality of records in the first database (54) whose hit parameters exhibit the smallest deviations from the received hit parameters (62),
• retrieving the damage scenario associated with the identified data record from the first database (54),
• controlling at least the visual simulation provided by the technical means (132) of the second simulation environment (130) to reproduce the retrieved damage scenario.

2. Simulation system (100) according to claim 1, wherein the simulation system (100) is further configured to display one or more of the damage parameters of the retrieved damage scenario on one or more display devices of the control centre (112).

3. A simulation system (100) according to one of the preceding claims, wherein the determination of the data record of hit parameters (55) in the first database (54), whose hit parameters exhibit the smallest deviations from the received hit parameters (62), comprises calculating differences between the received hit parameters and the hit parameters of the records stored in the first database (54).

4. A simulation system (100) according to any one of the preceding claims, wherein the step of determining the record of match parameters (55) in the first database (54) whose hit parameters exhibit the smallest deviations from the received hit parameters (62) comprises, for one or more of the data records stored in the first database (54), calculating a weighted sum of the deviations between the received hit parameters (62) and the hit parameters of the respective data record.

5. Simulation system (100) according to one of the preceding claims, wherein the first simulation environment (110) is arranged on a movably mounted platform (116), wherein a plurality of hydraulic, pneumatic and/or electrical actuators (118) are arranged on the platform (116), which are controlled by a motion controller (111) of the platform (116) in order to mimic the movements of the watercraft during simulated operation.

6. Simulation system (100) according to claim 5, wherein the motion controller (111) is configured to control the actuators (118) in accordance with one or more of the damage parameters of the retrieved damage scenario, in order to mimic the movements of the watercraft during the course of the damage scenario to be simulated.

7. A simulation system (100) according to one of the preceding claims, wherein the damage scenarios stored in the first database (54) relating to the watercraft are pre-calculated for the impact scenarios using a finite element method for the watercraft.

8. Simulation system (100) according to one of the preceding claims, wherein one or more individual renderings of the visual simulation are adapted by one or more of the technical means (132) of the second simulation environment (130) are adapted to one or more environmental conditions resulting from the damage scenario, using one or more of the damage parameters of the retrieved damage scenario, in order to simulate individual effects of the resulting environmental conditions on one or more crew members of the second group (137) of crew members (135).

9. Simulation system (100) according to claim 8, wherein the adjustments to the individual renderings comprise one or more of the following visual effects: flickering of the visual representation, intermittent interruption of the visual representation, a change in colour of the visual representation, restriction of a field of view encompassed by the visual representation, blurring of the visual representation, slowing down of the visual representation.

10. A simulation system (100) according to any one of claims 8 to 9, wherein, furthermore, one or more of the following acoustic effects are used to simulate individual effects of the resulting environmental conditions: an intermittent interruption of acoustic outputs, a reduction in the volume of acoustic outputs, the introduction of noise into acoustic outputs, or the superimposition of a whistling tone onto acoustic outputs.

11. A simulation system (100) according to one of the preceding claims, wherein the simulation system (100) further comprises the combat simulation system (60).

12. A simulation system (100) according to one of the preceding claims, wherein the copies (134) of the second control elements each constitute a complete virtual 3D model (180) of the second control element corresponding to the , wherein the technical means (132) of the second simulation environment (130) for providing the copies (134) of the second control elements comprise one or more output devices, including one of the plurality of displays for the visual output of the virtual 3D models (180), as well as one or more input devices for the virtual simulation of a condition of the virtual 3D models (180).

13. Simulation system (100) according to any one of claims 1 to 11, wherein the technical means (132) of the second simulation environment (130) for providing the copies (134) of the second control elements comprise one or more tactile elements (182) for physically replicating the haptic properties of the one or more second control elements, wherein the technical means (132) further comprise one or more augmented reality devices, which are configured to provide, in virtual form, components (184) complementary to the tactile elements (182) for the corresponding second control elements, wherein the one or more augmented reality devices each comprise one or more displays for the visual output of the complementary virtual components (184) of the copies (134) of the second control elements, as well as one or more sensors for detecting interactions between the crew members (135) of the second group (137) of crew members (135) - who are using the one or more augmented reality devices - and the tactile elements (182) and/or the supplementary virtual components (184) in accordance with a condition of the copies (134) of the second control elements.

14. Simulation system (100) according to one of the preceding claims, wherein the one or more first control elements (114) comprise one or more valves, switches and/or touch-sensitive elements of the watercraft and/or
wherein the second control elements comprise one or more valves, switches and/or touch-sensitive elements of the watercraft.

15. A simulation system (100) according to claim 14, wherein each of the one or more first control elements (114) comprises a mechanically actuable component and/or
wherein the one or more second control elements each comprise a mechanically actuable component.

16. Simulation system (100) according to one of the preceding claims, wherein the memory of the simulation interface (152) further comprises a second database (154) containing definitions of the one or more first physical control elements (114) and the one or more copies (134) of the one or more second control elements, wherein the definitions for the defined first control elements (114) and copies (134) of the second control elements each specify a primary prioritisation for simulated normal operation of the watercraft, in which the settings of the control parameters (155) in accordance with the first physical control elements (114) are prioritised over the settings in accordance with the copies (134) of the second control elements as the exclusively valid settings of the control parameters (155) for the simulation of the watercraft,
wherein the simulation interface (152) of the simulation system (100) is further configured, in response to a simulated deviation from the normal operation of the watercraft, to switch from one or more of the first prioritisations to one or more second prioritisations, whereby the one or more second prioritisations provide, for the simulated deviation from normal operation, settings for one or more of the control parameters (155) in accordance with one or more copies (134) of the second control elements associated with the secondary prioritisation settings, over settings in accordance with one or more first physical control elements (114) associated with the secondary prioritisation settings, as the settings for the corresponding control parameters (155) that are exclusively valid for the simulation of the watercraft.

17. Simulation system (100) according to claim 16, wherein one or more of the damage scenarios contained in the first database (54), when executed in the course of the simulated operation of the watercraft, each represent a deviation from the normal operation of the watercraft.

18. Simulation system (100) according to any one of claims 16 to 17, wherein the memory of the simulation interface (152) further stores control parameters (155) currently valid for the simulation of the watercraft.

19. Simulation system (100) according to claim 18, wherein the first priorities and second priorities each define write permissions for writing control parameters (155) to the memory of the simulation interface (152).

20. Simulation system (100) according to claim 19, wherein the first prioritisations each specify that the control station (112) of the first simulation environment (110) has write access rights to write the control parameters (155) set by means of the first physical control elements (114) and valid during the simulated normal operation of the watercraft, whilst the technical means (132) of the second simulation environment (130) have no write access rights to write the control parameters (155) currently valid for the simulation of the watercraft,
whereby the secondary prioritisation rules each specify that the technical means (132) of the second simulation environment (130) have write permissions to write the control parameters (155) set by means of the copies (134) of the second control elements assigned to the secondary prioritisation rules ( ) and valid in the simulated deviation from the normal operation of the watercraft (155) set by means of the copies (134) of the second control elements associated with the secondary prioritisation settings and valid within the simulated deviation from the normal operation of the watercraft, whilst the control station (112) has no write permissions to write the control parameters (155) set by means of the first physical control elements (114) associated with the secondary prioritisation settings as control parameters (155) currently valid for the simulation of the watercraft.

21. Simulation system (100) according to claim 19, wherein both the control station (112) of the first simulation environment (110) has write permissions to write the control parameters (155) set by means of the first physical control elements (114), and the technical means (132) of the second simulation environment (130) have write permissions to write the control parameters (155) set by means of the copies (134) of the second control elements,
whereby the priority rules respectively stipulate that the control parameters (155) set by means of the first physical control elements (114) and written by the control centre (112) are interpreted as the valid control parameters (155) during the simulated normal operation of the watercraft, whilst the control parameters (155) set by means of the copies (134) of the second control elements and written by the technical means (132) of the second simulation environment (130) are not read,
whereby the secondary prioritisation rules each specify that the control parameters (155) set by means of the copies (134) of the second control elements associated with the secondary prioritisation rules and written by the technical means (132) of the second simulation environment (130) are read as control parameters (155) valid for the simulated deviation from the normal operation of the watercraft, whilst the control parameters (155) set by means of the first physical control elements (114) assigned to the second prioritisations and written by the control station (112) are not read.

22. Simulation system (100) according to one of claims 16 to 18, wherein the first prioritisation defines that the acquisition of the control parameters (155) set by means of the first physical control elements (114) is enabled by the control centre (112) of the first simulation environment (110), whilst the detection of the control parameters (155) set by means of the copies (134) of the second control elements is disabled by the technical means (132) of the second simulation environment (130),
whereby the second prioritisation defines that the detection of the control parameters (155) set by means of the copies (134) of the second control elements is activated by the technical means (132) of the second simulation environment (130), whilst the detection of the control parameters (155) set by means of the first physical control elements (114) is deactivated by the control centre (112) of the first simulation environment (110).

23. Simulation system (100) according to one of claims 16 to 22, wherein the simulation interface (152) is provided by a simulation computer system (150), which comprises a memory (161) containing executable programme instructions (162) of a state simulation programme for simulating a state of the watercraft and a digital model (158) of the watercraft , as well as a processor (160), wherein execution of the programme instructions (162) by the processor (160) causes the simulation computer system (150) to simulate a current state of the watercraft using the digital model (158) of the watercraft, the control parameters (155) applicable to the simulation of the watercraft, and the damage parameters defined by the retrieved damage scenario.

24. Simulation system (100) according to any one of claims 16 to 23, wherein a transition from the simulated normal operation of the watercraft to the simulated deviation from the normal operation of the watercraft is effected automatically by the simulation interface (152) during the execution of the state simulation programme, if the simulated state of the watercraft comprises the deviation from normal operation.

25. A simulation system (100) according to any one of claims 16 to 24, wherein the simulated deviation from the normal operation of the vessel comprises a failure of the first group (117) of crew members (115).

26. A simulation system (100) according to one of the preceding claims, wherein the first simulation environment (110) comprises a physical operations centre of the vessel, wherein the first simulation environment (110) comprises, for example, a physical bridge of the vessel.

27. A simulation system (100) according to one of the preceding claims, wherein the military vessel is one of the following vessels: a submarine, an aircraft carrier, a helicopter carrier, a cruiser, a de-stroyer, a frigate, a corvette, a landing craft, a minelayer, a minesweeper, a minehunter, a patrol boat, a speedboat, a reconnaissance vessel.

28. Method for operating a simulation system (100) for conducting simultaneous cooperative combat training for a plurality of crew members (115, 135) of a military vessel, wherein the simulation system (100) comprises a first simulation environment (110) with a physical control station (112) of the vessel for training a first group (117) of crew members (115),
wherein the first simulation environment (110) comprises one or more first physical control elements (114) of the vessel, wherein the first physical control elements (114) are each configured to adjust one or more control parameters (155) for the operation of the vessel,
wherein the control console (112) is configured to detect control parameters (155) set by means of the first physical control elements (114) and to communicate them to a simulation interface (152) of the simulation system (100),
wherein the simulation system (100) further comprises a second simulation environment (130), spatially separate from the first simulation environment (110), for training a second group (137) of crew members (135), wherein the second simulation environment (130) comprises technical means (132) configured to provide a visual simulation comprising one or more at least partially virtual copies (134) of one or more second physical control elements for adjusting the control parameters (155),
wherein the technical means (132) are further configured to detect control parameters (155) set by means of the copies (134) and to communicate them to the simulation interface (152) of the simulation system (100),
wherein the simulation interface (152) of the simulation system (100) comprises a memory, **characterised in that** a first database (54) is stored in the memory, containing a plurality of data records of impact parameters for a plurality of different impact scenarios on the watercraft and damage scenarios associated with each of the impact scenarios on the watercraft, wherein the damage scenarios each define damage parameters (56) on the watercraft, wherein the damage scenarios for the impact scenarios are pre-calculated for the watercraft using a damage model (74),
wherein the method comprises:
• receiving at least one set of impact parameters (62) for at least one impact on the vessel from a combat simulation system (60) via the simulation interface (152) in the course of combat training,
• comparing the received hit parameters (62) with the hit parameters (55) of the data records stored in the first database (54),
• determining a record of hit parameters from the plurality of records in of the first database (54), the hit parameters of which exhibit the smallest deviations from the received hit parameters (62),
• retrieving the damage scenario associated with the identified data record from the first database (54),
• controlling at least the visual simulation provided by the technical means (132) of the second simulation environment (130) to reproduce the retrieved damage scenario.

29. The method according to claim 28, wherein a second database (154) containing definitions of the one or more first control elements (114) and the one or more copies (134) of the one or more second control elements is further stored in the memory of the simulation interface (152), wherein the definitions for the defined first control elements (114) and copies (134) of the second control elements each specify an initial prioritisation for simulated normal operation of the watercraft, in which the settings of the control parameters (155) in accordance with the first physical control elements (114) are prioritised over the settings in accordance with the copies (134) of the second control elements as the exclusively valid settings of the control parameters (155) for the simulation of the watercraft,
wherein the method further comprises:
in response to a simulated deviation from the normal operation of the watercraft, switching from one or more of the first prioritisations to one or more second prioritisations, wherein the one or more second prioritisations define, for the deviation from normal operation, settings for one or more of the control parameters (155) in accordance with one or more copies (134) of the second control elements associated with the second prioritisations, over settings in accordance with one or more first physical control elements (114) associated with the second prioritisations, as settings of the corresponding control parameters (155) that are exclusively valid for the simulation of the watercraft.

## Revendications

1. système de simulation (100) destiné à mener un entraînement au combat coopératif simultané pour une pluralité de membres d'équipage (115, 135) d'un navire militaire, dans lequel le système de simulation (100) comprend un premier environnement de simulation (110) avec un poste de commande physique (112) du navire pour l'entraînement d'un premier groupe (117) de membres d'équipage (115),
dans lequel le premier environnement de simulation (110) comprend un ou plusieurs premiers éléments de commande physiques (114) du navire, lesdits premiers éléments de commande physiques (114) étant chacun configurés pour définir un ou plusieurs paramètres de commande (155) pour le fonctionnement du navire,
dans lequel la console de commande (112) est configurée pour détecter les paramètres de commande (155) réglés au moyen des premiers éléments de commande physiques (114) et pour les transmettre à une interface de simulation (152) du système de simulation (100),
dans lequel le système de simulation (100) comprend en outre un deuxième environnement de simulation (130), spatialement distinct du premier environnement de simulation (110), destiné à la formation d'un deuxième groupe (137) de membres d'équipage (135), dans lequel le deuxième environnement de simulation (130) comprend des moyens techniques (132) configurés pour fournir une simulation visuelle comprenant une ou plusieurs copies (134), au moins partiellement virtuelles, d'un ou de plusieurs deuxièmes éléments de commande physiques (114) de l'embarcation, destinés à ajuster le paramètre de commande (155),
dans lequel les moyens techniques (132) sont en outre configurés pour détecter les paramètres de commande (155) réglés au moyen des copies (134) et pour les communiquer à l'interface de simulation (152) du système de simulation (100),
dans lequel l'interface de simulation (152) du système de simulation (100) comprend une mémoire,
**caractérisé en ce que** la mémoire stocke une première base de données (54) contenant une pluralité d'enregistrements de données de paramètres d'impact (55) pour une pluralité de scénarios d'impact différents sur l'embarcation et de scénarios de dommages sur l'embarcation associés à chacun des scénarios d'impact, dans lequel les scénarios de dommages définissent chacun des paramètres de dommages (56) subis par l'embarcation, les scénarios de dommages pour les scénarios d'impact ayant été précalculés à l'aide d'un modèle de dommages (74) pour l'embarcation, le système de simulation (100) étant configuré pour
• recevoir au moins un ensemble de paramètres d'impact (62) pour au moins un impact sur l'embarcation depuis un système de simulation de combat (60) via l'interface de simulation (152) dans le cadre d'un entraînement au combat,
• comparer les paramètres d'impact reçus (62) avec les paramètres d'impact (55) des enregistrements de données stockés dans la première base de données (54),
• déterminer, parmi la pluralité d'enregistrements de la première base de données (54), un enregistrement de paramètres d'impact dont les paramètres d'impact présentent les écarts les plus faibles par rapport aux paramètres d'impact reçus (62),
• extraire de la première base de données (54) le scénario de dommages associé à l'enregistrement de données identifié,
• commander au moins la simulation visuelle fournie par les moyens techniques (132) du deuxième environnement de simulation (130) afin de reproduire le scénario de dommages récupéré.

2. Système de simulation (100) selon la revendication 1, dans lequel le système de simulation (100) est en outre configuré pour afficher un ou plusieurs des paramètres de dommages du scénario de dommages récupéré sur un ou plusieurs dispositifs d'affichage du centre de contrôle (112).

3. Système de simulation (100) selon l'une des revendications précédentes, dans lequel la détermination de l'enregistrement de données de paramètres d'impact (55) dans la première base de données (54), dont les paramètres d'impact présentent les écarts les plus faibles par rapport aux paramètres d'impact reçus (62), comprend le calcul des différences entre les paramètres d'impact reçus et les paramètres d'impact des enregistrements stockés dans la première base de données (54).

4. Système de simulation (100) selon l'une quelconque des revendications précédentes, dans lequel l'étape consistant à déterminer l'enregistrement de paramètres de correspondance (55) dans la première base de données (54) dont les paramètres de correspondance présentent les écarts les plus faibles par rapport aux paramètres de correspondance reçus (62) comprend, pour un ou plusieurs des enregistrements de données stockés dans la première base de données (54), le calcul d'une somme pondérée des écarts entre les paramètres de correspondance reçus (62) et les paramètres de correspondance de l'enregistrement de données respectif.

5. Système de simulation (100) selon l'une des revendications précédentes, dans lequel le premier environnement de simulation (110) est disposé sur une plate-forme (116) montée de manière mobile, dans lequel une pluralité d'actionneurs hydrauliques, pneumatiques et/ou électriques (118) sont disposés sur la plate-forme (116), lesquels sont commandés par un contrôleur de mouvement (111) de la plate-forme (116) afin d'imiter les mouvements de l'embarcation pendant le fonctionnement simulé.

6. Système de simulation (100) selon la revendication 5, dans lequel le contrôleur de mouvement (111) est configuré pour commander les actionneurs (118) en fonction d'un ou plusieurs des paramètres d'avarie du scénario d'avarie récupéré, afin de reproduire les mouvements de l'embarcation au cours du scénario d'avarie à simuler.

7. Système de simulation (100) selon l'une des revendications précédentes, dans lequel les scénarios d'avari s stockés dans la première base de données (54) relatifs à l'embarcation sont précalculés pour les scénarios d'impact à l'aide d'une méthode des éléments finis appliquée à l'embarcation.

8. Système de simulation (100) selon l'une des revendications précédentes, dans lequel une ou plusieurs représentations individuelles de la simulation visuelle sont adaptées par un ou plusieurs des moyens techniques (132) du deuxième environnement de simulation (130) sont adaptés à une ou plusieurs conditions environnementales résultant du scénario de dommages, à l'aide d'un ou plusieurs des paramètres de dommages du scénario de dommages récupéré, afin de simuler les effets individuels des conditions environnementales qui en résultent sur un ou plusieurs membres d'équipage du deuxième groupe (137) de membres d'équipage (135).

9. Système de simulation (100) selon la revendication 8, dans lequel les ajustements apportés aux rendus individuels comprennent un ou plusieurs des effets visuels suivants : scintillement de la représentation visuelle, interruption intermittente de la représentation visuelle, changement de couleur de la représentation visuelle, restriction du champ de vision englobé par la représentation visuelle, flou de la représentation visuelle, ralentissement de la représentation visuelle.

10. Système de simulation (100) selon l'une quelconque des revendications 8 à 9, dans lequel, en outre, un ou plusieurs des effets acoustiques suivants sont utilisés pour simuler les effets individuels des conditions environnementales qui en résultent : une interruption intermittente des signaux acoustiques, une réduction du volume des signaux acoustiques, l'introduction de bruit dans les signaux acoustiques, ou la superposition d'un sifflement sur les signaux acoustiques.

11. Système de simulation (100) selon l'une des revendications précédentes, dans lequel le système de simulation (100) comprend en outre le système de simulation de combat (60).

12. Système de simulation (100) selon l'une des revendications précédentes, dans lequel les copies (134) des seconds éléments de contrôle constituent chacune un modèle virtuel 3D complet (180) du second élément de contrôle correspondant, dans lequel les moyens techniques (132) du second environnement de simulation (130) destinés à fournir les copies (134) des seconds éléments de commande comprennent un ou plusieurs dispositifs de sortie, dont l'un des nombreux écrans pour l'affichage visuel des modèles virtuels en 3D (180), ainsi qu'un ou plusieurs dispositifs d'entrée pour la simulation virtuelle d'un état des modèles virtuels en 3D (180).

13. Système de simulation (100) selon l'une quelconque des revendications 1 à 11, dans lequel les moyens techniques (132) du deuxième environnement de simulation (130) destinés à fournir les copies (134) des deuxièmes éléments de contrôle comprennent un ou plusieurs éléments tactiles (182) destinés à reproduire physiquement les propriétés haptiques du ou des deuxièmes éléments de contrôle, les moyens techniques (132) comprennent en outre un ou plusieurs dispositifs de réalité augmentée, qui sont configurés pour fournir, sous forme virtuelle, des composants (184) complémentaires aux éléments tactiles (182) pour les seconds éléments de commande correspondants, dans lequel le ou les dispositifs de réalité augmentée comprennent chacun un ou plusieurs écrans pour l'affichage visuel des composants virtuels complémentaires (184) des copies (134) des seconds éléments de commande, ainsi qu'un ou plusieurs capteurs destinés à détecter les interactions entre les membres d'équipage (135) du deuxième groupe (137) de membres d'équipage (135) - qui utilisent le ou les dispositifs de réalité augmentée - et les éléments tactiles (182) et/ou les composants virtuels supplémentaires (184) en fonction d'un état des copies (134) des seconds éléments de commande.

14. Système de simulation (100) selon l'une des revendications précédentes, dans lequel le ou les premiers éléments de commande (114) comprennent une ou plusieurs vannes, commutateurs et/ou éléments tactiles de l'embarcation et/ou
dans lequel les seconds éléments de commande comprennent une ou plusieurs vannes, commutateurs et/ou éléments tactiles de l'embarcation.

15. Système de simulation (100) selon la revendication 14, dans lequel chacun des un ou plusieurs premiers éléments de commande (114) comprend un composant actionnable mécaniquement et/ou dans lequel le ou les seconds éléments de commande comprennent chacun un composant actionnable mécaniquement.

16. Système de simulation (100) selon l'une des revendications précédentes, dans lequel la mémoire de l'interface de simulation (152) comprend en outre une deuxième base de données (154) contenant les définitions d'un ou plusieurs premiers éléments de commande physiques (114) et d'une ou plusieurs copies (134) d'un ou plusieurs deuxièmes éléments de commande, les définitions des premiers éléments de commande définis (114) et des copies (134) des seconds éléments de commande spécifient chacune une priorité principale pour le fonctionnement normal simulé de l'embarcation, dans laquelle les réglages des paramètres de commande (155) conformément aux premiers éléments de commande physiques (114) ont la priorité sur les réglages correspondant aux copies (134) des seconds éléments de commande en tant que réglages exclusivement valides des paramètres de commande (155) pour la simulation de l'embarcation,
l'interface de simulation (152) du système de simulation (100) étant en outre configurée, en réponse à un écart simulé par rapport au fonctionnement normal de l'embarcation, pour passer d'une ou plusieurs des premières priorités à une ou plusieurs deuxièmes priorités, ces une ou plusieurs deuxièmes priorités fournissant, pour l'écart simulé par rapport au fonctionnement normal, des réglages pour un ou plusieurs des paramètres de commande (155) conformément à une ou plusieurs copies (134) des seconds éléments de commande associés aux réglages de priorisation secondaire, plutôt qu'aux réglages conformes à un ou plusieurs premiers éléments de commande physiques (114) associés aux réglages de priorisation secondaire, en tant que réglages des paramètres de commande correspondants (155) qui sont exclusivement valables pour la simulation de l'embarcation.

17. Système de simulation (100) selon la revendication 16, dans lequel un ou plusieurs des scénarios de dommages contenus dans la première base de données (54), lorsqu'ils sont exécutés au cours du fonctionnement simulé de l'embarcation, représentent chacun un écart par rapport au fonctionnement normal de l'embarcation.

18. Système de simulation (100) selon l'une quelconque des revendications 16 à 17, dans lequel la mémoire de l'interface de simulation (152) stocke en outre des paramètres de commande (155) actuellement valables pour la simulation de l'embarcation.

19. Système de simulation (100) selon la revendication 18, dans lequel les premières priorités et les deuxièmes priorités définissent chacune des autorisations d'écriture pour l'écriture de paramètres de commande (155) dans la mémoire de l'interface de simulation (152).

20. Système de simulation (100) selon la revendication 19, dans lequel les premières priorités spécifient chacune que le poste de commande (112) du premier environnement de simulation (110) dispose de droits d'accès en écriture pour écrire les paramètres de commande (155) définis au moyen des premiers éléments de commande physiques (114) et valables pendant le fonctionnement normal simulé de l'embarcation, tandis que les moyens techniques (132) du deuxième environnement de simulation (130) ne disposent d'aucun droit d'accès en écriture pour écrire les paramètres de commande (155) actuellement valables pour la simulation de l'embarcation,
les règles de priorisation secondaires spécifiant chacune que les moyens techniques (132) du deuxième environnement de simulation (130) disposent d'autorisations d'écriture pour écrire les paramètres de commande (155) définis au moyen des copies (134) des deuxièmes éléments de commande affectés aux règles de priorisation secondaires ( ) et valables dans le cadre de l'écart simulé par rapport au fonctionnement normal de l'embarcation (155) définis au moyen des copies (134) des seconds éléments de commande associés aux paramètres de priorisation secondaires et valables dans le cadre de l'écart simulé par rapport au fonctionnement normal de l'embarcation, tandis que le poste de commande (112) ne dispose d'aucun droit d'écriture pour enregistrer les paramètres de commande (155) définis au moyen des premiers éléments de commande physiques (114) associés aux réglages de priorisation secondaires en tant que paramètres de commande (155) actuellement valables pour la simulation de l'embarcation.

21. Système de simulation (100) selon la revendication 19, dans lequel à la fois le poste de commande (112) du premier environnement de simulation (110) de l' dispose de droits d'écriture pour enregistrer les paramètres de commande (155) définis au moyen des premiers éléments de commande physiques (114), et les moyens techniques (132) du deuxième environnement de simulation (130) disposent de droits d'écriture pour enregistrer les paramètres de commande (155) définis au moyen des copies (134) des deuxièmes éléments de commande,
les règles de priorité stipulant respectivement que les paramètres de commande (155) réglés au moyen des premiers éléments de commande physiques (114) et enregistrés par le centre de commande (112) sont interprétés comme les paramètres de commande (155) valides pendant le fonctionnement normal simulé de l'embarcation, tandis que les paramètres de commande (155) définis au moyen des copies (134) des seconds éléments de commande et écrits par les moyens techniques (132) du second environnement de simulation (130) ne sont pas pris en compte,
les règles de priorisation secondaires spécifiant chacune que les paramètres de commande (155) définis à l'aide des copies (134) des seconds éléments de commande associés aux règles de priorisation secondaires et enregistrés par les moyens techniques (132) du second environnement de simulation (130) sont lues en tant que paramètres de commande (155) valables pour l'écart simulé par rapport au fonctionnement normal de l'embarcation, tandis que les paramètres de commande (155) définis au moyen des premiers éléments de commande physiques (114) affectés aux deuxièmes hiérarchisations et enregistrés par le poste de commande (112) ne sont pas lus.

22. Système de simulation (100) selon l'une des revendications 16 à 18, dans lequel la première hiérarchisation définit que l'acquisition des paramètres de commande (155) définis au moyen des premiers éléments de commande physiques (114) est activée par le centre de commande (112) du premier environnement de simulation (110), tandis que la détection des paramètres de commande (155) définis au moyen des copies (134) des seconds éléments de commande est désactivée par les moyens techniques (132) du second environnement de simulation (130),
la deuxième hiérarchisation définissant quant à elle que la détection des paramètres de commande (155) réglés au moyen des copies (134) des seconds éléments de commande est activée par les moyens techniques (132) du deuxième environnement de simulation (130), tandis que la détection des paramètres de commande (155) réglés au moyen des premiers éléments de commande physiques (114) est désactivée par le centre de commande (112) du premier environnement de simulation (110).

23. Système de simulation (100) selon l'une des revendications 16 à 22, dans lequel l'interface de simulation (152) est fournie par un système informatique de simulation (150), qui comprend une mémoire (161) contenant des instructions de programme exécutables (162) d'un programme de simulation d'état destiné à simuler un état de l'embarcation et un modèle numérique (158) de l'embarcation , ainsi qu'un processeur (160), dans lequel l'exécution des instructions de programme (162) par le processeur (160) amène le système informatique de simulation (150) à simuler un état actuel de l'embarcation à l'aide du modèle numérique (158) de l'embarcation, des paramètres de contrôle (155) applicables à la simulation de l'embarcation et des paramètres d'avarie définis par le scénario d'avarie récupéré.

24. Système de simulation (100) selon l'une quelconque des revendications 16 à 23, dans lequel une transition entre le fonctionnement normal simulé de l'embarcation et l'écart simulé par rapport au fonctionnement normal de l'embarcation est effectuée automatiquement par l'interface de simulation (152) pendant l'exécution du programme de simulation d'état, si l'état simulé de l'embarcation comprend l'écart par rapport au fonctionnement normal.

25. Système de simulation (100) selon l'une quelconque des revendications 16 à 24, dans lequel l'écart simulé par rapport au fonctionnement normal du navire comprend une défaillance du premier groupe (117) de membres d'équipage (115).

26. Système de simulation (100) selon l'une des revendications précédentes, dans lequel le premier environnement de simulation (110) comprend un centre d'opérations physique du navire, le premier environnement de simulation (110) comprenant, par exemple, une passerelle physique du navire.

27. Système de simulation (100) selon l'une des revendications précédentes, dans lequel le navire militaire est l'un des navires suivants : un sous-marin, un porte-avions, un porte-hélicoptères, un croiseur, un destroyer, une frégate, une corvette, une péniche de débarquement, un poseur de mines, un dragueur de mines, un chasseur de mines, un patrouilleur, un hors-bord, un navire de reconnaissance.

28. Procédé d'exploitation d'un système de simulation (100) destiné à mener un entraînement au combat coopératif simultané pour une pluralité de membres d'équipage (115, 135) d'un navire militaire, dans lequel le système de simulation (100) comprend un premier environnement de simulation (110) avec un poste de commande physique (112) du navire pour l'entraînement d'un premier groupe (117) de membres d'équipage (115),
dans lequel le premier environnement de simulation (110) comprend un ou plusieurs premiers éléments de commande physiques (114) du navire, lesdits premiers éléments de commande physiques (114) étant chacun configurés pour ajuster un ou plusieurs paramètres de commande (155) relatifs au fonctionnement du navire,
dans lequel la console de commande (112) est configurée pour détecter les paramètres de commande (155) réglés au moyen des premiers éléments de commande physiques (114) et pour les transmettre à une interface de simulation (152) du système de simulation (100),
dans lequel le système de simulation (100) comprend en outre un deuxième environnement de simulation (130), spatialement distinct du premier environnement de simulation (110), destiné à la formation d'un deuxième groupe (137) de membres d'équipage (135), dans lequel le deuxième environnement de simulation (130) comprend des moyens techniques (132) configurés pour fournir une simulation visuelle comprenant une ou plusieurs copies (134), au moins partiellement virtuelles, d'un ou plusieurs deuxièmes éléments de commande physiques destinés à ajuster les paramètres de commande (155),
les moyens techniques (132) étant en outre configurés pour détecter les paramètres de commande (155) réglés au moyen des copies (134) et pour les transmettre à l'interface de simulation (152) du système de simulation (100),
dans lequel l'interface de simulation (152) du système de simulation (100) comprend une mémoire, **caractérisé en ce qu'**une première base de données (54) est stockée dans la mémoire, contenant une pluralité d'enregistrements de données relatifs à des paramètres d'impact pour une pluralité de scénarios d'impact différents sur l'embarcation et à des scénarios de dommages associés à chacun des scénarios d'impact sur l'embarcation, dans lequel les scénarios de dommages définissent chacun des paramètres de dommages (56) sur l'embarcation, dans lequel les scénarios de dommages pour les scénarios d'impact sont précalculés pour l'embarcation à l'aide d'un modèle de dommages (74),
dans lequel le procédé comprend :
• la réception d'au moins un ensemble de paramètres d'impact (62) pour au moins un impact sur l'embarcation, provenant d'un système de simulation de combat (60) via l'interface de simulation (152) au cours d'un entraînement au combat,
• la comparaison des paramètres d'impact reçus (62) avec les paramètres d'impact (55) des enregistrements de données stockés dans la première base de données (54),
• déterminer, parmi la pluralité d'enregistrements de la première base de données (54), un enregistrement de paramètres d'impact dont les paramètres d'impact présentent les écarts les plus faibles par rapport aux paramètres d'impact reçus (62),
• extraire de la première base de données (54) le scénario de dommages associé à l'enregistrement de données identifié,
• commander au moins la simulation visuelle fournie par les moyens techniques (132) du deuxième environnement de simulation (130) afin de reproduire le scénario de dommages récupéré.

29. Procédé selon la revendication 28, dans lequel une deuxième base de données (154) contenant les définitions du ou des premiers éléments de commande (114) et de la ou des copies (134) du ou des deuxièmes éléments de commande est en outre stockée dans la mémoire de l'interface de simulation (152), les définitions des premiers éléments de commande définis (114) et des copies (134) des seconds éléments de commande spécifient chacune une hiérarchisation initiale pour le fonctionnement normal simulé de l'embarcation, dans laquelle les réglages des paramètres de commande (155) conformément aux premiers éléments de commande physiques (114) ont la priorité sur les réglages correspondant aux copies (134) des seconds éléments de commande en tant que réglages exclusivement valides des paramètres de commande (155) pour la simulation de l'embarcation,
le procédé comprenant en outre :
en réponse à un écart simulé par rapport au fonctionnement normal de l'embarcation, le passage d'une ou plusieurs des premières hiérarchisations à une ou plusieurs deuxièmes hiérarchisations, dans lequel la ou les deuxièmes hiérarchisations définissent, pour l'écart par rapport au fonctionnement normal, des réglages pour une ou plusieurs é s des paramètres de commande (155) conformément à une ou plusieurs copies (134) des seconds éléments de commande associés aux deuxièmes hiérarchisations, en lieu et place des réglages conformes à un ou plusieurs premiers éléments de commande physiques (114) associés aux deuxièmes priorités, en tant que réglages des paramètres de commande correspondants (155) qui sont exclusivement valables pour la simulation de l'embarcation.
